# EUROPEAN PATENT APPLICATION

(11) **EP 4 280 151 A1**
(43) Date of publication of application: **22.11.2023**
(21) Application number: 21919504.7
(22) Date of filing: 28.09.2021
(51) Int. Cl.: G06Q 50/18, G06F 16/28

(54) **DATA PROVISION DEVICE, SYSTEM, PROGRAM, METHOD, DATA ANALYSIS DEVICE, DATA MANAGEMENT SYSTEM, METHOD, AND RECORDING MEDIUM**

(30) Priority: 15.01.2021 JP 2021004599
(71) Applicant: IPDefine, Ltd., Tokyo 151-0065 (JP)
(72) Inventor: OKAMOTO Mitsuhiro, Tokyo 151-0065 (JP)
(74) Representative: Patpol Kancelaria Patentowa Sp. z o.o.
(86) International application number: PCT/JP2021/035544
(87) International publication number: WO 2022/153613

(57) **Abstract**

A data management system is constructed based on information related to multiple rights and comprises a data providing device that extracts and provides validity data corresponding to an external request from a database that manages validity data for each of the rights. The validity data includes a rating score indicating the relative validity among the plurality of rights. The data management system comprises a data analysis device for evaluating the validity of each of the plurality of rights. The data analysis device is capable of building the database described above that manages the rating scores for each of the plurality of rights. The data providing system comprises, for example, a data providing device and one or more information terminals.

## Description

### TECHNICAL FIELD

The present disclosure relates to a data providing device, a data providing system, a data providing program, a data providing method, a data analysis device, a data management system, a data management method, and a data recording medium.

### BACKGROUND

A patent is granted as a result of a manual search of prior art and evaluation of patentability during examination. Therefore, it is not uncommon to find omissions in the search for patentability, and patents are often registered with unclear validity. Other industrial property rights, such as design rights and trademark rights, are also investigated manually and, like patents, are subject to the same uncertainty of validity.

Under such circumstances, the owner of an industrial property right (an assignee) may be interested in determining the objective validity of the right before filing a lawsuit against another company or when deciding whether the right should be maintained. On the other hand, third parties want to know the validity of the right as well as the existence of the right that may be an obstacle to the implementation or use. In addition, third parties need to search for invalid materials when they receive a warning letter from others.

By the way, the validity of a right can be assessed through appraisal by a patent attorney. However, appraisals are performed manually and require a lot of time and effort in constructing search formulas and examining prior literature, resulting in high costs. Therefore, systems that automatically derive the validity of rights have been developed (for example, Patent Document 1). The patent validity evaluation system in Patent Document 1 matches a specified patent with known technologies, and extracts known technologies that have elements that match the elements in the patent.

Patent Document 1: JP-A-2005-332330

### SUMMARY

### PROBLEMS TO BE SOLVED

However, the patent validity evaluation device in Patent Document 1 initiates a process for evaluating the validity of the designated patent when it receives the designation of the patent by the user. Therefore, it requires a lot of time to provide information on the validity of industrial property rights to the user, because it is necessary to utilize resources such as processing units such as CPUs and memory every step of the way. Thus, there is a need for a system that suppresses the unnecessary use of processing units and memory and provides information on the validity of industrial property rights in a prompt manner.

The purpose of the present disclosure is to solve the problems described above. The disclosure is related to a data providing device, a data providing system, a data providing program, a data providing method, a data analysis device, a data management system, a data management method, and a data recording medium, that suppresses the unnecessary use of processing units and memory and provides information on the validity of industrial property rights in a prompt manner.

### EMBODIMENTS

One embodiment of the present invention is a data providing device including a data providing unit which is configured to extract and provide a validity data corresponding to an external request from a database that is constructed based on information related to a plurality of industrial property rights and that manages the validity data pertaining to the validity of each of the plurality of industrial property rights. The validity data includes a rating score indicating the relative validity among the plurality of industrial property rights.

One embodiment of the present invention is a data management system including a data analysis device that uses information related to multiple industrial property rights to estimate the validity of each of the multiple industrial property rights, and the data providing device described above. The data analysis device includes a translation processing means for generating translation data by applying translation processing to unify the core data contained in each of the plural industrial property rights-related information collected from the outside into a common language, and a learning processing means for generating an estimation model for obtaining the validity data by machine learning using the learning data based on the translation data.

One embodiment of the present invention is a data analysis device including a matching processing means, which is configured to convert one or more claim elements of a right claim for a patent or a utility model to be analyzed into a first vector, which is a meaning vector, convert a part or all prior-date information related to an invention or an idea published before the filing date of the right claim, into a second vector, which is a meaning vector, for each of the divided data, and determine a total degree of agreement, which is the degree of agreement between the claim elements of the right claims and each of the prior-date information, by intercomparing the first vectors and second vectors; and a rating processing means, which is configured determine an individual score, an indicator of the validity of the claim, based on the total agreement obtained by the agreement processing means. The rating processing means determines an overall score that indicates the relative validity of the rights among the plurality of target rights, using the individual scores for all target rights.

One embodiment of the present invention is a data management system including the data analysis device described above and a data providing device which is configured to extract and provide at least one of individual scores or overall scores corresponding to an external request from a database that manages the individual scores and the overall scores for each of the plurality of the target rights obtained by the rating processing means.

One embodiment of the present invention is a data providing system including the data providing device described above, and an information terminal that can communicate with the data providing device. The data providing unit provide the screen information including the validity data to the information terminal, and the information terminal includes a display unit that shows the information on the screen provided by the data providing device.

One embodiment of the present invention is a data providing system including the data management system described above, and an information terminal that can communicate with the data providing device. The data providing unit provide the screen information including the validity data to the information terminal, and the information terminal includes a display unit that shows the information on the screen provided by the data providing device.

One embodiment of the present invention is a data providing program, which is configured to make a computer in a data provider function as an information processing means to extract and provide the validity data from a database that is built based on information related to multiple industrial property rights and that manages validity data, including a rating score that indicates the relative validity among each industrial property right for each of the multiple industrial property rights corresponding to external requests.

One embodiment of the present invention is a computer-readable storage media on which a data providing program is recorded. The data providing program is configured to make a computer in a data provider function as translation processing means for generating translation data by applying translation processing to unify the core data contained in each of the plural industrial property rights-related information collected from the outside into a common language and learning process means to generate an estimation model for obtaining validity data including a rating score indicating the relative validity among each industrial property right for each of the plurality of industrial property rights by machine learning using the learning data based on the translation data.

One embodiment of the present invention is a data providing method including steps of accepting one or more designations of industrial property rights from an information terminal via a network, extracting a validity data corresponding to external requests from a database that manages validity data pertaining to the validity of each of the plurality of industrial property rights, and providing the extracted validity data to the information terminal.

One embodiment of the present invention is a data management method including steps of generating translation data by applying a translation process to unify the core data contained in each of the plural industrial property rights-related information collected from the outside into a common language, and generating an estimation model for obtaining validity data including a rating score indicating the relative validity among each industrial property right for each of the plurality of industrial property rights by machine learning using the training data based on the generated translation data.

### EFFECTS OF THE INVENTION

According to the present disclosure, there is no need to perform any processing to evaluate the validity of the right when a request is received, since the validity data corresponding to an external request is extracted from a pre-built database. As a result, unnecessary use of the processing unit and memory can be controlled, and information on the validity of industrial property rights can be provided promptly.
Figure 1 is a block diagram illustrating a data providing system and its peripheral configuration according to the Embodiment 1 of the present invention.
Figure 2 is a block diagram illustrating the functional configuration of the data management system of Figure 1.
Figure 3 is a block diagram illustrating the functional configuration of the information terminal of Figure 1.
Figure 4 is a schematic illustration of the initial screen displayed on the information terminal in Figure 1.
Figure 5 is a schematic illustration of the user screen displayed on the information terminal shown in Figure 1.
Figure 6 is a schematic illustration of the basic screen displayed on the information terminal shown in Figure 1.
Figure 7 is a schematic illustration of the detailed screen displayed on the information terminal shown in Figure 1.
Figure 8 is a schematic illustration of the purchase screen displayed on the information terminal in Figure 1.
Figure 9 is a schematic illustration of the list screen displayed on the information terminal in Figure 1.
Figure 10 is a schematic illustration of another example of a basic screen displayed on the information terminal of Figure 1.
Figure 11 is a schematic illustration of the rights holder screen displayed on the information terminal of Figure 1.
Figure 12 is a schematic example of a rights screen displayed on the information terminal of Figure 1.
Figure 13 is a schematic illustration of another example of a rights screen displayed on the information terminal of Figure 1.
Figure 14 is a schematic illustration of another example of a user screen displayed on the information terminal of Figure 1.
Figure 15 is a schematic illustration of an ESG general screen displayed on the information terminal of Figure 1.
Figure 16 is a schematic illustration of an ESG individual screen displayed on the information terminal of Figure 1.
Figure 17 is a schematic illustration of the inventor screen displayed on the information terminal shown in Figure 1.
Figure 18 is a sequence chart illustrating the operation when a user purchases a product related to industrial property rights among the data provision methods by the data provision system of Figure 1.
Figure 19 is a sequence chart illustrating the operation when a user browses a product that has already been purchased, among the data provision methods by the data provision system of Figure 1.
Figure 20 is a block diagram illustrating the functional configuration of the data analysis device according to the Variation 1 of the Embodiment 1 of the present invention.
Figure 21 is an illustration of an outline of a database for classification generated by the collection and processing means of Figure 20.
Figure 22 is a table illustrating various data corresponding to claim elements of a claim.
Figure 23 is a table illustrating the total degree of agreement between each claim element and a plurality of invention-related information as determined by the evaluation processing means of Figure 20.
Figure 24 is a table illustrating the total degree of agreement between a claim element of a certain claim and a plurality of invention-related information as determined by the evaluation processing method of Figure 20.
Figure 25 is an illustration of each total degree of agreement in Figure 24, as organized according to whether the agreement flag is raised or not.
Figure 26 is a table illustrating an example of a claim situation in which the evaluation processing method in Figure 20 assigns an individual score corresponding to "no novelty".
Figure 27 shows an example of a situation in which the evaluation processing method in Figure 20 assigns an individual score corresponding to "no inventive step".
Figure 28 is a flowchart illustrating the flow of the operation of generating a database for classification in the data management method according to the Variation 1 of the Embodiment 1 of the present invention.
Figure 29 is a flowchart illustrating the flow of the operation of assigning classification data to information in non-patent documents in the data management method according to the Variation 1 of the Embodiment 1 of the present invention.
Figure. 30 is a flowchart illustrating the flow of operations related to the calculation of the total degree of agreement between a certain claim element and each invention-related information in the data management method according to the Variation 1 of the Embodiment 1 of the present invention.
Figure 31 is a flowchart illustrating the flow of operations relating to the calculation of the total score of a target right in the data management method according to the Variation 1 of the Embodiment 1 of the present invention.
Figure 32 is a flowchart illustrating the flow of operations for determining an individual score of one claim by the evaluation processing means of Figure 20 in the data management method according to the Variation 1 of the Embodiment 1 of the present invention.

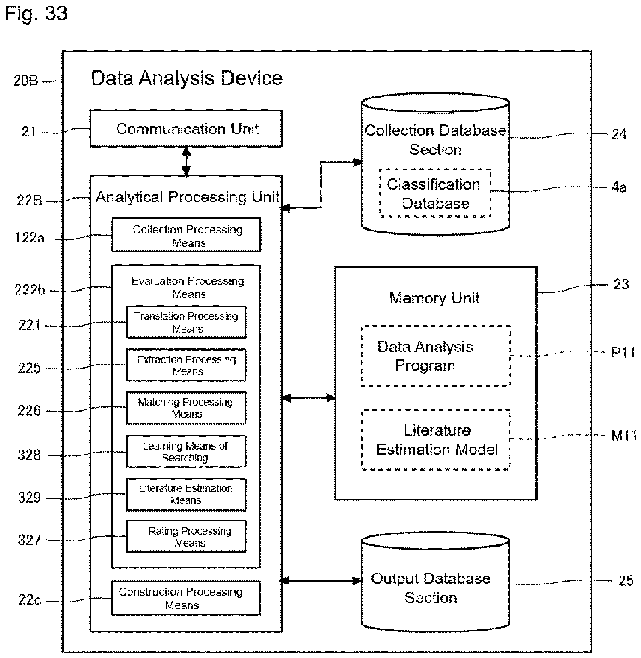

Figure 33 is a block diagram illustrating the functional configuration of the data analysis device according to the Variation 2 of the Embodiment 1 of the present invention.

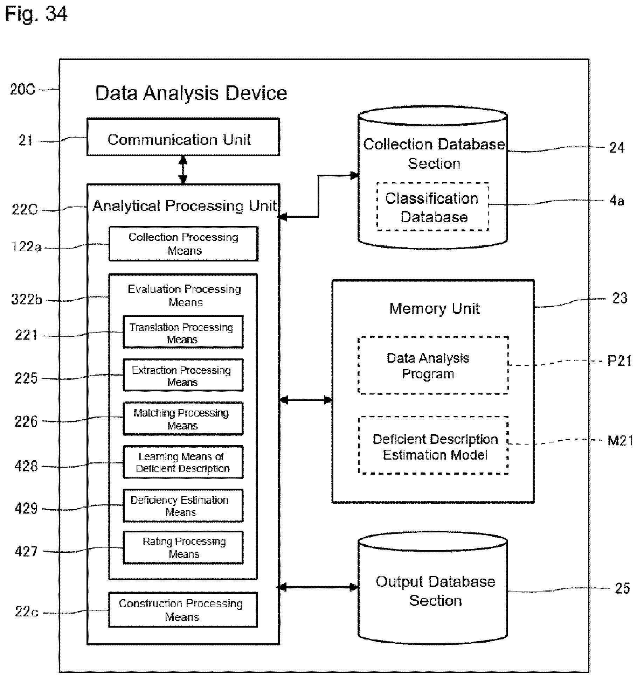

Figure 34 is a block diagram illustrating the functional configuration of a data analysis device according to the Variation 3 of the Embodiment 1 of the present invention.
Figure 35 is an illustration of a cost-cutting table stored in a data provider or the like according to the Variation 4 of the Embodiment 1 of the present invention.
Figure 36 is a block diagram illustrating an example of a functional configuration of a data management device in a data providing system according to the Embodiment 2 of the present invention.
Figure 37 is a flowchart illustrating the operation when a user purchases a product related to an industrial property right in the data providing method according to the Embodiment 2 of the present invention.
Figure 38 is a sequence chart illustrating the operation of the data providing method according to the Embodiment 2 of the present invention, in which, in response to a request for resale of a product in a state where the product cannot be purchased, an offer is made to the information terminal of the seller of the product to mediate the resale.
Figure 39 is a sequence chart illustrating the operation of the data providing method according to the Embodiment 2 of the present invention, in which the data providing device relays the resale of the product in response to a request from an information terminal of the destination of the product.
Figure 40 is an illustration schematically illustrating a detail screen displayed on an information terminal in a data provision system according to the Embodiment 2 of the present invention.

### DETAILED DESCRIPTION

### Embodiment 1

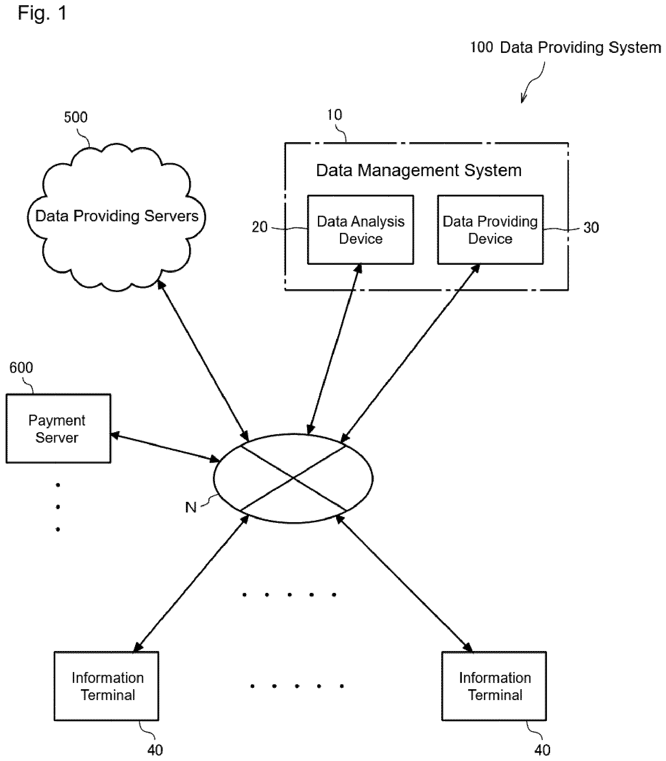

Referring Figure 1, an example of the configuration for the data provision system and its peripheral environment in an Embodiment 1 is described. As shown in Figure 1, the data providing system 100 is configured with a data management system 10 and one or more information terminals 40. The data management system 10 collects information related to the plurality of industrial property rights from the data providing servers 500 and performs calculation processing to determine the validity, etc. of each of the plurality of industrial property rights, thereby obtaining and managing various significant information.

Here, industrial property rights refer to patent rights, utility model rights, design rights, and trademark rights, which are among the intellectual property rights. In addition to the content of the right, the assignee, the inventor or the creator, etc., information on the application process and information indicating the content of the examination, etc. are linked to the industrial property right. The information indicating the contents of examination, etc. includes, for example, search reports by search companies and information indicating the search process and examination, etc. by examiners, etc. In other words, the information related to industrial property rights is the above information associated with industrial property rights. In the following, information related to industrial property rights is also referred to as "rights-related information", and industrial property rights are simply referred to as "rights".

Here, industrial property rights refer to patent rights, utility model rights, design rights, and trademark rights, which are among the intellectual property rights. In addition to the content of the right, the assignee, the inventor or the creator, etc., information on the application process and information indicating the content of the examination, etc. are linked to the industrial property right. The information indicating the contents of examination, etc. includes, for example, a search report by a search company and information indicating the search process and examination, etc. by an examiner, etc. In the Embodiment 1, information related to industrial property rights includes, in addition to the above information associated with industrial property rights, various technical papers and technical reports, social networking services (SNS), and other information. In the Embodiment 1, information related to industrial property rights includes not only the above-described information associated with industrial property rights but also various technical papers, technical bulletins, social networking services (SNS), and other information that can be obtained through a network N and that is related to industrial property rights. In the following, information related to industrial property rights is also referred to as "rights-related information," and industrial property rights are also referred to simply as "rights."

The data management system 10 has a data analysis device 20, a data providing device 30, and so on. The data analysis device 20, the data providing device 30, the information terminal 40, the information providing server group 5 The data analysis device 20, the data providing device 30, the information terminal 40, the information provision server group 5, and the payment server 600 are connected via a network N such as the Internet.

The data providing servers 500 are servers around the world that provide rights-related information through an API (Application Programming Interface), for example. In each server comprising the data providing servers 500, rights-related information, which is a set of data, is associated with one right. A payment server 600 is a server operated by a credit card or electronic money settlement company, etc. A plurality of payment servers 600 are usually connected to network N. The network N is usually connected to multiple payment servers 600. The data providing device 30 communicates with the payment server 600 corresponding to the payment method specified by the information terminal 40. The data providing device 30 communicates with the payment server 600 corresponding to the payment method specified by the information terminal 40 and executes the payment process for the user of the information terminal 40.

The data analyzer 20 analyzes the validity of each right based on multiple rights-related information collected from the data providing servers 500, and stores the results of the analysis and the information on which the analysis results were derived, along with the rights involved in the analysis. The data analysis device 20 is composed of a cloud server based on cloud computing, a physical server, or a system combining these two.

The data providing device 30 extracts and provides information such as validity data corresponding to an external request from the database 5a, which is constructed based on multiple rights-related information and manages validity data about the validity of each of the rights. In the Embodiment 1, "provision" of information means granting access to some or all of the information in the database 5a in the data providing database 35.

The data providing device 30 provides public information to the information terminal 40 that requests access and also provides some or all of the private information to the information terminal 40 of the user who has paid the specified fee. Here, public information is information that is open to the general public, regardless of whether or not a fee is paid. Non-public information is information that is provided to users who have completed the purchase process in company units, term units, or rights units, or who have completed procedures to remove public disclosure restrictions such as upgrading. The data providing device 30 is composed of a cloud server based on cloud computing, a physical server, or a system combining these two.

The data providing system 100 may be configured to allow the user to download the purchased information to the information terminal 40. In that case, the data providing device 30 may use a hash function to add a timestamp. In addition, information purchased by a user in the data providing system 100 may be MICROSOFT EXCEL (registered trademark) XLS files, and CSV (Comma-Separated Values) files, text files, or other data files, and may be printed out on paper media.

The information terminal 40 communicates with the data providing device 30 in response to the user's request and obtains and provides information such as validity data to the user. The information terminal 40 accesses and logs in to the Web site provided by the data providing device 30 in response to the user's operation. The information terminal 40, in response to the user's operation, accesses and logs in to the Web site provided by the data providing device 30, displays various information in the Web site and performs processing related to transactions, etc. of information associated with rights.

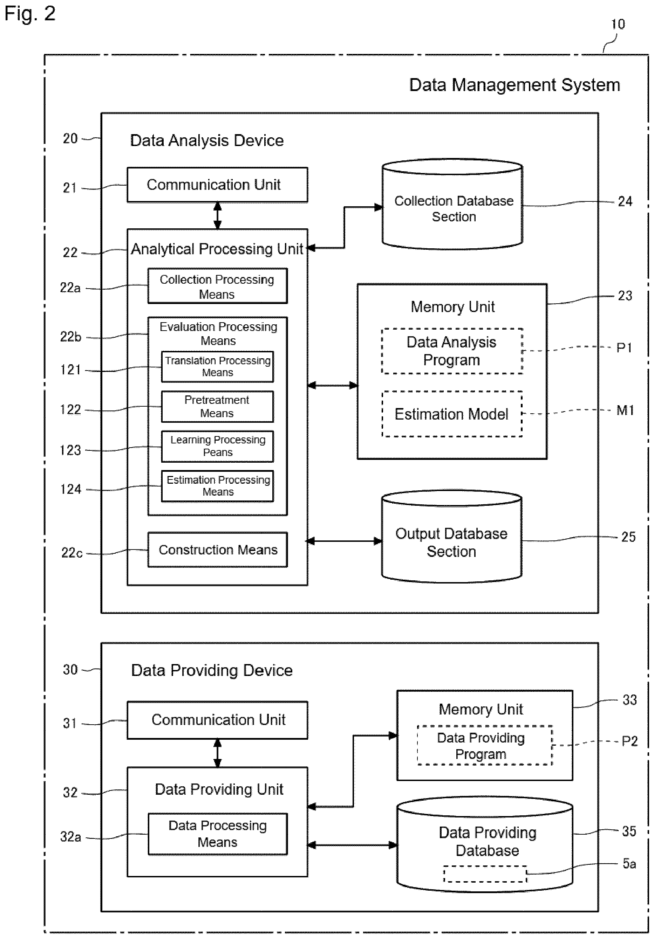

Next, referring to Figure 2, an example of the functional configuration of the data management system is described. As shown in Figure 2, the data analysis device 20 has a communication unit 21, an analytical processing unit 22, a memory unit 23, a collection database section 24, and an output database section 25. The communication unit 21 is an interface for the analytical processing unit 22 to perform wired or wireless communication with devices or the like connected to the network N.

The memory unit 23 stores the operating program of the analytical processing unit 22, such as the data analysis program P1, as well as various data related to the generation, update, and management of validity data, etc. It also stores various data related to the generation, updating, and management of validity data and other data. In addition, memory unit 23 stores an estimation model M1 generated by machine learning using the learning data. The memory unit 23 stores RAM (Random Access Memory) and ROM (Read Only Memory), PROM (Programmable ROM) such as flash memory (Programmable ROM), SSD (Solid State Drive), or HDD (Hard Disk Drive), etc. can be used.

The collection database section 24 is a storage device that stores rights-related information and other information collected by the analytical processing unit 22. The collection database section 24 is composed of RAM and ROM, PROM such as flash memory, SSD, or HDD. The output database section 25 is a storage device that stores a database in which validity data and other information are organized for each right. The output database section 25 is configured with PROM, SSD, HDD, etc. such as RAM, ROM, flash memory, etc.

The analytical processing unit 22 generates the estimation model M1 using rights-related information, a data set that is collected from outside. Here, the rights-related information includes core data, which is necessary for generating the estimation model M1, and auxiliary data, which is supplementary or incidental data. When the industrial property right is a patent right, the core data includes information on claims (claims), notices of reasons for refusal, search reports from search firms, etc. The analytical processing unit 22 generates validity data and other information using the core data and the estimation model M1 and builds a database in the output database section 25 by organizing the validity data and other information for each right. The analytical processing unit 22 uses the core data included in the rights-related information as the data to be learned during the learning phase and uses the core data included in the rights-related information as the data to be analyzed during the estimation phase.

More specifically, the analytical processing unit 22 has collection processing means 22a, evaluation processing means 22b, and construction means 22c. The collection processing means 22a periodically collects rights-related information through APIs and the like. The collection processing means 22a collects data from patent documents, design gazettes, trademark gazettes, and non-patent documents around the world. The non-patent literature includes various technical papers and journals, technical standards, websites of companies, research institutes, universities, etc., articles and catalogs on the Web, blogs, SNS, etc. Blogs, social networking services, and YouTube (registered trademark), etc., and are not limited to those cited in the notice of reasons for rejection, etc. The data collected by the collection processing means 22a includes a plurality of rights-related information. The collection processing means 22a has a function to normalize some or all of the various data including the plurality of rights-related information collected, by organizing the separation of information and maintaining the file format.

The evaluation processing means 22b evaluates matters related to the validity of industrial property rights. The evaluation processing means 22b may use data other than rights-related information collected by the collection processing means 22a as data to be learned or analyzed. The data may be used as target data. The evaluation processing means 22b has a translation processing means 121, a pretreatment means 122, a learning processing means 123, and an estimation processing means 124. The translation processing means 121 unifies the data to be learned or analyzed into a predetermined common language. In the following, when learning target data and analysis target data are used without distinction, they are collectively referred to as "target data. In other words, the translation processing means 121 extracts the target data for each rights-related information, and if the extracted target data consists of a language other than the common language, it translates the target data into the common language to generate the translation data. Even if the target data contains a common language, if a part of the target data contains a language other than the common language, the translation processing means 121 applies translation processing to the target data to generate the translation data. On the other hand, when the entirety of the target data extracted from the rights-related information is in the common language, the translation processing means 121 does not apply any processing to the target data. Hereafter, the target data standardized into a common language is referred to as "training translation data," and the target data standardized into a common language is referred to as "analysis translation data," and these are collectively referred to as "translation data. In the Embodiment 1, English is adopted as the common language, but other languages may be adopted as the common language.

The pretreatment means 122 generates training data for training the estimation model M1 by applying analytical processing to the training translation data. The pretreatment means 122 applies analytical processing to analytical translation data to generate data for analysis to be used as input for estimation model M1 to estimate rights ratings, etc.

More specifically, the pretreatment means 122 has a text analysis function that performs natural language processing such as morphological analysis on the translation data. Morphological analysis is the process of dividing (or splitting) translation data written in natural language into morphemes, which are the smallest linguistic units, and identifying the respective parts of speech, changes, etc. of each morpheme. In other words, the pretreatment means 122 generates data for learning and analysis by converting each morpheme divided from the translation data into a distributed expression by attaching part-of-speech information such as verbs, nouns, and adjectives to each of the morphemes, and then generates the training data and analysis data are stored in the memory unit 23. When applying the transformation process to each morpheme, the pretreatment means 122 may extract key information that is the key to machine learning, and may further perform weighting or other processing on the extracted key information.

In particular, when the industrial property right is a patent right, the pretreatment means 122 decomposes the translation data about the claim to generate data for learning and analysis, and learning processing means 123 may use the training data to generate and update the estimation model M1. This makes the estimation model M1 a learned model that accurately extracts technical information that includes wording that matches or approximates each decomposed wording. The learning processing means 123 is used to extract the wording subdivided by decomposition from the translation data about the claim and the estimation model M1 from the translation data extracted by the estimation processing means 124. The information combined with the technical information may be used as teacher data to generate and update the estimation model M1.

The pretreatment means 122 may generate phrase patterns that combine sentences and link technical information to each generated phrase pattern. Then, the learning processing means 123 may perform the process of generating and updating the estimation model M1 by using the information combining the phrase pattern and the technical information as the teacher data. The estimation model M1 may then be generated and updated. In this way, the estimation model M1 becomes a learned model that can accurately perform processes such as extraction of phrase patterns related to technical information or extraction of technical information related to phrase patterns.

The pretreatment means 122 may generate data for training or analysis by a relatively simple analysis process such as deleting unnecessary data from the translation data. Unnecessary data are, for example, numeric values, line feeds, or symbols, such as characters of low importance for the training of the estimation model M1 and the calculations using the model.

By the way, when the industrial property right is a design right or a trademark right, image data is often included in the core data. Therefore, the pretreatment means 122 may have an image analysis function that performs analysis processing on the image data included in the core data to generate data for learning or data for analysis. In this case, the pretreatment means 122 applies image analysis processing to, for example, information of drawings of designs, information of logos of trademarks, and information of characters of trademarks as image data. However, even in the case of a patent right and a utility model right, the similarity of the drawings can be used as a material for determining the validity of the right. In other words, the pretreatment means 122 may have both text analysis and image analysis functions or any one of the text analysis and image analysis functions.

The learning processing means 123 generates the estimation model M1 by machine learning based on the learning data. The estimation model M1 is a learned model for outputting validity data concerning the validity of rights. The validity data in the Embodiment 1 includes a rating score that indicates a rating that serves as an indicator of the validity of the right, and information that is used as the basis for generating the rating score. The rating score is a numerical or encoded value of the validity of the right and is information that serves as an indicator of the validity of the right. The rating score of the Embodiment 1 indicates the relative validity among each industrial property right for each of the plurality of industrial property rights. The estimation model M1 is configured to output, as the rating score, at least one of an individual score, which is an indicator of the validity of the claims in the claims, and a total score, which is an indicator of the validity of the industrial property rights.

The validity data may include the annual fee cost information that indicates the cost-reasonability for maintaining the rights. When the industrial property right is a patent right, the validity data includes technical information related to the validity of the patent right. Hereafter, technical information related to the validity of the patent right is also referred to simply as "technical information. Technical information includes the technical information on which the rating score is derived and the invalidity data of the patent right. When the industrial property right is a patent right or a design right, the validity data is the index value of the patent right, utility model right, or design right evaluated from an ESG perspective ESG score may be included.

When the industrial property right is a trademark right, the validity data includes prior trademark data, which is information on prior trademarks whose similarity to the trademark about the trademark right is greater than a predetermined threshold. The prior trademark includes not only the prior registered trademark but also the prior applied trademark. When the industrial property right is a design right, the validity data includes data on known designs, which is information on known designs whose similarity to the design about the design right exceeds a predetermined threshold.

The update process of the estimation model M1 by the learning processing means 123 is briefly described here. That is, the collection processing means 22a collects rights-related information from countries around the world from the data providing servers 500 successively or at a predetermined timing, and stores the collected rights-related information in the memory unit 23 or the collection database section 24. The translation processing means 121 applies translation processing to the core data of rights-related information added to the memory unit 23, etc. to generate translation data, and stores the generated translation data in the memory unit 23, etc. at a sequential or predetermined timing. The pretreatment means 122 applies the above analysis processing to the translation data sequentially or at a predetermined timing to generate data for learning, and stores the generated data for analysis in the memory unit 23, etc. Then, at the set timing, the learning processing means 123 executes the updating process of the estimation model M1 by tuning the parameters, etc. of the estimation model M1 appropriately using the newly accumulated learning data in the memory unit 23, etc. The learning processing means 123 may execute the updating process of the estimation model M1 at each arbitrary updating period, such as every day or every week, in cooperation with each of the above means.

In the Embodiment 1, the learning processing means 123 is designed to generate the estimation model M1 by supervised learning using a DNN (Deep Neural Network). The learning processing means 123 may generate the estimation model M1 by unsupervised learning or semi-supervised learning. The learning processing means 123 may generate the estimation model M1 by machine learning using GBDT (Gradient Boosting Decision Tree). The learning processing means 123 may generate the estimation model M1 by machine learning using a character-level CNN. Additionally, the learning processing means 123 may generate the estimation model M1 by regression methods such as linear regression, logistic regression, or decision trees. In addition, the learning processing means 123 may generate the estimation model M1 by a classification technique such as random forests or support vector machines. More so, the learning processing means 123 may generate the estimation model M1 by a method that combines the multiple machine learning methods described above.

The estimation processing means 124 uses the data for analysis as input to the estimation model M1 to obtain information such as validity data corresponding to the data for analysis. The estimation processing means 124 obtains validity data indicating the relative validity among each industrial property right for each of the plurality of industrial property rights. For example, the estimation processing means 124 obtains a relative rating score among each industrial property right for each of the plurality of industrial property rights. In this case, the estimation processing means 124 stores the information on the obtained validity data, etc. in the memory unit 23 or the output database section 25 in association with the rights-related information that is the original data of the data for analysis used as input for the estimation model M1.

In addition, the estimation processing means 124 also provides information other than the validity data, such as the total period, the first period, the second period, the third period, and the period by the user, as described below. Rating scores, ESG scores, annuity information, etc., can be obtained for each period, such as a specified period. The information required by the estimation processing means 124, etc., can be obtained in the output database section 25 and the data providing database 35. Some or all of the information stored is subject to sale or provision to users. Therefore, in the following, information stored in the output database section 25 and the data providing database 35, such as validity data, that is subject to sale or provision to the user is referred to as industrial property also referred to as products related to rights or simply "products." The price of a product is, for example, the unit price of information on one right multiplied by the number of rights. However, the unit price may be changed for each jurisdiction, or the unit price may be changed according to rating scores, etc.

The construction means 22c constructs the database in the output database section 25 based on the information stored in the memory unit 23 and the collection database section 24. The information stored in the memory unit 23 also includes information stored by collection processing means 22a, translation processing means 121, pretreatment means 122, learning processing means 123, and estimation processing means 124.

In the Embodiment 1, the database in the output database section 25 consists of an account table, a rights holder table (e.g., company table), a person table (e.g., inventor table), a rights table (e.g., patent table, design table, trademark table), a statistics table, and a finance table.

The account table includes email addresses, IDs, passwords, purchase history, activity logs, and personal information for each user. Personal information includes nationality, corporate name, address, name, contact information, and phone number. The assignees table includes basic information, related personal information, history information, score information such as rating score and ESG score, and statistical information for each assignee. Related person information includes information on assignees, inventors, agents, etc. Historical information includes information such as application dates, application dates for various procedures, registration dates, and dates of disputes. Statistical information includes the history of score information organized in chronological order.

The person table includes basic, historical, score, and statistical information for each person, such as inventors. The rights table includes basic information, historical information, score information, statistics, translation data, related information, etc. for all rights. The rights table includes at least one of the following: patent table for managing patent rights, utility model table for managing utility model rights, design table for managing design rights, and trademark table for managing trademark rights. Relevant information in the patent table includes information on similar technologies and invalidation materials.

The statistics table includes ranking information such as the number of rights acquired, rating score, and ESG score for each assignee, as well as rating score and ESG score for each right. The statistical table also includes intellectual property (IP) landscape information on the prospects for each right. The IP landscape information includes annuity information, which indicates the cost-reasonability of maintaining the rights. The financial table contains information related to settlements.

The analytical processing unit 22 can be composed of an arithmetic device such as a CPU (Central Processing Unit) or GPU (Graphics Processing Unit) and a data analysis program P1 that works with such an arithmetic device to realize the various functions described above. In other words, the data analysis program P1 is a program for causing the analytical processing unit 22 and memory unit 23 as a computer to function as collection processing means 22a, evaluation processing means 22b, and construction means 22c.

The data providing device 30 comprises the communication unit 31, the data providing unit 32, the memory unit 33, and the data providing database 35. The communication unit 31 is an interface for the data providing unit 32 to perform wired or wireless communication with devices and the like connected to the network N. The memory unit 33 contains the operating program of the data providing unit 32, such as the data providing program P2, as well as various data related to the provision of validity data, etc. The memory unit 23 has been configured with PROM, SSD, or HDD such as RAM, ROM, flash memory, etc.

The data providing unit 32 provides information in the data providing database 35 to the information terminal 40 in response to a request from the information terminal 40. The data providing unit 32 extracts validity data corresponding to the external request from the database 5a, which is constructed based on multiple rights-related information and contains validity data about the validity of each of the rights, and it is equipped with data processing means 32a to provide.

The data processing means 32a performs the synchronization process between the output database section 25 and the data providing section 35. In the Embodiment 1, database 5a in data providing section 35 consists of an account table, a rights holder table, a person table, a rights table, a statistics table, and a financial table, as well as a database in output database section 25. The data processing means 32a has the function of optimizing the database 5a.

When one or more rights are designated at the information terminal 40, the data processing means 32a provides the validity data corresponding to the rights to the information terminal 40. When an arrangement based on the rating score is designated together with multiple industrial property rights at the information terminal 40, the data processing means 32a organizes and provides validity data corresponding to each industrial property right according to the designated arrangement.

When the assignee and the term are specified at the information terminal 40, the data processing means 32a provides the validity data corresponding to the rights within the term of the assignee to the information terminal 40. When an arrangement based on the rating score is designated along with the assignee and the period at the information terminal 40, and when multiple industrial property rights are included within the period, the data processing means 32a organizes and provides validity data corresponding to each industrial property right within the period of the assignee by the designated arrangement.

When at least one of the rating scores is specified at the information terminal 40 together with the assignee and the period, the data processing means 32a provides validity data corresponding to the industrial property right to which the specified rating score is assigned within the period of the assignee. When at least one of the rating scores is designated together with the assignee at the information terminal 40, the data processing means 32a may selectively provide information on one or more industrial property rights to which the designated rating score is assigned, of the assignee.

When the assignee is designated at the information terminal 40, the data processing means 32a may provide the information terminal 40 with the first source data that organizes the rights of the assignee in the first period by the second period, which is shorter than the first period. When the second period is designated at the information terminal 40, the data processing means 32a may provide the information terminal 40 with the second source data that organizes the rights of the assignee in the second period by the third period, which is shorter than the second period. The data processing means 32a may then provide the validity data corresponding to the rights in the third period to the information terminal 40 when the third period is designated at the information terminal 40.

The first source data may include rating scores for the entire second period. The first source data may include at least one of the ESG scores and annuity information for the entire second period. The second source data may include a rating score for the entire third period. The second source data may include at least one of the ESG scores and annuity information for the entire third period.

When an inventor is designated at the information terminal 40, the data processing means 32a provides information on the inventor's evaluation index to the information terminal 40. The data processing means 32a has a function of sorting each technical information in the database 5a for validity data containing multiple technical information in order of the degree of association with the patent right about the validity data. For validity data including a plurality of prior trademark data, the data processing means 32a has a function to sort each prior trademark data in the database 5a in order of the degree of similarity with the trademark about the validity data. The data processing means 32a has a function of sorting each known design data in the database 5a in order of similarity to the design about the validity data for validity data including a plurality of known design data.

The data providing unit 32 can be composed of a computing device, such as a CPU or GPU, and a data providing program P2 that works with the computing device to realize the various functions described above. In other words, the data providing program P2 is a program for making the data providing unit 32 and memory unit 33 as a computer function as data processing means 32a.

The data providing database 35 is a storage device that stores a database 5a in which validity data and other information are organized for each right. In the Embodiment 1, the database 5a in the data providing database 35 is a database that has undergone optimization and other prescribed processing compared to the database in the output database section 25. The database 5a may be the same as the database in the output database section 25. The data providing database 35 is composed of PROM, SSD, or HDD such as RAM, ROM, and flash memory.

Here, the database update is explained. The collection processing means 22a collects rights-related information from the data providing servers 500 in each country of the world sequentially or at a predetermined timing, and stores the collected the rights-related information is stored in memory unit 23 or collection database section 24. Specifically, the collection processing means 22a stores the differences in the rights-related information of each country in the world, i.e., information that has increased since the previous collection and information that has changed since the previous collection, in the memory unit 23, etc. The collection processing means 22b stores the differences in the rights-related information of each country in the world in the memory unit 23. The evaluation processing means 22b additionally obtains or updates information such as validity data using the above-mentioned differences. The construction means 22c updates the database in the output database section 25 based on the information of validity data, etc. added or updated by the evaluation processing means 22b. Data processing means 32a updates database 5a based on the database in the output database section 25.

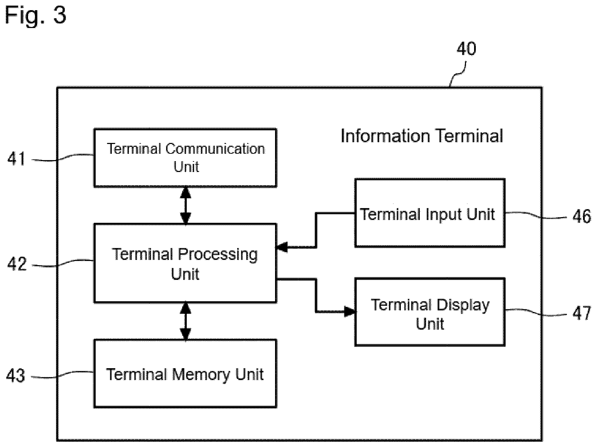

Next, an example of the functional configuration of information terminal 40 is described in Figure 3. As shown in Figure 3, the information terminal 40 has a terminal communication unit 41, a terminal processing unit 42, a terminal memory unit 43, a terminal input unit 46, and a terminal display unit 47. The terminal communication unit 41 is an interface for the terminal processing unit 42 to perform wired or wireless communication with devices and other equipment connected to the network N. The terminal memory unit 43 stores various information as well as the operating program of the terminal processing unit 42. The terminal memory unit 43 contains PROM, SSD, or HDD such as RAM, ROM, and flash memory.

When the terminal processing unit 42 receives a request to display or switch data via the terminal input unit 46, or when information is provided by the data providing device 30, it displays text, images, etc. on the terminal display unit 47 or switches some or all of the displayed information on the terminal display unit 47. The terminal processing unit 42 can be composed of an arithmetic device, such as a CPU or GPU, and an operation program that works with such an arithmetic device to realize the various functions described above.

The terminal input unit 46 comprises, for example, a keyboard and a pointing device such as a mouse or trackball. The terminal input unit 46 accepts input operations by the user and sends operation signals to the terminal processing unit 42 in response to the accepted input operations. The terminal display unit 47 comprises a liquid crystal display (LCD: Liquid Crystal Display), for example, and displays various information by instructions from the terminal processing unit 42. Instead of the terminal input unit 46 and the terminal display unit 47, the information terminal 40 may have a touch panel that includes a display panel that displays characters or images, etc., and a detection means that is laminated to the display panel to detect touch operations. The information terminal 40 may have both a touch panel and a mouse or keyboard or the like. The information terminal 40 may have a reporting section that reports sound or voice, a light-emitting section comprising a light-emitting element, and the like.

### [Purchase of a Product]

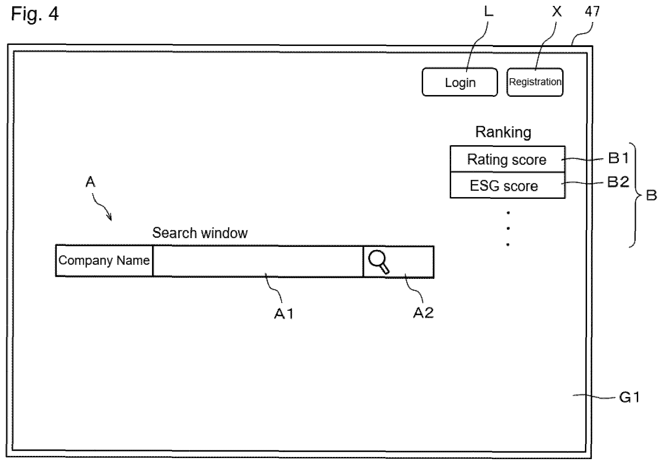

Referring to Figures 4 through 10, the configuration and display screens related to the purchase of products by the user are described below. The same symbols are used for configurations that are common to each figure, and redundant explanations are omitted. When a user accesses the website of the data providing device 30 via the information terminal 40, the terminal display unit 47 of the information terminal 40 displays an initial screen G1 as shown in Figure 4, for example.

The initial screen G1 illustrated in Figure 4 has a login button L, a registration button X, a search section A, and a ranking instruction section B. The registration button X is a virtual button that displays a registration screen (not shown) for registering user information in response to the user operation. The login button L is a virtual button to display a login screen (not shown) in response to the user operation. In other words, terminal processing unit 42 has the function of displaying the registration screen and login screen on terminal display unit 47 in cooperation with the data providing device 30 and accepting operations related to user registration and login.

The search section A has an input window A1 and a search button A2. The input window A1 is a field for inputting text, etc. via a keyboard or other means. In the input window A1, an organization name such as a company name or an individual name is entered. The search button A2 is a virtual button for requesting the data providing device 30 to search the information entered in the input window A1. Although Figure 4 shows an example of the search section 47a with "company name" displayed as a character indicating the input target, it is not limited to this, and the search section 47a may display "rights holder" or the like instead of "company name".

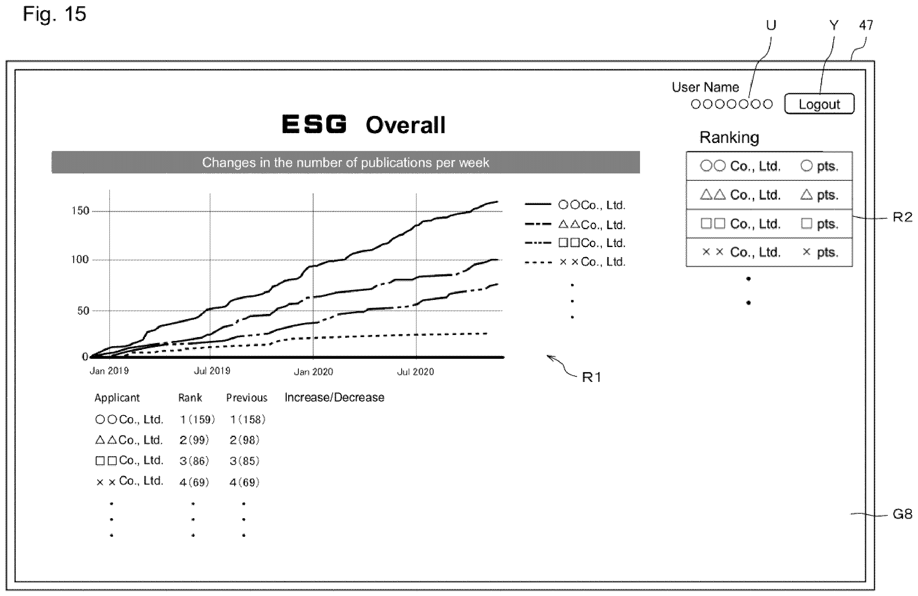

The ranking instruction section B consists of one or more virtual buttons for transitioning screens or displaying sub-windows in response to user operations. Figure 4 shows an example in which the ranking instruction section B includes a rating button B 1 for displaying a rating screen (not shown) showing a ranking of the assignee's rating scores, and an ESG button B2 for displaying an ESG screen (such as Figure 15 below) showing a ranking of the ESG scores (Environment, Social, Governance) of the assignee, etc. In other words, terminal processing unit 42 has the function of displaying the rating screen and the ESG screen on the terminal display unit 47 in cooperation with the data providing device 30.

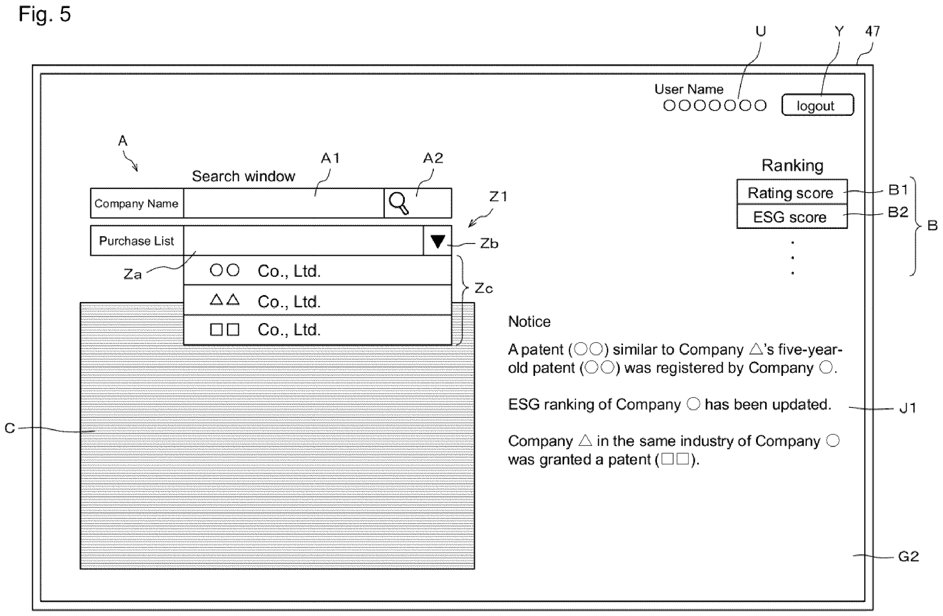

When the user completes the login process via the login screen, the terminal processing unit 42, in cooperation with the data providing device 30, displays the user screen G2 on the terminal display unit 47, for example, as shown in Figure 5. Like the initial screen G1, the user screen G2 has a search section A and a ranking instruction section B. User screen G2 also has a username display section U and a logout button Y. The username display section U displays information indicating the login user. The logout button Y is a virtual button for the user to log out.

The user screen G2 has a call section Z1 for recalling products already purchased. Figure 5 shows an example of a drop-down or combo box type UI (User Interface) for the call section Z1. That is, the call section Z1 in Figure 5 has a display section Za in which the product selected or entered by the user is displayed, an expansion button Zb to display a list of rights holders or rights, and a list section Zc to show the list of rights holders or rights. The call section Z1 may be in a form in which the list of rights is selectively displayed when the mouse cursor or the like is applied to the list section Zc. However, the mode of the call section Z1 is not limited to the example shown in Figure 5. For example, the call section Z1 may display a list of products that have already been purchased in the list section Zc. The call section Z1 may also have a function that allows the selection of the assignee and the selection of the right sequentially. Furthermore, the call section Z1 may simply display a list of rights holders, products, rights, etc., rather than a drop-down type or the like.

The user screen G2 illustrated in Figure 5 has a dashboard section C. The dashboard section C consists of information that visualizes various data, such as graphs and tables. The terminal processing unit 42 may display information in the dashboard section C that matches the preferences of the login user in cooperation with the data providing device 30. Additionally, the user screen G2 illustrated in Figure 5 has an announcement section J1 in which information generated based on the user's personal information, search history, and purchase history is displayed.

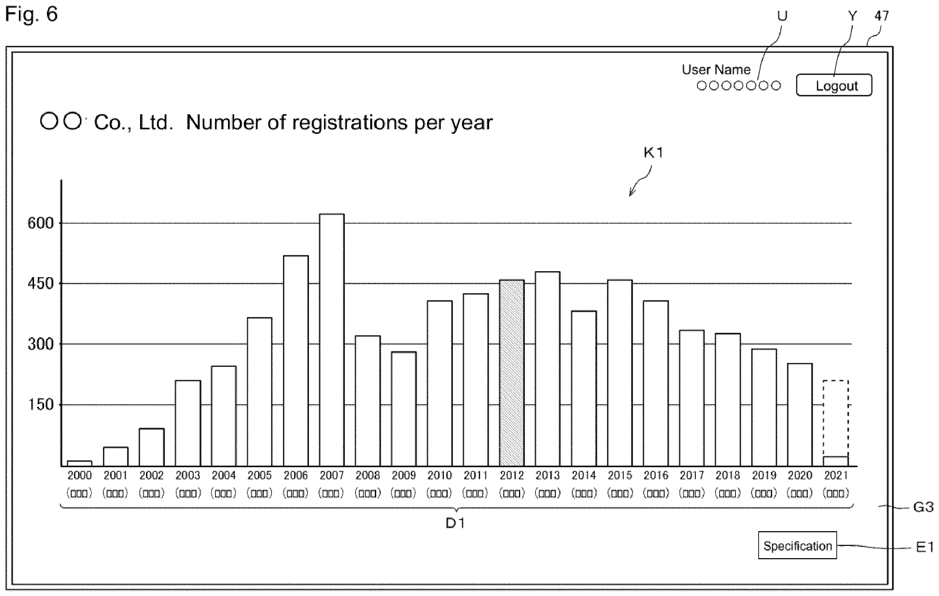

When the name of the assignee is entered in the input window A1 and the search button A2 is pressed in the initial screen G1 as in Figure 4 or the user screen G2 as in Figure 5, the terminal processing unit 42, in cooperation with the data providing device 30, displays the basic screen G3 as in Figure 6 on the terminal display unit 47, for example. The basic screen G3 consists of the first data K1, which organizes the number of registered rights of the assignee in the first period by the second period, which is shorter than the first period. The first data K1 is information that the terminal processing unit 42 displays based on the first original data.

The first data K1 illustrated in Figure 6 has a bar graph with the western calendar on the horizontal axis and the number of registrations on the vertical axis. Figure 6 shows an example where the period from the year when the assignee first acquired the rights to the present (the entire period) is used as the first period. However, the first period is not limited to the entire period but can be any predetermined period. Similarly, Figure 6 shows an example in which the second period is one year, but the second period is not limited to this and maybe any predetermined period.

The first data K1 of the Embodiment 1 has a first ranking section D1 that indicates the rating score for each second period. If the last second period in the first period has not ended, the terminal processing unit 42 may indicate the estimated final number of registrations for that second period, as shown by the dashed line in Figure 6. The terminal processing unit 42 accepts the selection and designation of one or more second periods via the terminal input unit 46. Figure 6 shows an example where the year 2012 is selected as the second period. However, the method of designating the second period and how the designated second period is displayed are not limited to the example in Figure 6 but can be changed as needed. The basic screen G3 in Figure 6 also has a designation button E1 for accepting the designation of one or more second periods.

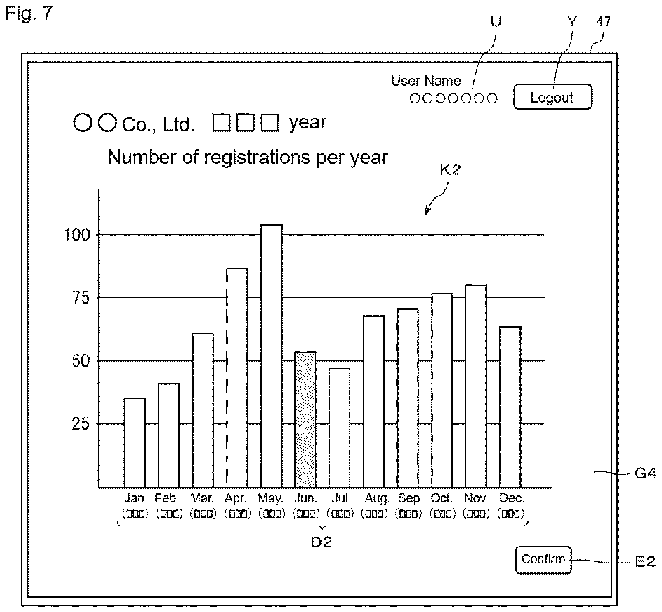

When one or more second periods are selected on the basic screen G3 as shown in Figure 6 and designated by pressing the designation button E1, the terminal processing unit 42, in cooperation with the data providing device 30, displays the detailed screen G4 as shown in Figure 7 on the terminal display unit 47, for example. The detail screen G4 comprises the second data K2, which organizes the number of registered rights of the assignee in the second period by the third period, which is shorter than the second period. The second data K2 is information that the terminal processing unit 42 displays based on the second original data.

The second data K2 illustrated in Figure 7 has a bar graph with the month on the horizontal axis and the number of registrations on the vertical axis. Figure 7 shows an example where the second period is one year, corresponding to Figure 6, and the third period is one month. However, the third period is not limited to one month but can be any predetermined period.

The second data K2 of this form 1 has a second ranking section D2 that indicates the rating score for each third period. The terminal processing unit 42 accepts the selection and designation of one or more second periods via the terminal input unit 46. Figure 7 shows an example in which June is specified as the second period. However, the method of designating the third period and how the designated third period is displayed are not limited to the example in Figure 7 but can be changed as needed. The detailed screen G4 in Figure 7 also has a confirmation button E2 to accept the designation of one or more third periods.

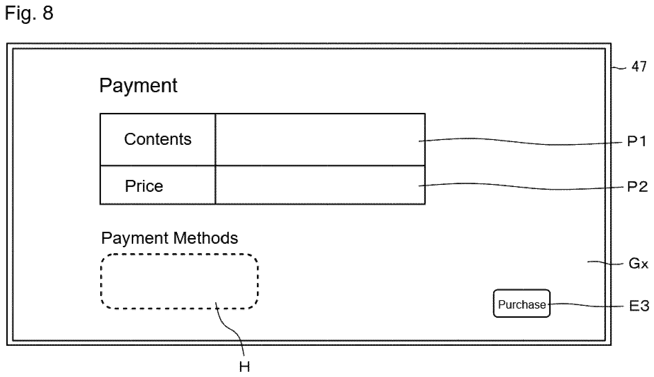

When one or more third periods are selected on the graph, for example, in the detailed screen G4 as shown in Figure 7, are specified by pressing the confirmation button E2, the terminal processing unit 42, in cooperation with the data providing device 30, displays the purchase screen Gx as shown in Figure 8, for example, on the terminal display unit 47. The purchase screen Gx has a content section P indicating the contents of the information to be purchased and an amount column Q indicating the purchase amount. The purchase screen Gx also has a purchase button E3 for making payment. The purchase screen Gx may have a payment method section H that indicates one or more payment methods.

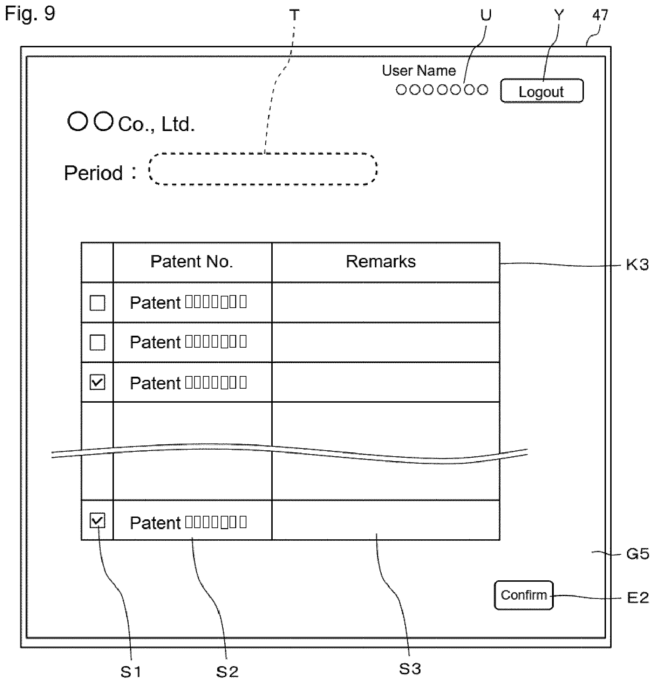

When one or more third periods are selected on the detailed screen G4 and the confirmation button E2 is pressed, the terminal processing unit 42 may display the list screen G5 as shown in Figure 9 in cooperation with the data providing device 30. The list screen G5 illustrated in Figure 9 has a period display section T showing the period selected by the user. The list screen G5 also has a list display section K3 comprising a combination of a selection box S1 and a patent number section S2. The list display section K3 is for the user to select or cancel the rights listed in the patent number section S2 by placing the cursor in the selection box S1 and clicking the mouse, etc. Figure 9 shows an example where the list display section K3 includes a remarks section S3 that displays supplementary information about the rights. When the number of rights to be displayed in the list display section K3 is larger than the set number, the terminal processing unit 42 may display the list display section K3 in a scrolling or other format.

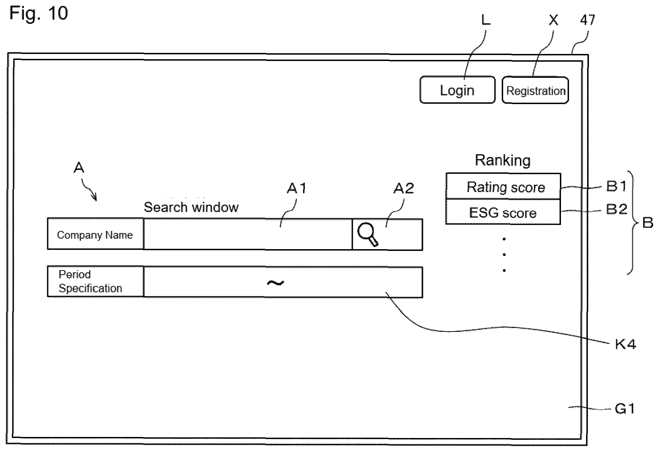

The above explanation shows an example of transitioning from detailed screen G4 to list screen G5 but is not limited to this. For example, the terminal processor 42 may shift from the basic screen G3 to the list screen G5. The user screen G2 may also have a period specification window K4 for specifying a period, as shown in Figure 10. In this case, the terminal processing unit 42 may display the list screen G5 on the terminal display unit 47 in cooperation with the data providing device 30 when the assignee name is entered in the input window A1, the period information is entered in the period specification window K4, and the search button A2 is pressed. The terminal processing unit 42 may also display a basic screen G3 or a detailed screen G4 on the terminal display unit 47 with graphs, etc. adjusted according to the length of the specified period.

### [Subscription and sequential purchase functions]

In the above, we have shown an example where a user purchases products on a case-by-case basis, but this is not limited to this. The data providing device 30 may have at least one of the periodic purchase functions and the sequential purchase function. The subscription purchase function is a function that provides products to users who have applied for a subscription purchase every arbitrary period, such as one week, 10 days, one month, six months, or one year. The sequential purchase function is a function to provide a product about an application to a user who has applied for sequential purchase at the timing when the industrial property right is registered and validity data, etc. corresponding to the industrial property right are stored in the database 5a.

### [Browsing of purchased products]

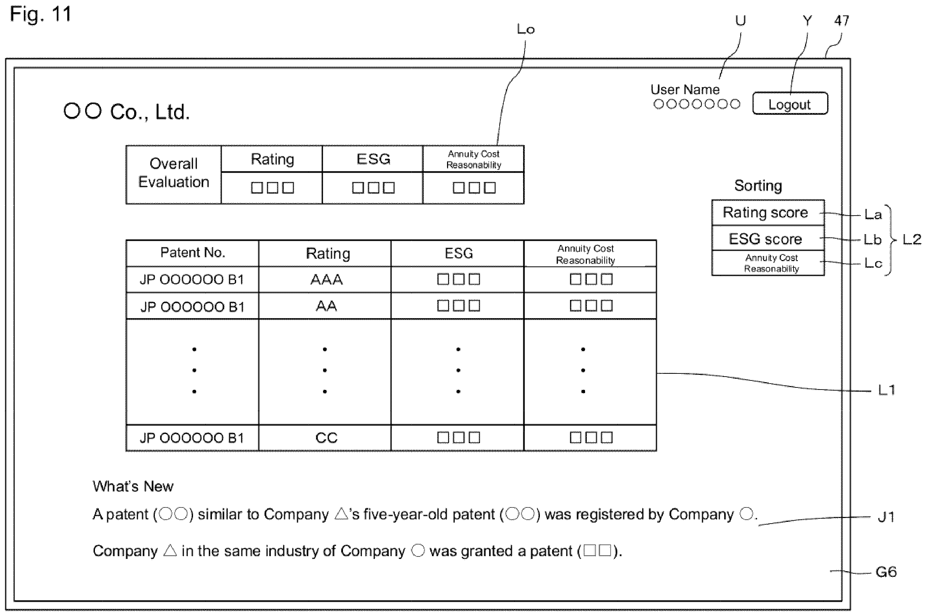

Referring to Figure 5 and Figures 11 to 14, the configuration and display screens related to the user's viewing of purchased products will now be described. The same symbols are used for the same configurations as in the figures above, and explanations are omitted. When the user specifies "assignee" via the call section Z1 of the user screen G2 as shown in Figure 5, the terminal processing section 42, in cooperation with the data providing device 30, displays the assignee screen G6 as shown in Figure 11 on the terminal display unit 47, for example.

The rights holder screen G6 illustrated in Figure 11 has an overall evaluation section Lo, an individual rating section L1, and a sort specification section L2. The overall evaluation section Lo is where the overall evaluation of all rights by the assignee is displayed. Figure 11 shows an example where the assignee's rating score, ESG score, and annuity information are displayed in the overall evaluation section Lo and the individual rating section L1. In Figure 11 and elsewhere, the annuity information is expressed as an annuity. The sort specification section L2 has virtual buttons corresponding to each of the items in the individual evaluation section L1. That is, the sort specification section L2 has a rating priority key la to sort the individual rating section L1 in order of rating score, an ESG priority key Lb to sort the individual rating section L1 in order of ESG score, and an annual fee priority key Lc to sort the individual rating section L1 in order of annuity information. Figure 11 shows an example of an individual rating section L1 sorted in order of rating score.

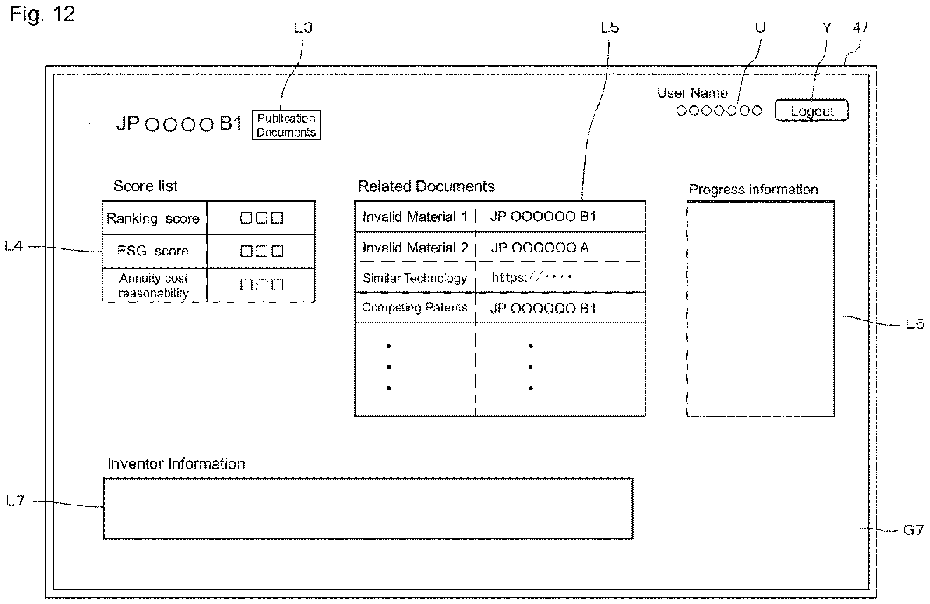

When "rights" is designated on the assignee screen G6 as shown in Figure 11, for example, by clicking the rights number to which a link is attached, the terminal processing unit 42 displays the rights screen G7 as shown in Figure 12 on the terminal display unit 47 in cooperation with data providing device 30. When the user specifies "rights" via the call section Z1 of the user screen G2 as in Figure 5, the terminal processing unit 42 causes the rights screen G7 as in Figure 12 to be displayed on the terminal display unit 47 without going through the assignee screen G6 as in Figure 11.

The rights screen G7 illustrated in Figure 12 has a publication documents button L3, a list section L4, a documents section L5, a progress information section L6, and an inventor information section L7. The publication documents button L3 is a virtual button for displaying a gazette that shows the content of the rights. The list section L4 is a section that shows the scores of the rights as well as the individual rating section L1. The documents section L5 is the portion that shows the information of the literature related to the calculation of the rating score. The progress information section L6 is the portion that indicates lapse information related to the acquisition and maintenance, etc., of rights. The inventor information section L7 is the part that shows the information on the inventor of the invention about the patent right.

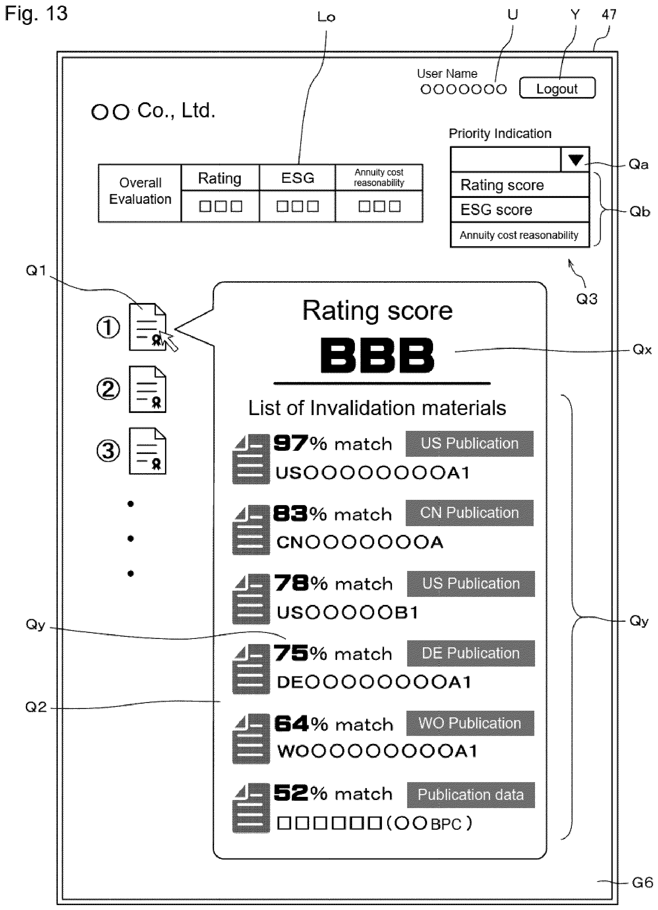

When the user specifies "rights holder" via the call section Z1 of the user screen G2 as shown in Figure 5, the terminal processing section 42 may display the assignee screen G6 as shown in Figure 13 on the terminal display unit 47, for example, in cooperation with the data providing device 30. The assignee screen G6 in Figure 13 has a publication documents section Q1, a detailed list section Q2, and a selection section Q3. The publication documents section Q1 functions as a virtual button for displaying the gazetteer showing the contents of the rights, and also displays the detailed list section Q2 when the mouse cursor is moved over it. The selection section Q3 is used to allow the selection of scores to be prioritized for display in the detailed list section Q2. Figure 13 shows an example of the selection section Q3, which is a drop-down UI. That is, the selection section Q3 consists of a display selection Qa in which the score selected by the user is displayed, and an expansion button Qb in which the score to be displayed in the detailed list section Q2 is displayed. It has the expansion button Qb to display a list of scores, and a list section Qc showing a list of scores. The detailed list section Q2 has a score section Qx to display the score selected in the selection section Q3, a documents list section Qy to show a list of related literature, and a relevance display section Qz to show the degree of association between this right and related literature.

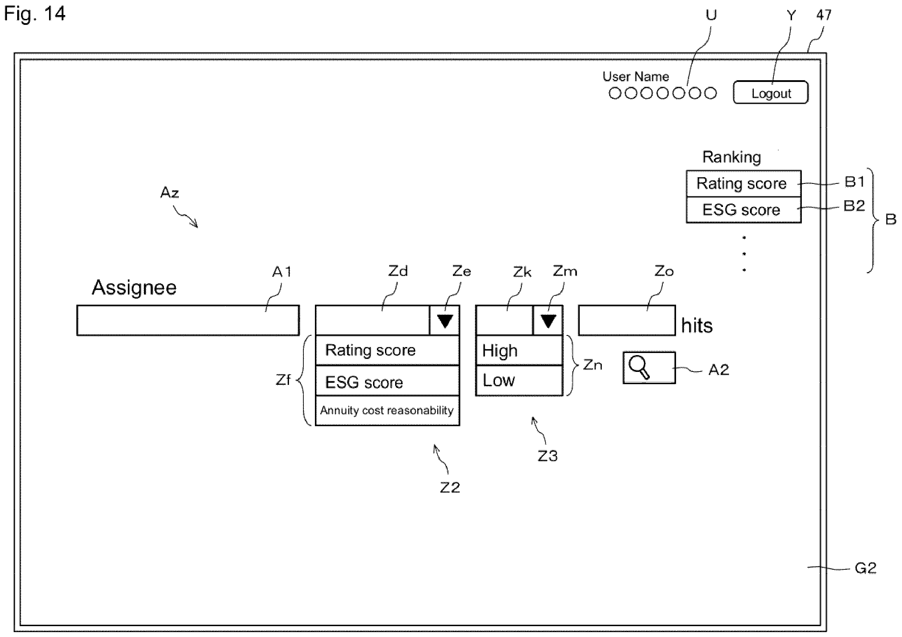

When a user completes the login process via the login screen, the terminal processing unit 42 may display a user screen G2 on the terminal display unit 47, for example, as shown in Figure 14, in cooperation with the data providing device 30. The user screen G2 illustrated in Figure 14 has a narrowing section Az composed of an input window A1, a search button A2, a score specification section Z2, an order specification section Z3, and a number of documents section Zo. The score specification section Z2 is for selecting one of the rating scores, ESG score, and annuity information, and has a display section Zd, an expansion button Ze, and a list section Zf. The expansion button Ze is a virtual button for displaying the list section Zf, and the list section Zf displays information for the user to select in conjunction with an operation to the expansion button Ze. The display section Zd shows the characters, etc. selected from the list section Zf.

The order specification section Z3 is used to specify whether the information selected in the score specification section Z2 should be ordered from the highest to the lowest and has a display section Zk, an expansion button Zm, and a list section Zn. The expansion button Zm is a virtual button for displaying the list section Zn, and information for the user to select is displayed in the list section Zn in conjunction with the operation to the expansion button Zm. The display section Zk displays the characters, etc. selected from the list section Zn. The number of documents section Zo is a column for entering numerical values corresponding to the number of items.

Here, the operation in which a rating score is selected in the score specification section Z2 and "higher" or "lower" is specified in the order specification section Z3 corresponds to the operation in which the order based on the rating score is specified. For example, suppose that "Company Z" is specified in input window A1, "rating score" is selected in score specification section Z2, "higher" is specified in order specification section Z3, "15" is entered in the number of documents section Zo, and search button A2 is pressed. Then, the terminal processing unit 42, in cooperation with data providing device 30, displays a list of 15 items of information on the industrial property rights of Company X in order from the top of the rating score.

The narrowing section Az may have a period specification field (not shown) that accepts period specifications instead of or together with the number of documents section Zo. This period specification column may be similar to the period specification window K4 in Figure 10. However, the filtering section Az may be configured without at least one of the order specifications sections Z3 and the number of documents section Zo.

The narrowing section Az may have a score selection section (not shown) for selecting at least one of the rating scores instead of the order specification section Z3. For example, suppose that "assignee" is specified in input window A1 and at least one of the rating scores is selected in the score selection section. In this case, the terminal processing unit 42, in cooperation with the data providing device 30, may display information on one or more industrial property rights of the designated assignee, to which the selected rating score is assigned, in a selectable manner on the terminal display unit 47. For example, suppose that the rating scores are set in seven levels, from the top to the bottom: "AAA," "AA," "A," "BB," "B," "CC," and "C." In such a setting, the user can select at least one of the above seven rating scores. When the user selects at least one rating score, the terminal processing unit 42, in cooperation with the data providing device 30, displays information on one or more industrial property rights with the selected one or more rating scores on the terminal display unit 47 in a selectable manner.

### [ESG screen]

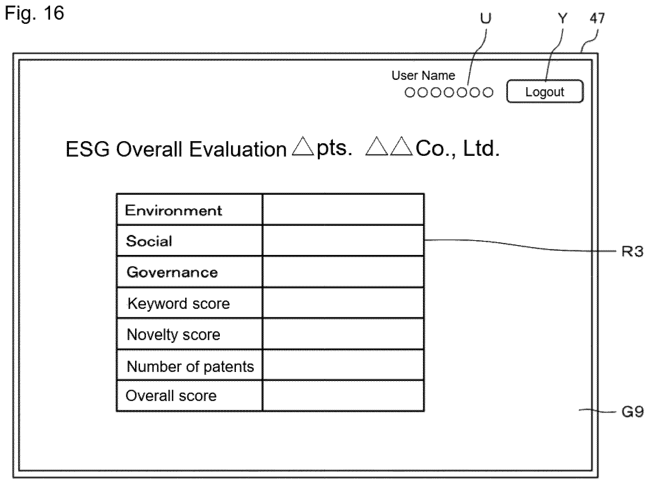

Referring to Figures 15 and 16, the configuration and display screens related to the confirmation of information on ESG by the user are explained next. The same symbols are used for the same configuration as in the figures above, and explanations are omitted. For example, when the initial screen G1 in Figure 4 or the ESG button B2 on the user screen in Figure 5 or Figure 10 is pressed by the user, the terminal processing unit 42 may display the ESG overall screen G8 as shown in Figure 15 on the terminal display unit 47 in cooperation with the data providing device 30. When the user selects at least one rating score, the terminal processing unit 42, in coordination with the data providing device 30, displays information on one or more industrial property rights with the selected one or more rating scores on the terminal display unit 47 in a selectable manner.

The ESG overall screen G8 in Figure 15 has comparison data R1, in which the number of ESG-related patents is accumulated and graphed by assignees every week, and a ranking section R2, which shows a ranking regarding the number of ESG-related patents. The comparison data R1 is organized based on, for example, the publication date of the patent gazette. For example, each column in the ranking section R2 functions as a virtual button that accepts the selection of assignees. When one column of the ranking section R2 is clicked, etc., by the user, the terminal processing unit 42 may display the ESG individual screen G9 as shown in Figure 16 on the terminal display unit 47 in cooperation with the data providing device 30.

The ESG individual screen G9 illustrated in Figure 16 has a detailed analysis section R3 that shows individual evaluations of multiple indicators related to the calculation of the ESG score. In Figure 16, the multiple indicators relevant to the calculation of the ESG score are Environment Social, Social Governance The multiple indicators related to the calculation of ESG score can be selected and discarded as appropriate.

### [Inventor information]

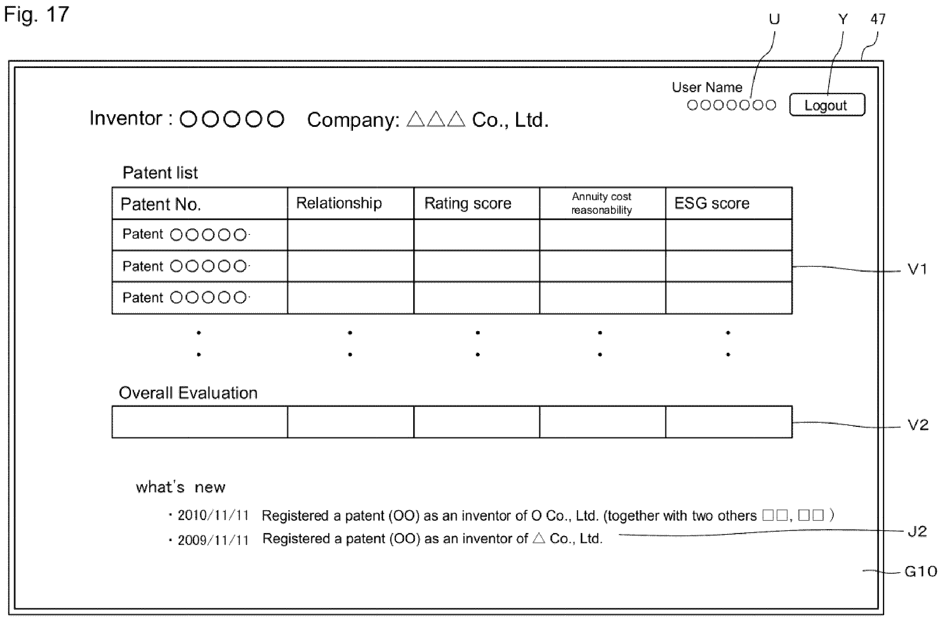

Referring to Figure 17, the configuration and display screen related to the confirmation of inventor information by the user is explained next. The same symbols are used for the same configurations as in the figures above, and explanations are omitted. When inventor information is requested by the user, terminal processing unit 42 may display inventor screen G10 as shown in Figure 17 on the terminal display unit 47 in cooperation with data providing device 30. For example, the terminal processing unit 42 may display an inventor search field on the user screen G2 as shown in Figure 5 for entering the inventor's name and requesting the inventor's information. Also, a link may be attached to the inventor's name listed in the inventor information section L7 in Figure 12, and when the user clicks on the inventor's name, the terminal processing unit 42 may display the inventor screen G10 corresponding to that inventor on the terminal display unit 47.

The inventor screen G10 illustrated in Figure 17 has a list display section V1 that lists information on patent rights in which the inventor has been involved, an evaluation section V2 that shows the inventor's overall evaluation, and a specific information section J2 that shows the inventor's history and other information. The list display section V1 in Figure 17 is designed to display the relationship information, rating score, annuity information, and ESG score for each patent right. The relationship information includes information indicating the degree of contribution to the right, such as whether the inventor is the first inventor or not, etc. The evaluation section V2 displays information such as the ratio of patients with high validity, the number of patent applications, the number of patent registrations, and the number of times the inventor's application has been cited in notices of reasons for refusal, etc. (number of citations). The evaluation section V2 may show the inventor's overall evaluation of each item in the list display section V1.

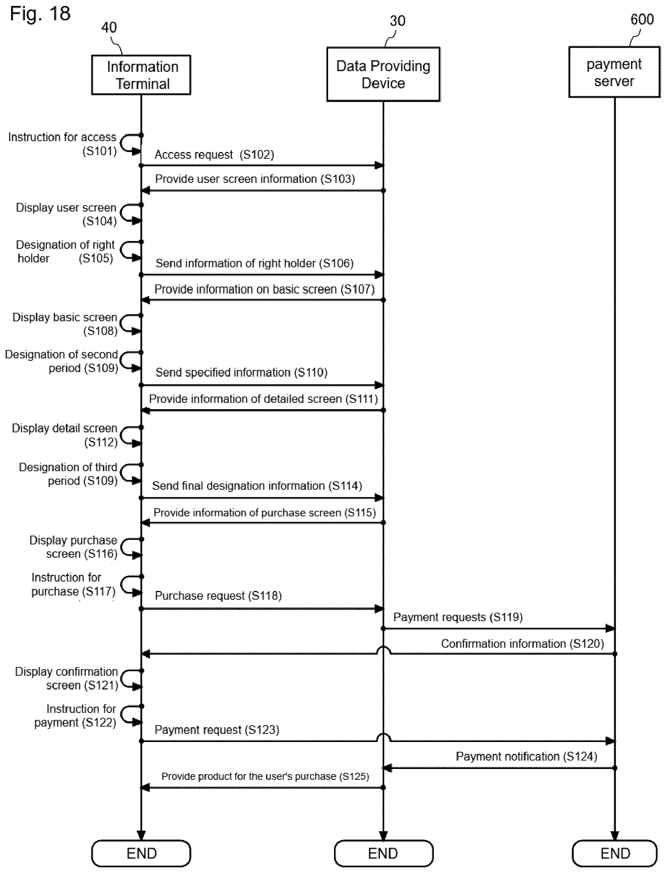

Next, referring to the sequence chart in Figure 18, an example of the operation of this method of providing data when a user purchases a product related to industrial property rights is described. Here, it is assumed that the user has login the system of the data providing device 30 through the initial screen G1, etc.

At the information terminal 40, the terminal processing unit 42 receives instructions for accessing a website provided by the data providing device 30 via the terminal input unit 46 (Step S101) and sends an access request to the website to the data providing device 30 (Step S102). In the data providing device 30, the data providing unit 32 provides the user screen information to the information terminal 40 (Step S103), and the terminal processing unit 42 displays the user screen G2 on the terminal display unit 47, for example, as shown in Figure 5 (Step S104).

When the terminal processing section 42 receives the designation of the assignee through the user screen G2 (Step S 105), it sends the information of the designated assignee to the data providing device 30 (Step S 106). The data providing unit 32 provides the information on the basic screen corresponding to the assignee information to the information terminal 40 (Step S 107). Then, the terminal processing section 42 displays the basic screen G3, for example, as shown in Figure 6, on the terminal display unit 47 (Step S 108).

When the terminal processing section 42 receives the designation of the second period through the basic screen G3 (step S109) and sends the specified information indicating the specified one or more second periods to the data providing device 30 (Step S110). The data providing unit 32 provides the information of the detailed screen corresponding to the specified information to the information terminal 40 (Step S111). Then, the terminal processing section 42 displays the detailed screen G4, for example, as shown in Figure 7, on the terminal display unit 47. When the specification information indicating multiple second periods is transmitted, the data providing unit 32 may switchable display the detailed screen G4 corresponding to each second period. The image data corresponding to all the specified second periods may be included in the detailed screen G4 (Step S112).

When the terminal processing unit 42 receives the designation of the third period through the detailed screen G4 (Step S113), the terminal processing unit 42 sends the final designation information indicating the designated one or more third periods to the data providing device 30 (Step S114). The data providing unit 32 provides the information of the purchase screen reflecting the final specification information to the information terminal 40 (Step S115). Then, the terminal processing section 42 displays the purchase screen Gx, for example, as shown in Figure 8, on the terminal display unit 47 (Step S116).

When the terminal processing section 42 receives an instruction for purchase from the user, such as by pressing the purchase button E3 (step S117), it sends a purchase request to the data providing device 30 (step S118). Then, the data providing unit 32 requests the payment server 600 to make the payment (Step S119). The payment server 600 sends confirmation information including the contents of the product to be purchased and the amount to be paid to the information terminal 40 (Step S120). The terminal processing section 42 displays a confirmation screen (not shown) based on the confirmation information on the terminal display unit 47 (Step S121).

When the terminal processing unit 42 receives an instruction for payment through the confirmation screen (step S122), it requests the payment to the payment server 600 (step S123). The payment server 600 executes the payment process and sends a payment notification indicating the completion of the payment to the data providing device 30 (Step S124). The data providing device 30 then provides the product for the user's purchase to the information terminal 40 (Step S125). In other words, through each of the above series of processes, the user can view the information about the product at any time via the information terminal 40, since the user has obtained the authority to access the information about the purchased product.

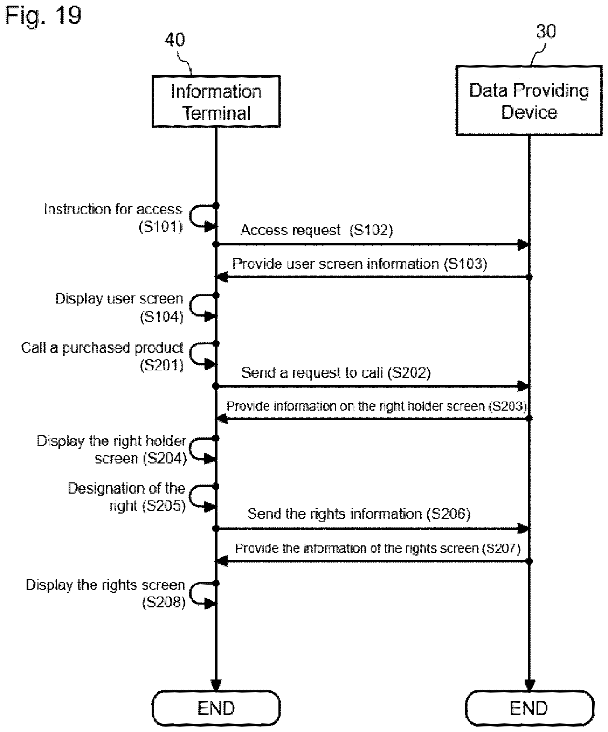

Next, referring to the sequence chart in Figure 19, an example of the operation of the data provision method of the Embodiment 1 when a user browses for a product that has already been purchased is described. Here, it is assumed that the user has login the system of the data providing device 30 through the initial screen G1, etc. The same step numbers are used for the same processes as in Figure 18, and the explanation is omitted.

The data providing device 30 and the information terminal 40 perform steps S101 to S104 are executed. Next, when the user instructs to call a purchased product via, for example, the call section Z of Figure 5 (step S201), the terminal processing section The terminal processing unit 42 sends a request to call the product about the instruction to the data providing device 30 (step S202).

Here, for the sake of convenience, we assume a case where the user designates a assignee in step S201. In this case, the data providing unit 32 sends the information on the assignee screen for the designated assignee to the information terminal 40 (step S203). Then, the terminal processing section 42 displays, for example, the assignee screen G 6, as shown in Figure 11 or Figure 13, is displayed on the terminal unit 47 (Step S204).

When the terminal processing section 42 receives the designation of a right through the assignee screen G6 (step S205), it sends the rights information indicating the designated rights to the data providing device 30 (Step S206). The data providing unit 32 provides the information of the rights screen corresponding to the rights information to the information terminal 40 (Step S207). This causes the terminal processing section 42 to display the rights screen G7, for example, as shown in Figure 12, on the terminal display section 4 (Step S208).

As described above, the data providing device 30 of the Embodiment 1 is designed to extract validity data corresponding to external requests from a pre-built database 5a. Therefore, the data providing device 30 does not need to perform processing to evaluate the validity of the rights upon receiving a request for the data, thereby suppressing wasteful use of the processing unit and memory and enabling the prompt provision of information on the validity of the industrial property rights. In addition, the validity data includes a rating score indicating the relative validity among the plurality of industrial property rights. In other words, the database 5a in the data providing database 35 includes the rating score determined by the estimation processing means 124. In other words, the database 5a in the data providing database 35 stores the validity data including the rating score determined by the estimation processing means 124. Therefore, the user can quickly and accurately select the right that meets his/her needs by viewing the rating score associated with each right on the screen shown in Figures 11 to 13, for example.

By the way, a high level of expertise is required to properly evaluate the validity of industrial property rights. In this regard, the data providing system 100 has a data providing device 30 and an information terminal 40. The data providing unit 32 provides screen information including validity data to the information terminal 40, and the information terminal 40 provides the screen information provided by the data providing device 30. The information terminal 40 has a terminal display unit 47 that displays the screen information provided by the data providing device 30. Therefore, a user using the information terminal 40 can obtain useful information on industrial property rights without requiring expertise.

The estimation processing means 124 may be used to determine a rating score for each assignee in units of periods, such as the entire period, the first period, the second period, the third period, etc. Then, the construction means 22c may reflect the rating score corresponding to each period in the database. In this way, the data processing means 32a can provide the rating scores corresponding to each period to the information terminal 40. Thus, since the user can check the rating scores corresponding to each period on the screens such as Figure 6, Figure 7, Figure 11, and Figure 13, the user can select the assignee and the period quickly and accurately.

When the industrial property right is a patent right, the validity data may include technical information related to the validity of the patent right. In this case, the validity data with one or more technical information tied to the rating score is stored in the database 5a. In this way, the information terminal 40 can, for example, indicate the technical information related to the patent right on the screen as shown in Figure 12 or Figure 13 by linking it to the rating score. Thus, the user can quickly check the literature, etc. on which the rating score is based.

By the way, in recent years, efforts to utilize ESG perspectives in management and to achieve stable and long-term growth of companies have been spreading around the world. The ESG perspective is also being adopted in intellectual property strategies. In this regard, the validity data can be composed by including the ESG score, which is an index value that evaluates patent rights from the perspective of ESG. Therefore, the user can check the ESG score for each right on the screen shown in Figure 11 to Figure 17, for example. Therefore, the user can check the ESG score for each right on the screen as shown in Figures 11 to 17, for example, and can grasp at a glance the companies, etc. that are focusing on ESG and utilize it for selecting products. The estimation processing means 124 is designed to determine ESG scores for each assignee in units of periods such as the entire period, the first period, the second period, and the third period. Then, the construction means 22c may reflect the ESG score corresponding to each period in the database. In this way, the data processing means 32a can provide the ESG score corresponding to each period to the information terminal 40 0 for each period. Thus, the user can check the ESG score corresponding to each period on the screen as shown in Figure 11, Figure 13 to Figure 17, for example, and utilize it for selecting the assignee.

The validity data may include the annuity information that indicates the high-cost reasonability for maintaining the right. In this way, for example, the annuity information of the industrial property right can be made visible to the user on the screens shown in Figures 11 to 13, so that the user can easily determine whether the right should be maintained or not. The user can easily determine whether the right should be maintained or not. The estimation processing means 124 may calculate the annuity information for each assignee in units of periods such as the entire period, the first period, the second period, and the third period. Then, the construction means 22c may reflect the annuity information corresponding to each period in the database. In this way, the data processing means 32a can provide the annuity information corresponding to each period to the information terminal 40. Thus, the user can check the annuity information corresponding to each period on the screen shown in Figures 11 to 13, for example, and utilize the information for evaluation and selection of the assignee.

The validity data may include prior trademark data, which is information on prior trademarks that have a similarity to the trademark about the trademark right that is greater than a threshold value. In this way, as in the case of patent rights, the prior trademark data related to the trademark rights can be shown in connection with the rating score on the screen, for example, as shown in Figure 12 or Figure 13. Thus, the user can quickly check the prior trademark data on which the rating score is based, and can examine the invalidity of the trademark right.

The validity data may include known design data, which is information on known designs whose similarity to the design about the design right is above a threshold. In this way, as in the case of a patent right, the public design data related to the design right can be shown in connection with the rating score on the screen shown in Figure 12 or Figure 13, for example. Thus, the user can quickly check the known design data on which the rating score is based, and examine the validity of the design right.

The data providing unit 32 has a function to sort each technical information in the database 5a in the order of the degree of association with the patent right about the validity data, for validity data containing a plurality of technical information. The degree of relevance is an index value indicating the degree to which the wording of the claim about the patent right matches or approximates the wording of the technical information. The data providing unit 32 has a function to sort each prior trademark data in the database 5a in order of the degree of similarity with the trademark about the validity data for the validity data containing the plurality of prior trademark data. The data providing unit 32 has a function to sort each public design data in the database 5a in the order of the degree of similarity to the design about the validity data for validity data containing a plurality of public design data. In this way, the information terminal 40 can display the sorted data on the screen as shown in Figures 11 to 13 without performing a separate data sorting process, thereby improving the efficiency of the user's confirmation process.

When one or more rights are specified at the information terminal 40, the data providing unit 32 provides the validity data corresponding to the rights. Thus, the user can select, and purchase products related to industrial property rights on a per-item basis and can obtain necessary and sufficient data. When the assignee and the period are specified at the information terminal 40, the data providing unit 32 provides the validity data corresponding to the right within the said period of the assignee. Thus, a user can quickly purchase a product in a period unit that meets his/her needs without making detailed selections.

The data providing unit 32 may provide information on the evaluation index of the inventor when the inventor is designated at the information terminal 40. In this way, the user can check the rank and degree of contribution of the inventor on a screen such as that shown in Figure 17, for example, and use the information for headhunting. In addition, the data providing unit 32 may provide the unique information of the inventor when the inventor is specified in the information terminal 40. In this way, the user can know the career of the inventor, co-inventors, etc., by checking the specific information section J2 on the screen shown in Figure 17, for example, and can utilize the information for finding human resources.

When one or more rights are specified at the information terminal 40, the data providing unit 32 provides the validity data corresponding to the rights. Thus, the user can select and purchase products related to industrial property rights on a per-item basis and can obtain necessary and sufficient data. When the assignee and the period are specified at the information terminal 40, the data providing unit 32 provides the validity data corresponding to the right within the said period of the assignee. Thus, a user can quickly purchase a product in a period unit that meets his/her needs without making detailed selections.

When an assignee is designated at the information terminal 40, the data providing unit 32 may provide the first original data that organizes the rights of the assignee in the first period by the second period. The first original data is displayed as the first data K1 at the information terminal 40. In addition, when the second period is specified at the information terminal 40, the data providing unit 32 may provide the second original data that organizes the rights of the assignee in the second period by the third period. The second original data is displayed as the second data K2 at the information terminal 40. Further, when the third period is specified at the information terminal 40, the data providing unit 32 may provide the validity data corresponding to the rights in the third period. In this way, the user can use the information terminal 40. In this way, the user can select a period that meets his/her needs while narrowing down the selection period through intuitive and simple operations, thus improving usability. For example, as shown in Figure 6 or Figure 7, if the information terminal 40 is configured to display the rating score and other information corresponding to each period, the user's convenience in selecting the period can be improved.

The data providing unit 32 may provide information on the evaluation index of the inventor when the inventor is designated at the information terminal 40. In this way, the user can check the rank and degree of contribution of the inventor on a screen such as that shown in Figure 17, for example, and use the information for headhunting. In addition, the data providing unit 32 may provide the unique information of the inventor when the inventor is specified in the information terminal 40. In this way, the user can know the career of the inventor, co-inventors, etc., by checking the specific information section J2 on the screen shown in Figure 17, for example, and can utilize the information for finding human resources.

In the data management system 10, the data analyzer 20 has a translation processing means 121 that performs translation processing on core data included in rights-related information to generate translation data and the learning processing means 123 that generates an estimation model M1 by machine learning using data for learning based on the translation data. Therefore, the estimation accuracy can be prevented from deteriorating due to differences in languages, and the amount of data for machine learning can be substantially increased by unifying the languages. Therefore, it is possible to improve the accuracy of rating scores and the like, as well as to increase the reliability of products such as validity data. In other words, according to the data management system 10, it is possible to indicate with high accuracy what kind of related materials exist for patents and other rights around the world.

The data analysis device 20 also comprises the pretreatment means 122 that applies analysis processing to the translation data to generate data for learning. Thus, the features of the core data can be analyzed with high accuracy. Additionally, the pretreatment means 122 applies analysis processing to the translation data to generate data for analysis. Then, the data analysis device 20 has an estimation processing means 124 that uses the data for analysis generated in the pretreatment means 122 as input to the estimation model M1 to determine validity data, etc. Therefore, the estimation model M1 can obtain accurate estimation results, etc.

### <Variation 1>

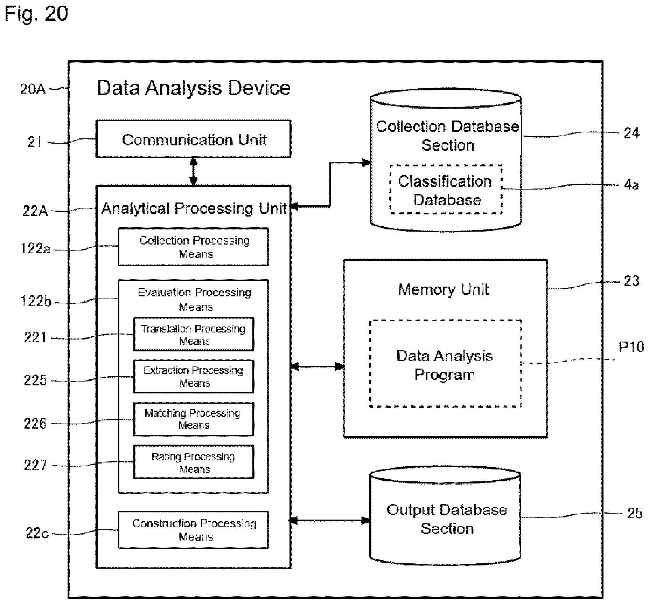

Now referring to Figures 20 through 32, the configuration and operation of the data provision system 100 in the Variation 1 of the Embodiment 1 of the present invention is described. The data providing system 100 of the Variation 1 is a system for providing data on patents and utility models among industrial property rights. The data providing system 100 of the Variation 1 is configured to perform specialized processing for patent rights and utility model rights among industrial property rights, and comprises a data analysis device 20A equipped with a function to vectorize and analyze the natural language in the data collected from outside. The overall configuration and operation of the data provision system 100 is the same as in the above example described according to Figures 1 to 19. Therefore, explanations are omitted for the same configuration with the same symbol.

With reference to Figure 20, the functional configuration of the data analysis device 20A is described. The data analysis device 20A performs rating processing for the rights that are the objects of analysis. The rights to be analyzed are hereinafter also referred to as the "target rights. In other words, the data analysis device 20A performs a rating on the validity of each claim and each subject right by analyzing the scope of claims (e.g., scope of patent claims or scope of utility model claims) of each subject right. In the Variation 1, the validity of each claim and each subject right is rated by analyzing the scope of claims (e.g., patent claims or utility model claims) of each subject right. In the Variation 1, all patent and utility model rights in the world are subject to analysis. Usually, the number of analysis targets increases at the timing when the renewal period elapses. The data analysis device 20A also executes the successive grading process for the subject rights that have increased with the passage of the renewal period. The data analysis device 20A has an analysis processing unit 22A that analyzes the validity of each of the plurality of target rights.

The analysis processing section 22A has a function to generate meaning vectors by vectorizing sentences through natural language analysis. For example, the analysis processing unit 22A vectorizes sentences into meaning vectors by natural language processing based on a transformer-based encoder such as BERT (Bidirectional Encoder Representations from Transformers). In the Embodiment 1, the analysis processing section 22A is configured to generate a 32-dimensional meaning vector. The analysis processing unit 22A may use a learned model for natural language processing, which has been trained in two stages of pre-learning and fine-tuning. Although the analysis processing unit 22A processes "information," the word "information" may be omitted in this document, and represented for example, "claims," "claim elements," and so on.

The analysis processing unit 22A determines the degree of agreement between the various meaning vectors to be generated, in the range of 0 to 1, by using the cosine similarity. More specifically, the analysis processing unit 22A obtains the degree of agreement between two vectors by subtracting the cosine similarity between the two vectors from 1. (When the cosine similarity between the two vectors is "cos θ", it can be expressed as "degree of agreement=1-cosθ".) Here, since the closeness of the angles formed by the vectors appears in the cosine similarity, the more similar two vectors are, the closer the cosine similarity between them is to 1. Therefore, regarding the degree of agreement in the Variation 1, the closer the degree of agreement is to 0, the more similar the vectors are to each other, and the closer the degree of agreement is to 1, the less similar the vectors are to each other. Here, the closeness of the angles formed by the vectors appears in the cosine similarity. So, the more similar two vectors are, the closer the cosine similarity between them is to 1. Therefore, the closer the degree of agreement is to 0, the more similar the vectors are to each other, and the closer the degree of agreement is to 1, the less similar the vectors are to each other. In other words, the closer the degree of agreement is to 0, the less the meaning of the vectors is blurred, and the closer the degree of agreement is to 1, the greater the meaning of the vectors is blurred. In particular, when the degree of agreement is 0, it means that the two meaning vectors are in perfect agreement.

The analysis processing unit 22A has collection processing means 122a, evaluation processing means 1 22B, and construction processing means 22C. The collection processing means 122a periodically collects rights-related information on the target rights through APIs or other means. In addition, the collection processing means 122a collects information related to inventions or devices around the world from outside as information for analyzing the validity of each right. The information related to inventions or devices includes not only publications on patents or utility models, but also information on non-patent documents. As mentioned above, the non-patent literature includes various technical papers and journals, technical standards, websites of companies, research institutions, universities, etc., web articles and catalogs, blogs, SNS, YouTube (registered trademark), etc. Hereinafter, information related to inventions or devices is also referred to as "invention-related information. Among invention-related information, information in patent or utility model publications to which a patent classification has already been assigned is also referred to as "classified information. On the other hand, among invention-related information, information on non-patent documents that have not been assigned a patent classification is also referred to as "unclassified information. The collection processing means 122a stores the collected invention-related information in the collection database section 24, etc.

The collection processing means 122a has the function of collecting information on patent classifications such as CPC or IPC, and constructing the database 4a for classification in the memory section 23 or the collection database section 24 based on the collected information on patent classifications. Figure 20 shows an example where the classification database 4a is constructed in the collection database section 24. The patent classification is organized by a hierarchical structure of multiple classification codes, and each classification code has a description attached to it. More specifically, a classification code is associated with hierarchical data, which is information on the hierarchy of the classification code, and explanatory data, which is information on the explanatory text of the classification code.

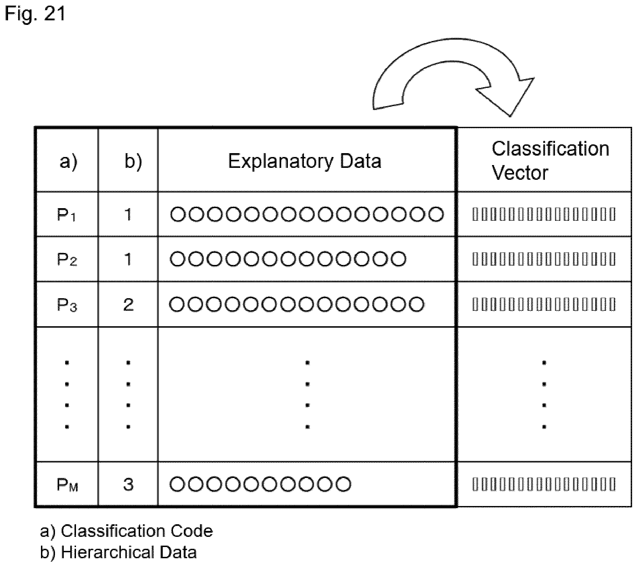

Figure 21 shows an example table of the classification database 4a generated by the collection processing means 122a. The collection processing means 122a collects information on patent classifications from the information providing servers 300, etc. The patent classification information is at the information that is associated with the classification code, hierarchical data, and explanatory data, as shown in the example in the bold frame in Figure 21. The hierarchical data may be the converted information of the hierarchy for each classification code to be collected from the outside into the information that is easy to be processed by the collection processing means 122a. In Figure 21, the classification codes are shown as P1 to PM (M is the total number of classification codes in the patent classification), the hierarchy of the data is illustrated by numbers, and the characters of the explanatory data are illustrated by multiple white circles. Note that the hierarchical structure of the classification codes is not limited to three levels, but any number of levels can be set depending on the patent classification.

The collection processing means 122a generates classification vectors, which are meaning vectors corresponding to each explanatory data, by vectorizing each explanatory data included in the information of patent classification to be collected from the outside through natural language processing. Then, the collection processing means 122a generates the classification database 4a by linking the hierarchical data and the classification vector for each classification code included in the information of patent classification. Figure 21 shows an example in which the classification database 4a includes explanatory data for each of the classification codes, but it is not limited to this. The collection processing means 122a may delete the explanatory data that has completed the conversion process to the classification vector and generate the database 4a for classification composed of the classification code, the hierarchical data, and the classification vector.

The collection processing means 122a may have a classification assignment function that assigns classification data corresponding to a classification code to each of the unclassified information. In this case, the collection processing means 122a generates an unknown vector, which is a meaning vector corresponding to the unclassified information, by vectorizing part or all of the unclassified information by natural language processing. Among the unclassified information on the non-patent literature, the data to be subjected to vectorization by the collection processing means 122a is adjusted according to the type and content of the non-patent literature and can be changed accordingly.

The collection processing means 122a compares the generated unknown vectors with each classification vector in the classification database 4a, and identifies the classification vector with the highest semantic similarity to the unknown vector. Then, the collection processing means 122a associates and stores the classification data, which is at least one of the identified classification vector and the classification code corresponding to the classification vector, to the unclassified information corresponding to the generated unknown vector. In other words, for example, the collection processing means 122a may store the identified classification vector associated with the unclassified information corresponding to the generated unknown vector. In this way, the unclassified information is effectively assigned a classification code. Alternatively, the collection processing means 122a may store the unclassified information corresponding to the generated unknown vector with the classification code corresponding to the identified classification vector. Alternatively, the collection processing means 122a may store the unclassified information corresponding to the generated unknown vector with both the identified classification vector and the classification code corresponding to the classification vector.

The evaluation processing means 122b has a translation processing means 221, an extraction processing means 225, a matching processing means 226, and a rating processing means 227. The translation processing means 221 performs translation processing on the rights-related information and invention-related information. The translation processing means 221 performs translation processing to standardize into a common language, similar to the translation processing means 121 described above.

The extraction processing means 225 extracts invention-related information published prior to the filing date of the subject right from a plurality of invention-related information collected by the collection processing means 122a. Hereinafter, information related to an invention or a device and published before the filing date of the subject right is also referred to as "prior-date information." It is preferable that the prior-date information does not include the invention-related information related to the subject right that was published before the filing date, in the case where the applicant of the subject right, etc. is subject to the application of the provision that the novelty of the invention-related information is treated as not lost by the publication of the invention-related information (such as the exception to the loss of novelty provision). In this case, the extraction processing means 225 is configured to exclude the invention-related information to which the above-mentioned provisions apply from the prior-date information by matching the invention-related information with the documents corresponding to the above-mentioned provisions in the information on the application process of the subject right. The extraction processing means 225 may have a function to further refine the prior-date information based on predetermined conditions. That is, for each of the subject rights, the extraction processing means 225 may be configured to extract a plurality of prior-date information to be used for analyzing the validity of the subject rights from among all the prior-date information.

### [Refining prior-date information by comparing sentence vectors with classification vectors]

For example, the extraction processing means 225 uses natural language processing to vectorize the claims, claims 1, part or all of the specification, abstract, or full text of the subject right, and generates a sentence vector, which is a meaning vector. The generated sentence vector is associated with the subject right and stored. The extraction processing means 225 executes the process of generating and linking sentence vectors for all the target rights (all the rights that are subject to analysis). In addition, the extraction processing means 225 obtains a classification code from each of the classified information and obtains a classification vector corresponding to the classification code by referring the obtained classification code to the classification database 4a. Then, the extraction processing means 225 associates the classification vectors corresponding to the classification codes attached to each classified information and stores them. In this way, a sentence vector is associated with each of the target rights, and a classification vector is associated with each of the classified information.

The extraction processing means 225 compares the sentence vectors associated with the target rights with the classification vectors associated with each classified information, and extracts the classified information whose sentence agreement, which is the degree of agreement between them, is less than or equal to the sentence threshold as the prior-date information for the validity analysis of the rights. In the case where the collection processing means 122a links classification vectors, etc. to each unclassified information by the classification assignment function, the extraction processing means 225 compares the sentence vectors linked to the target right and the classification vectors linked to each unclassified information, and extracts the unclassified information whose sentence agreement, which is the degree of agreement between them, is less than or equal to the sentence threshold as the prior-date information for analyzing the validity of the target right. The sentence threshold is predetermined and can be changed as necessary.

### [Refinement of prior-date information by comparison of classification vectors]

The extraction processing means 225 acquires the classification code assigned to the subject right and obtains the classification vector corresponding to the classification code by comparing the acquired classification code with the classification database 4a. The extraction processing means 225 associates the classification vector corresponding to the classification code attached to the target right and stores it. The collection processing means 122a acquires and links classification vectors for all the target rights. The extraction processing means 225 executes the process of linking the classification vectors to each of the plurality of classified information in the same manner as described above.

Then, the extraction processing means 225 compares the classification vector associated with the target right and the classification vector associated with each classified information, and extracts the classified information whose classification agreement, which is the degree of agreement between them, is less than or equal to the classification threshold as the prior-date information for the validity analysis of the target right.

The matching processing means 226 converts one or more claim elements (referred to as constituent requirements, constituent elements, invention matters, etc. in Japan) of the claims in the subject right for the patent or utility model being analyzed into the first vector, which is a meaning vector. Namely, the matching processing means 226 divides one or more claims in the scope of claims of each subject right into claim elements. Then, the matching processing means 226 generates and stores a first vector for each claim element by converting the claim elements into vectors through natural language processing. Depending on the structure of the claim or the dividing method, there may be only one claim element for a claim. The matching processing means 226 divides all the claims and generates the first vector for all the target rights, and stores the generated first vector by associating it with each claim element.

In addition, the matching processing means226 converts some or all of the plurality of prior-date information extracted by the extraction processing means 225 into a second vector, which is a meaning vector for each divided data. In other words, the matching processing means 226 divides the split target information, which is part or all of the prior-date information, into a plurality of split data according to predetermined conditions, and generates and stores a second vector for each split data by vectorizing each split data by natural language processing. In the case where the prior-date information is a patent document, etc., the matching processing means 226 may, for example, use a patent description the prior-date information as the information to be split. Since a patent description generally includes the contents of other sources (claims, abstracts, etc.), using the patent description as the information to be divided can make the process more efficient. Regarding the conditions for division of the prior-date information, for example, "divide by each sentence" can be suitably employed. In this case, the divided data corresponds to a sentence (from the beginning to the punctuation in the case of Japanese). In this way, by using the degree of agreement based on the cosine similarity between the two vectors, it is possible to identify the position in the prior-date information of the description that has a relatively high semantic relevance to the claim element.

The matching processing means 226 obtains the total matching degree, which is the degree of matching between the claim elements of the claims in the subject right and each of the prior-date information, by comparing first vector with second vector. More specifically, the matching processing means 226 compares the first vector with a plurality of second vectors for each prior-date information for the target right, and obtains the split match degree, which is the match degree between the first vector and each second vector. When the degree of match is less than or equal to a contrast threshold, the matching processing means 226 may set an association flag indicating a relatively high relevance between the claim element and the split data, associated with the degree of match.

Then, the matching processing means 226 determine the total degree of agreement, which is the agreement degree between the claim element corresponding to the first vector and the prior-date information, from the split agreement degree between a first vector and each of all second vectors corresponding to a prior-date information. When the total degree of agreement determined is less than or equal to the total threshold, the matching processing means 226 may associate with the total degree of agreement and set up a matching flag indicating that the relevance between the claim element and the prior-date information is relatively high.

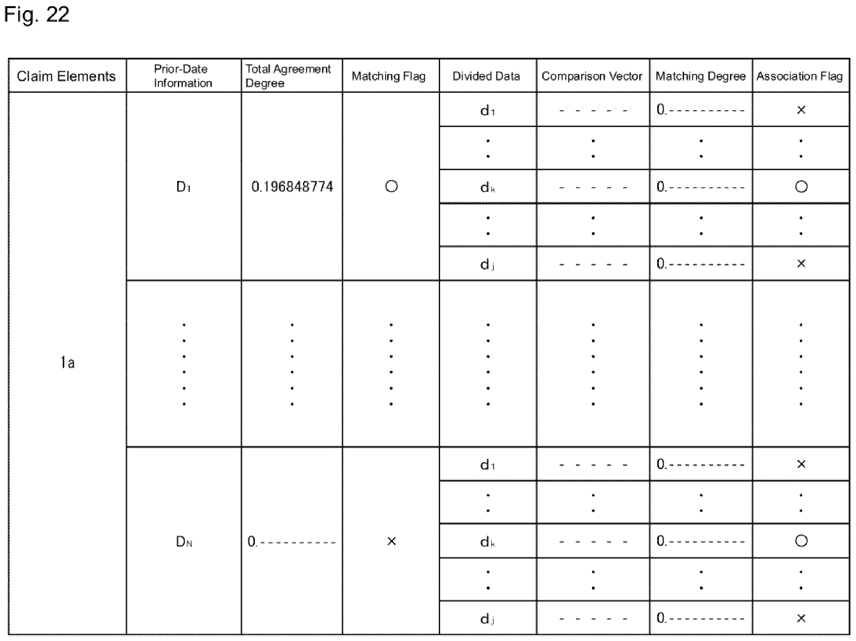

Figure 22 shows an exemplary table of various data corresponding to claim elements in a claim. In Figure 22, it is supposed that the extraction processing means 225 has extracted N (N is any natural number) prior-date information, and symbols D₁ through D_{N} are assigned to them. D₁ to D_{N} correspond to the identification numbers of the prior-date information. The "k" and "j" attached to "d" indicating split data are symbols for convenience. The "k" and "j" attached to "d" indicating split data are symbols for convenience and do not mean that the information to be split is split into the same number of split data. The association flag column is just an example to show that there are some split matches with association flags (white circles in the figure) and some without association flags (X in the figure), and the positions of the white circles and X have no meaning. The same is applicable to the matching flag column. For all claim elements in the scope of claims of the subject right, the matching processing means 226 obtains or calculates various information as shown in Figure 22, and stores it in the memory section 23 or the output database section 25, etc.

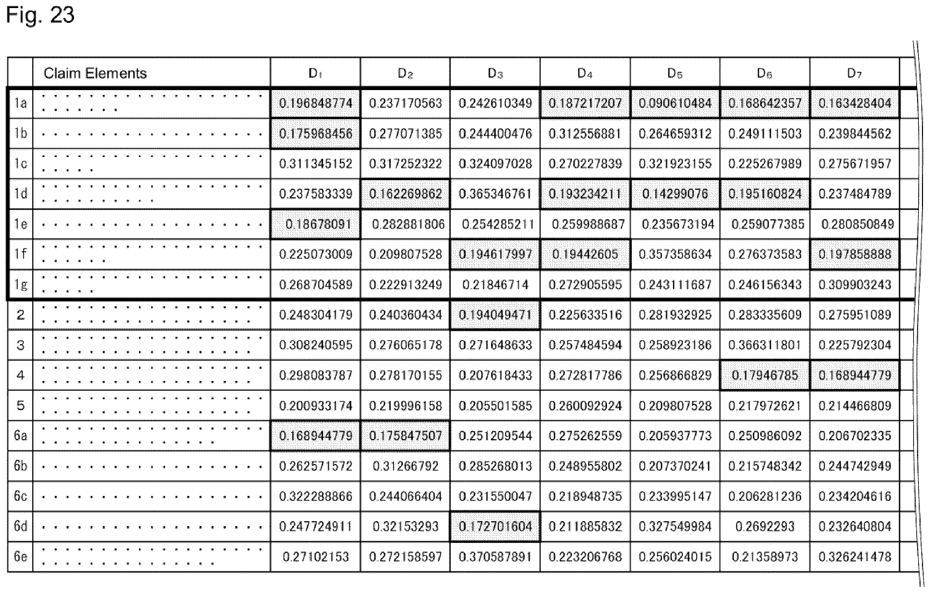

Figure 23 is a table illustrating the total degree of agreement with the plurality of prior-date information for each claim element, which is an example of a part of the agreement database that organizes the total degree of agreement between the claim elements of the subject right and the plurality of prior-date information. The matching processing means 226 has the function of constructing a match database that organizes the total degree of match between the claim elements of all the subject rights and the respective prior-date information. Figure 23 shows an example in which the scope of claims of the subject right has six claims. Of each claim illustrated in Figure 23, claim 1 is divided into seven claim elements, and claims 2 to 5 are processed as claims consisting of one claim element, and claim 6 is divided into five claim elements. In Figure 23, the total threshold value of "0.20" is used as an assumption, and the frames that satisfy the conditions for the match flag to be raised, i.e., the total match value of 0.20 or less, are shown as bold lines. In Figure 23, only D₁ to D₇ are illustrated as plurality of prior-date information, however, in principle, the matching processing means 226 determines the total matching degree for all prior-date information.

Based on the total degree of agreement obtained for each prior-date information, the matching processing means 226 identifies the main relevant information Da, which is the prior-date information with the highest semantic similarity to the target right. For example, for a certain claim, the matching processing means 226 identifies the prior-date information with the highest number of claim elements for which the total degree of agreement is less than or equal to the total threshold as the main related information Da. When there is more than one prior-date information with the highest number of claim elements for which the total degree of agreement is less than the total threshold, one main related information Da may be identified from the multiple prior-date information based on the total degree of agreement and the status of the agreement flag, etc., or multiple main related information Da may be identified.

The matching processing means 226 may select one or more prior-date information as sub-related information that has a relatively high semantic relevance to the identified main related information Da. More specifically, the matching processing means 226 may select one or more prior-date information Db to which a classification vector whose matching degree with a classification vector associated with the main related information Da is less than a sub-threshold is associated. The sub-threshold is determined in advance and may be changed as appropriate. Here, the classification vector associated with the main related information Da is the classification vector corresponding to the classification code assigned to the main related information Da when the main related information Da is classified information. On the other hand, when the main related information Da is unclassified information, the classification vector associated with the main related information Da is the classification vector corresponding to the classification code associated with the main related information Da or the classification vector directly associated with the main related information Da.

Here, the "relevance of the technical field" between the main citation and the sub-citation is known as a factor (motivating factor) that works in the direction where the inventive step (non-obviousness) is denied. In this regard, as described above, if prior-date information that has a relatively high semantic relevance among classification vectors is extracted as sub-related information Db with the main related information Da, the ease of combining sub-related information Db with the main related information Da is enhanced. Therefore, the reliability of the rating score (individual score and overall score) based on the main relevant information Da and one or more sub-relevant information Db is increased. Furthermore, the accuracy of the rating scores can be further enhanced by adjusting the classification vector and sub-threshold so that the patent classification hierarchy is approximated at some depth between the main relevant information Da and the sub-relevant information Db.

The rating processing means 227 determines a rating score, which is an indicator of the validity of each of the plurality of target rights, based on each total degree of agreement determined by the matching processing means 226. The rating processing means 227 of the Variation 1 is configured to determine, as a rating score, an individual score for each claim, which is an index of the validity of the claim, and a total score for each subject right, which is an index of the validity of the subject right. More specifically, the rating processing means 227 determines an individual score for each claim and an overall score for each subject right by using the total degree of agreement between one or more claim elements in the claim and the main related information Da and one or more sub-related information Db.

The rating processing means 227 may determine an overall ranking, a ranking in the technical field to which the invention or device belongs, or a ranking in a certain period of time to which the application date belongs, as an overall score. The fixed period can be set as desired. The rating processing means 227 uses the above rankings and so forth to determine an overall score indicating a gradual evaluation, for example, "AAA," "AA", "A", "BBB", "BB", "B", "CCC," "CC," "C," and "D." The rating processing means 227 stores the information such as the individual score and the overall score in a storage section 23 or an output database section 25 in connection with the subject right.

[Calculation based on the mean or standard deviation of the total degree of agreement] The rating processing means 227 may use all the total degrees of agreement associated with the claim to determine an individual score. All the total degrees of agreement associated with a claim is, for example, the total degree of agreement between one or more claim elements of the claim and each of the main related information Da and all the sub-related information Db. The rating processing means 227 may calculate an average of all the total degree of agreement associated with the claim as an individual evaluation value, and determine an individual score based on the obtained individual evaluation value. Also, the rating processing means 227 may calculate the standard deviation of all the total degrees of agreement associated with a claim as an individual evaluation value, and determine an individual score based on the obtained individual evaluation value. For example, the rating processing means 227 may determine the individual score in a gradual manner by comparing the individual evaluation value with a plurality of threshold values.

The rating processing means 227 may select a specified number of sub-related information Db according to a predetermined selection condition when the specified number of sub-related information Db corresponding to a certain claim exceeds a specified number. The specified number is set as the number of sub-related information Db to be used for calculating the individual score. The selection conditions may include the condition that the number of matching flags is large, the condition that a matching flag is present in a claim element for which no matching flag is present in the main related information Da, or a combination of these conditions. In this case, the rating processing means 227 may determine, for each claim, the average of the total degree of agreement associated with the prior-date information (main related information Da and a specified number of sub-related information Db) refined by the selection condition as an individual evaluation value, and determine an individual score based on the determined individual evaluation value. The rating processing means 227 may calculate the standard deviation of the total degree of agreement associated with the prior-date information refined by the selection conditions for each claim as an individual evaluation value, and may determine an individual score based on the obtained individual evaluation value

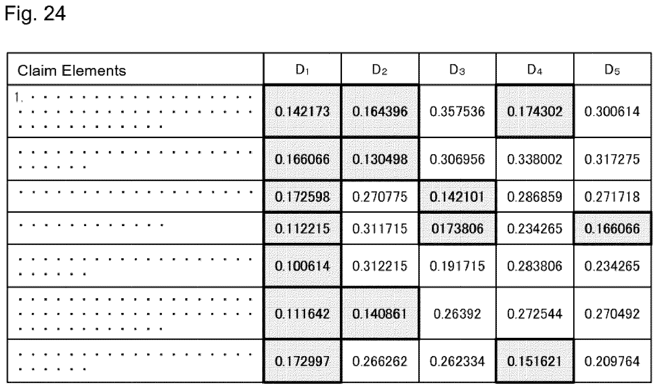

Now referring to Figure 24, a visual explanation of the refinement of prior-date information is presented. Figure 24 shows an example of the total degree of agreement between a claim element of a certain claim and a plurality of selected prior-date information, under the assumption of the number of specifications "4" and the total threshold "0.18". In Figure 24, "claim 1" as divided into seven claim elements, "D₁" as the main related information Da, and "D₂ to D₅" as the sub-related information Db, are illustrated. In Figure 24, the frame that satisfies the condition that the agreement flag is raised, namely, the frame with a total degree of agreement of 0.18 or less, is shown as a bold line. In this way, based on the selection conditions, the accuracy of the individual score can be improved by excluding from the calculation the documents related to prior-date documents that lack elements that negate novelty or inventive step, and by obtaining the average value or standard deviation of the total degree of agreement associated with the refined prior-date information.

### [Calculation based on the percentage of matching flags]

The rating processing means 227 may, for a certain claim, calculate the ratio of the number of matching flags to the product of the number of claim elements and the total number of prior-date information extracted by the extraction processing means 225 as an individual evaluation value, and determine an individual score based on the calculated individual evaluation value. The rating processing means 227 may select a specified number of sub-related information Db according to the selection conditions when there is more sub-related information Db corresponding to a certain claim than the specified number. Then, the rating processing means 227 may obtain the ratio of the number of matching flags to the product of the number of claim elements and the total number of main related information Da and each sub-related information Db for the claim as the individual evaluation value, and obtain an individual score based on the obtained individual evaluation value.

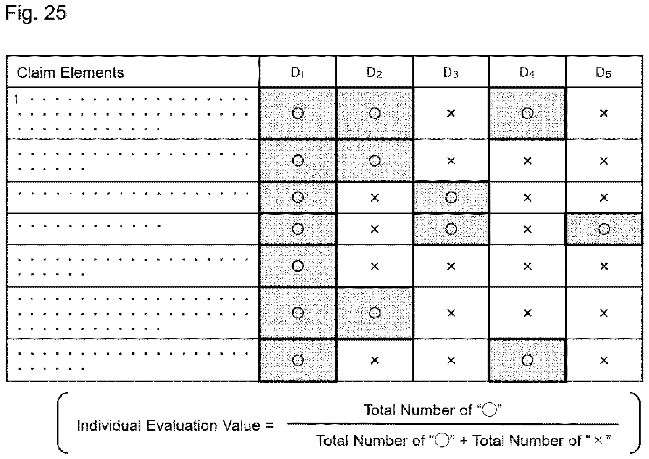

With reference to Figure 25, the calculation process of individual evaluation values based on the percentage of agreement flags is explained in more detail. Figure 25 is an illustration of the total degree of agreement in Figure 24, organized according to whether the agreement flag is present or not, and the various setups are the same as in Figure 24. In Figure 25, for each claim element, the column of prior-date information with a matching flag is circled, and the column of prior-date related documents without a matching flag is marked with an X. In the case of the claim illustrated in Figure 25, the product of the number of claim elements and the total number of main related information Da and each sub-related information Db is 35 ("total number of white circles" + "total number of x's" = 7 x 5), and the number of matching flags is 15 (total number of white circles). Therefore, the individual evaluation value is "3/7".

### [Calculation of individual scores by stepwise evaluation of novelty and inventive step]

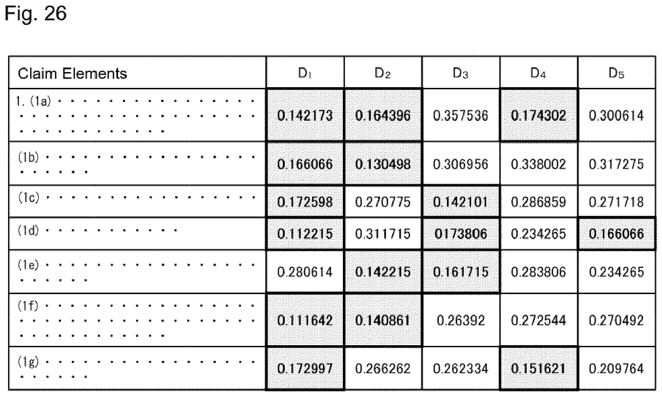

The rating processing means 227 may calculate an individual score for each claim by performing the judgment process pertaining to the presence or absence of novelty and the judgment process pertaining to the presence or absence of inventive step in a stepwise manner. In such a configuration, it is assumed that claims without novelty are less effective than claims without inventive step. In addition, it is assumed that the collection processing means 122a generates the classification database 4a, and the matching processing means 226 identifies the main related information Da and extracts the sub-related information Db. Hereafter, the fact that the total degree of agreement between a certain claim element and the prior-date information is less than or equal to the total threshold is expressed as "the prior-date information satisfies the claim element. In addition, the fact that the total degree of agreement between a claim element and the prior-date information is greater than the total threshold is expressed as "the claim element is novel". This is explained with reference to Figure 24 and Figure 26 as appropriate.

The rating processing means 227 is configured to determine the individual score for a given claim based on a judgement criterion such as "how many prior-date information that satisfies all claim elements," "when there is no prior-date information that satisfies all claim elements, how many other prior-date information that satisfies the unsatisfied claim element, otherwise other prior-date information cannot satisfy the unsatisfied claim element." In the following, explanations will be given separately from the viewpoint of novelty and inventive step.

### <Judgment process for novelty>

For a certain claim, if at least one of the prior-date information satisfies all claim elements, that is, if the total degree of agreement between all claim elements of the claim and the prior-date information is less than or equal to the total threshold, an individual score corresponding to no novelty is assigned to the claim by the rating processing means 227. The individual score in this case can be set in steps corresponding to the following conditions, as shown below, for example.

(1) A condition that there is more than one prior-date information that satisfies all the claim elements for a given claim. (2) A condition that there is only one prior-date information that satisfies all claim elements for a given claim.

Figure 24 illustrates a situation where condition (2) is satisfied. Namely, the prior-date information D₁ illustrated in Figure 24 satisfies all the claim elements for a single claim. The claim that satisfies condition (2) is given a relatively high individual score among the no novelty claims. Claims that satisfy condition (1) are given a lower individual score than claims that satisfy condition (2). Claims satisfying condition (1) may be assigned the same individual score all together, or a lower individual score may be assigned as the number of prior-date information that satisfies all claim elements increases.

The rating processing means 227 may, for example, use the total degree of agreement associated with the prior-date information that satisfies all claim elements to obtain an individual evaluation value that indicates the validity of the claim when obtaining an individual score. The individual evaluation value is assumed to be the average or standard deviation of the total degree of agreement. Usually, there are differences in such individual evaluation values even between claims with equal individual scores. Therefore, using the individual evaluation values in the calculation of the overall score, etc. can improve the accuracy of the validity rating.

### <Judgment process for determining inventive step>

When there is no prior-date information that satisfies all claim elements for a claim, that is, when the total degree of agreement between any prior-date information and at least one claim element of the claim is greater than the total threshold, the claim is assigned an individual score corresponding to novelty by the rating processing means 227 assigns an individual score corresponding to novelty to the claim. The individual score in this case can be set in a gradual manner, for example, corresponding to the following conditions.

### (When the validity of a claim is relatively low: No inventive step)

(3) A condition that one of the claim elements is novel and there is more than one prior-date information that complements it.
(4) A condition that one of the claim elements is novel and there is only one prior-date information that complements it.
(5) A condition that more than one of the claim elements is novel and there is more than one prior-date information that complements them alone.
(6) A condition that more than one of the claim elements is novel and that there is only one prior-date information that complements them independently.
(7) A condition that more than one of the claim elements is novel and that they can be complemented by a combination of prior-date information.

### (When the validity of a claim is relatively high: inventive step involved]

(8) A condition that one of the claim elements is novel, and there is no prior-date information to complement it.
(9) A condition that one of the claim elements is novel and there is no complementary prior-date information.

For each of the above conditions, it is desirable that the higher the number attached to the condition, the higher the individual score to be assigned. However, for conditions (5) to condition (7), the numerical values of the individual scores to be assigned may be switched as appropriate based on the number of novel claim elements, the number of prior-date information that can complement the claim elements, the total degree of agreement, etc.

Figure 26 illustrates a situation where condition (3) is satisfied. That is, the prior-date information D₁ illustrated in Figure 26 does not satisfy only one claim element (1e) in the claim. However, the claim element (1e) is supplemented by the prior-date information D₂ or D₃. Thus, the total degree of agreement between the claim element (1e) and the prior-date information D₂ and D₃ is less than 0.18.

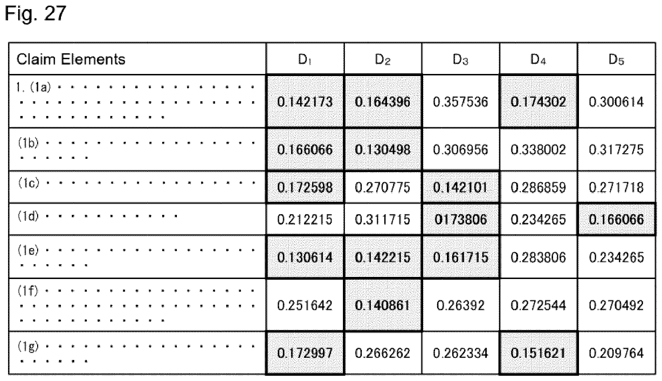

Figure 27 illustrates a situation where condition (7) is satisfied. Namely, the prior-date information D₁ illustrated in Figure 27 does not satisfy claim elements (1d) and (1f), but claim element (1d) is supplemented by prior-date information D₃ or D₅, and claim element (1f) is supplemented by prior-date information D₂. The above conditions (1) to (9) are just examples, and the individual scores can be further subdivided based on the number of novel claim elements, the number of prior-date information that can complement the claim elements, and the total degree of agreement.

When calculating the individual score, the rating processing means 227 may, for example, calculate the average or standard deviation of the total degree of agreement associated with the prior-date information used to calculate the individual score as the individual evaluation value. Usually, there are differences in the individual evaluation values even between claims with equal individual scores. Thus, by using the individual evaluation values in the calculation of the overall score, the accuracy of the validity rating can be improved.

The construction processing means 22c of the Variation 1 constructs a database 5a that manages individual scores and overall scores of each of the plurality of target rights in the database section 25 for output based on the information stored in the memory section 23 and the collection database section 24. The information in the memory section 23 includes the information stored by the collection processing means 22a and the evaluation processing means 122. In the Variation 1, the collection processing means 122a stores the differences in the rights-related information of countries around the world in the storage section 23, etc. The rights-related information includes the target rights. The evaluation processing means 122b uses the above differences to obtain a rating score, etc. for the added target rights and stores it in storage 23, etc. The evaluation processing means 122b uses the above difference to obtain a rating score, etc., for the added target right and stores it in the memory section 23, etc. In addition, the evaluation processing means 122b updates the rating score, etc. for the subject right for which the claim has been amended or the assignee has been changed, based on the above difference. The construction processing means 22c updates the database in the output database section 25 based on the information added or updated by the evaluation processing means 122b. Based on the information added or updated by the evaluation processing means 122b, the construction processing means 22c updates the database in the database section 25, and based on the database, the information processing means 32a updates the database 5a. The data providing device 30 extracts and provides at least one of the rating scores, that is, the individual score and the overall score, corresponding to an external request, from the database 5a that manages the individual score and the overall score of each of the plurality of target rights obtained by the rating processing means 227.

The analysis processing section 22A may consist of an arithmetic device such as a CPU or GPU, and a data analysis program P10 that works with the arithmetic device to achieve the above and the following various functions. Namely, the data analysis program P10 is a program to make the analysis processing unit 22A and the memory unit 23 as computers function as the collection processing means 122A, the evaluation processing means 122B, and the construction processing means 22C.

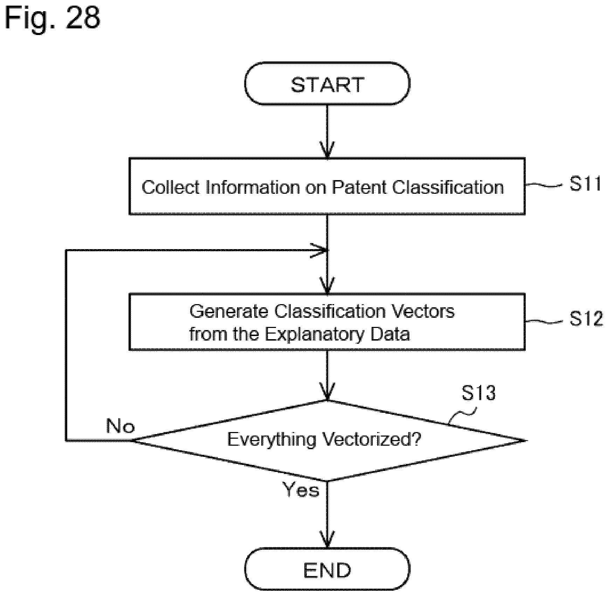

Referring to Figure 28, an example of the operation in the Variation 1 to generate the database 4a for classification among the data management means is described. First, the collection processing means 122a collects information on patent classification from the outside and builds a basic database containing, for example, each data shown in the bold frame in Figure 21 (step S11). Next, the collection processing means 122a reads the description data in the basic database and generates a classification vector from the read description data by natural language processing. Then, the collection processing means 122a stores the generated classification vectors by associating them with the classification codes corresponding to the explanatory data (Step S 12).

The collection processing means 122a executes the process of step S12 for all explanatory data in the basic database (step S 13/No, step S12). The collection processing means 122a constructs the database 4a for classification by executing the process of step S12 for all explanatory data (step S13/Yes). The collection processing means 122a may perform the processing of step S11 and the processing of steps S12 and S 13 in parallel.

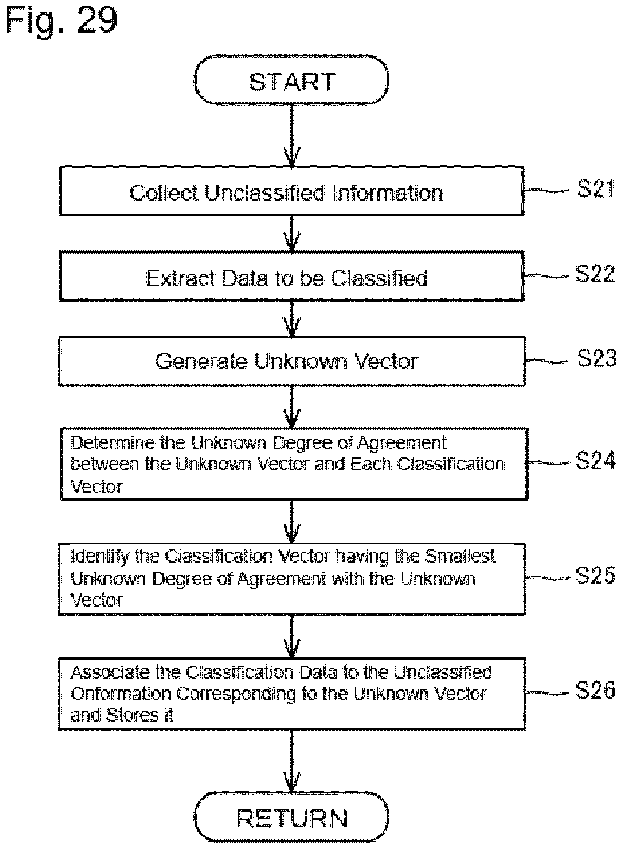

Referring to Figure 29, the operation flow of the data management means in the Variation 1, which assigns classification data to the information of unpatented documents, is described. First, the collection processing means 122a acquires the unclassified information, which is the information of non-patent documents among the prior-date information (Step S21). Next, the collection processing means 122a extracts the data to be classified from the unclassified information (Step S22). Next, the collection processing means 122a generates an unknown vector by converting the data to be classified into a meaning vector (Step S23). If the collection processing means 122a targets all of the unclassified information for vectorization by natural language processing, step S22 is unnecessary.

Next, the collection processing means 122a compares the generated unknown vectors with each classification vector in the database for classification 4a, and determines the unknown degree of agreement, which is the degree of agreement between the unknown vector and each classification vector (Step S24). The collection processing means 122a identifies the classification vector having the smallest unknown degree of agreement with the unknown vector (Step S25). Then, the collection processing means 122a associate the classification vector identified in step S25 and the classification data, which is at least one of the classification codes corresponding to the classification vector, to the unclassified information corresponding to the unknown vector and stores it (step S26). In this way, unclassified information can be handled in the same way as classified information. In other words, the unclassified information can be made the target of the main related information Da and the sub-related information Db through the process of linking the classification data.

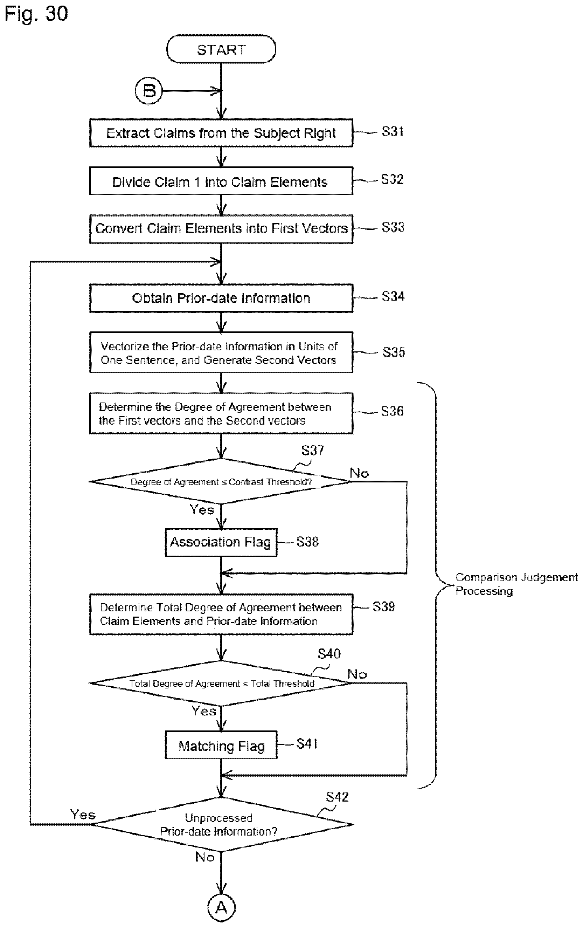

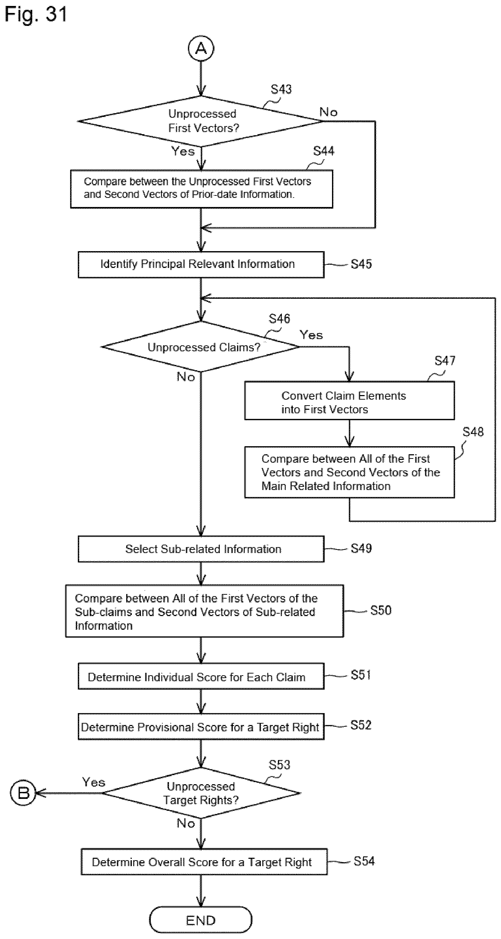

Next, referring to Figure 30 and Figure 31, the operation flow of obtaining the rating score of each target right in the data management method the Variation 1 is explained. In this section, an example of vectorizing the split target information in the prior-date information in units of one sentence is shown.

First, the matching processing means 226 extracts claims from the subject right (step S31). The matching processing means 226 extracts claim 1 from the extracted claims and applies a dividing to claim 1. In other words, the matching processing means 226 divides claim 1 into claim elements according to the division conditions set in advance. The division conditions may be set individually for each claim according to the superordinate nature of the claim, the category of the claim, etc. (Step S32).

Next, the matching processing means 226 converts one claim element into a first vector (step S33). Also, the matching processing means 226 obtains one prior-date information (Step S34). Then, the matching processing means 226 vectorizes the information to be divided such as a description in the prior-date information in units of one sentence, and generates a second vector, which is a meaning vector, for each sentence.

Next, the matching processing means 226 determine the split agreement degree, which is the agreement degree between the first vector and each of the second vectors and stores the obtained split agreement degree tied to the sentence corresponding to each second vector (Step S36). Then, the matching processing means 226 determines whether or not the split agreement degree is less than or equal to a contrast threshold for all the split agreement degrees obtained (Step S37). If the degree of divisional agreement is less than or equal to the contrast threshold (Step S37/Yes), the matching processing means 226 raises an association flag indicating that there is a high semantic association between the claim element and the sentence in connection with the degree of divisional agreement (Step S38). On the other hand, if the degree of division agreement is greater than the contrast threshold (Step S37/No), the matching processing means 226 shifts to the process of Step S39.

After completing the calculation of the split agreement between the first vector and all the second vectors of the prior-date information and the judgment process for all the split agreement (steps S36-S38), the matching processing means 226 determines the total degree of agreement between the claim element and the prior-date information based on all the obtained split agreement. For example, the matching processing means 226 may use the average or standard deviation of the split agreement degrees that are below the contrast threshold as the total degree of agreement. The matching processing means 226 may extract a specified number of split agreement degrees from the split agreement degrees that are below the contrast threshold and use the average or standard deviation of the extracted split agreement degrees as the total degree of agreement. The matching processing means 226 may use the smallest one of the split agreement degrees that are below the contrast threshold as the total degree of agreement. Then, the matching processing means 226 stores the determined total degree of agreement by associating it with the claim element and the prior-date information (Step S39).

Next, the matching processing means 226 determines whether the total degree of agreement obtained is less than or equal to the total threshold (step S40). If the total degree of agreement is less than or equal to the total threshold (Step S40/Yes), the matching processing means 226 raises a matching flag indicating that there is a high semantic relevance between the claim element and the prior-date information in connection with the total degree of agreement (Step S41). On the other hand, if the total degree of agreement is greater than the total threshold (step S40/No), the matching processing means 226 shifts to the process of step S42.

If there is any unprocessed prior-date information among the plurality of prior-date information extracted by the extraction processing means 225 (Step S42/Yes), the matching processing means 226 shifts to Step S34. That is, the matching processing means 226 executes a series of processes from step S34 to step S41 for all the prior-date information.

After completing the comparison judgment processing for all the prior-date information (step S42/No), the matching processing means 226 judges whether or not there is an unprocessed claim element in claim 1, that is, whether or not there is an unprocessed first vector for claim 1 (step S43). The comparison judgment process refers to the series of steps S36 to S41 of Figure 30, or a process similar to the said process. If there is no unprocessed first vector (Step S43/No), the matching processing means 226 shifts to the process of Step S45. On the other hand, if there is an unprocessed first vector (Step S43/Yes), the matching processing means 226 performs a comparison judgment process between the first vector and a plurality of second vectors of each of all prior-date information. If there is a plurality of unprocessed first vectors, the matching processing means 226 performs the comparison judgment process for all the first vectors. As a result, the matching processing means 226 completes the derivation of the total matching degree associated with each of the combinations of all claim elements and all prior-date information of claim 1 (step S44).

Next, the matching processing means 226 identifies the principal relevant information Da, which is the prior-date information that is presumed to be closest to claim 1. The principal relevant information Da is prior -date information that is the main part of the establishment of the logic for denying novelty or inventive step, and corresponds to what is called "Principal Reference Invention" in Japan and "Closest Prior Art" in Europe. The matching processing means 226, for example, designates the prior-date information with the highest number of match flags as the main related information Da (step S45).

Next, the matching processing means 226 judges whether there are any unprocessed claims in the target right (Step S46), and if there are no unprocessed If there are no unprocessed claims (Step S46/No), it shifts to the process of Step S49. On the other hand, if there are unprocessed claims (Step S46/Yes), the matching processing means 226 applies division processing to the unprocessed claims and converts the claim elements into first vectors (Step S47). Then, the matching processing means 226 performs a comparison judgment process between all the generated first vectors and each second vector of the main related information Da (Step S48) and shifts to the process of Step S46.

After completing the comparative judgment process for all claims (step S46/No), the matching processing means 226 selects one or more sub-related information Db, which is semantically related to the main related information Da, from among all the prior-date information. The sub-related information Db can be used in combination with the main related information Da to construct a logic for denying the inventive step. For example, the matching processing means 226 obtains the degree of agreement between the classification vector attached to the main related information Da and the classification vector attached to the prior-date information, and selects the prior-date information whose obtained degree of agreement is less than or equal to the sub-threshold as the sub-related information Db.

The matching processing means 226 may select sub-related information Db up to a predetermined specified number. In this case, the matching processing means 226 may select the sub-related information Db in order from the sub-related information Db that is presumed to be more useful in terms of denying the inventive step. For example, for each claim element of claim 1, the matching processing means 226 may preferentially select, as the sub-related information Db, the prior-date information that has a matching flag for a claim element that does not have a matching flag for the main related information Da. Otherwise, for each claim element of all claims, the matching processing means 226 may preferentially select as sub-related information Db the prior-date information that has a matching flag for a claim element that does not have a matching flag in the main related information Da (step S49).

Next, the matching processing means 226 performs a comparison judgment process between all first vectors of the sub-claims (claims 2 and after) and the plurality of second vectors of each sub-related information Db, respectively. This completes the calculation of the total degree of agreement between each claim element in the subject right and the main related information Da and all sub-related information Db, and the agreement database as illustrated in Figure 23 is created (Step S50).

The rating processing means 227 determines an individual score for each claim based on the total degree of agreement between each claim element in the subject right and the main related information Da and all sub-related information Db. The rating processing means 227 may determine the individual evaluation value of the claim by any of the methods described above, and determine the individual score from the determined individual evaluation value (refer to "calculation based on the mean or standard deviation of the total degree of agreement" and "calculation based on the percentage of agreement flags"). In this case, for example, a score table that associates a plurality of numerical ranges corresponding to the individual evaluation values with a plurality of individual scores may be stored in the memory unit 23 or the like. Then, the rating processing means 227 may determine individual scores by referring the obtained individual evaluation values to a score table. Alternatively, a plurality of individual scores set in stages and a plurality of threshold values corresponding to numerical boundaries between individual scores may be stored in a memory unit 23, etc., and the rating processing means 227 may obtain the individual scores from the comparison process between the obtained individual rating values and the threshold values. The rating processing means 227 may directly determine the individual score, as in the "calculation of the individual score by the stepwise evaluation of novelty and inventive step" described above (Step S51).

Next, the rating processing means 227 determines a provisional score, a provisional overall score. For example, when there is only one claim in the claims section, the rating processing means 227 may use the individual score as the provisional score. When there are multiple claims in the claims section, the rating processing means 227 may use the highest individual score as the provisional score. In addition, when there are multiple claims in the claims section, the rating processing means 227 may convert all individual scores into numerical values and obtain a provisional score by calculation using each of the converted numerical values. In this case, it is preferable to assign a numerical value for conversion to each of the individual scores that are set in stages. Then, a provisional score may be obtained by threshold processing, etc., on the calculated value obtained from each value of all individual scores converted numerically (Step S52).

As long as there are unprocessed target rights (step S53/Yes), the evaluation processing means 122b performs a series of processes of steps S31 to S52 for the target rights. In other words, the matching processing means 226 performs the series of steps S31 to S52 for all the target rights and obtains and stores the individual scores and provisional scores for each of all the target rights. When the process of determining individual and provisional scores for each of all target rights is completed (Step S53/No), the rating processing method 227 adjusts the provisional score for each target right by comparing the provisional scores, etc. for each target right relative to each other, and determine an overall score indicating the relative validity among the target rights.

The rating processing means 227 makes corrections to the provisional score as necessary, however, the provisional score and the overall score may be identical. The rating processing means 227 may determine an overall score that indicates the relative validity of all subject rights in a group classified according to predetermined conditions. For example, the overall score may represent the relative validity in the technical field to which the invention or device of the subject right belongs, or it may represent the relative validity in any period of time to which the filing date of the subject right belongs (Step S54).

Thereafter, at the time of updating the database 5a for each update period, the evaluation processing means 122b calculates the rating scores, etc., for the subject rights for which the claims have been corrected, etc., and for the subject rights that have been added, based on the differences in the rights-related information for each country in the world. At that time, the evaluation processing means 122b performs a minimum update process based on the changes, such as updating only the individual scores of the claims that have been amended, etc. Then, the evaluation processing means 122b performs relative adjustment of each overall score to achieve consistency among all the subject rights or among multiple subject rights based on a predetermined categorization. Next, the construction processing means 22c updates the database in the output database section 25 based on the information added or changed by the evaluation processing means 122b, and the information processing means 32a updates the database 5a based on the database.

The above explanation of the operation was given in the order of the step numbers attached to Figures 30 and 31, but is not limited to this. For example, the processing for claims (steps S31 to S33) and the processing for prior-date information (steps S34 and S35) may be swapped in order or may be performed in parallel. In addition, although the example of vectorizing the information to be divided into prior-date information in units of a single sentence is shown above, the matching processing means 226 may convert two or more sentences together into a single second vector. The number of sentences to be vectorized is not necessarily uniform for each prior-date information, and the number of sentences to be combined may be determined according to the length of a sentence, for example. However, vectorization on a sentence-by-sentence basis is preferable, in order to identify the highly relevant description part with high accuracy. By including information on the association flag corresponding to each sentence, together with the rating score for each target right, in the data provided to an external device such as an information terminal 40 via the data providing device 30, is possible to clearly indicate where the content with relatively high relevance to the claim element is described, thereby improving usability. The matching processing means 226 may raise only one of the association flags and the matching flag, or may not raise both.

The rating processing means 227 may omit the processing of step S52 in which the provisional score is determined. In this case, the rating processing means 227 determines the overall evaluation value, which is an index of the validity of the target rights, based on each total degree of agreement obtained by the matching processing means 226. The rating processing means 227 may determine the overall score by an operation using the individual evaluation values, by an operation using the total degree of agreement, or by an operation using both the individual evaluation values and the total degree of agreement. If there is only one claim in the claims section, the individual evaluation value can be used as the overall evaluation value. Even if there are multiple claims, one of the individual evaluation values corresponding to each claim may be used as the overall evaluation value. Namely, the purpose of the analysis processing section 22A of the Variation 1 is to determine the individual score for each claim and the overall score for each subject right. As far as that purpose can be achieved, the configuration and processing procedure may be changed as appropriate.

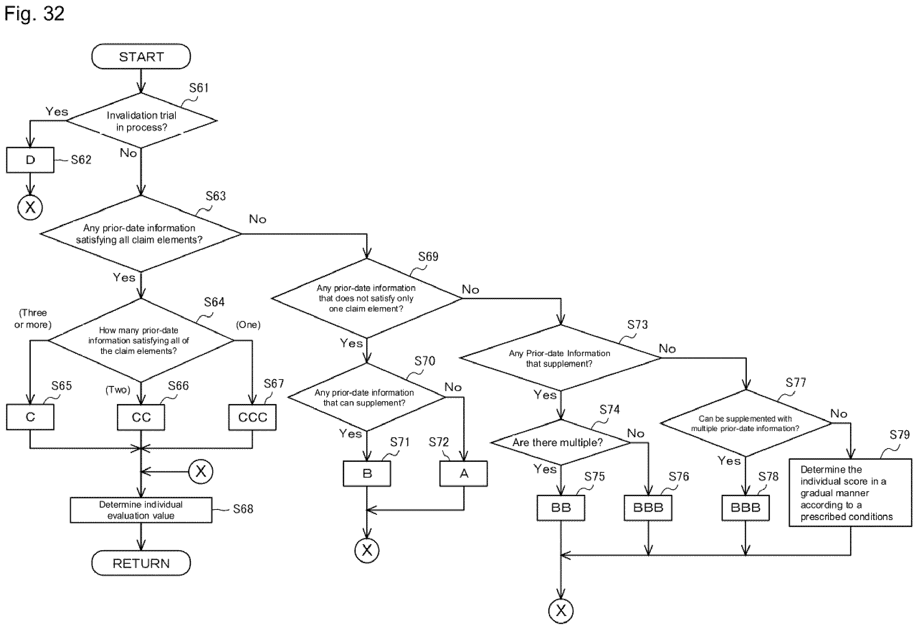

Referring to Figure 32, an example of the operation of deriving individual scores from the perspective of novelty and inventive step in the data management method in the Variation 1 is explained. Figure 32 is a flowchart illustrating the process of deriving an individual score for a claim as an object of analysis. Here is an example of the process wherein the individual scores are set, in order from the top, "AAA," "AA," "A," and BBB," "BB," "B," "CCC," " CC," "C," and "D." The evaluation processing means 122b extracts each prior-date information from the main related information Da identified in step S45 of Figure 31 and the sub-related information Db selected in step S49 of Figure 31 and performs the following process.

The evaluation processing means 122b determines whether or not an invalidation trial is requested for the claim to be analyzed. The information indicating that an invalidation trial has been requested for the claim is collected in advance by the collection processing means 122a from outside as rights-related information or invention-related information and stored in the collection database section 24, etc. (Step S61). If an invalidation trial is requested for the claim (Step S61/Yes), the evaluation processing means 122b sets the individual score of the claim as "D" (Step S62). If no invalidation trial is claimed for the claim (Step S61/No), the evaluation processing means 122b determines whether there is prior-date information that satisfies all claim elements, that is, whether at least one prior-date information satisfies all claim elements (Step S63).

If there is prior-date information that satisfies all claim elements (step S63/Yes), the rating processing means 122b determines an individual score according to the number of prior-date information that satisfies all claim elements (step S64). In the example of Figure 32, the rating processing method 227 assigns an individual score of "CCC" or lower to the claim when there is prior-date information that satisfies all the claim elements. In the Variation 1, no novelty is associated with "CCC" or lower. More specifically, the evaluation processing means 122b sets the individual score of the claim to "C" when there are three or more prior-date information satisfying all the claim elements (step S65). The evaluation processing means 122b sets the individual score of the claim as "CC" when there are two prior-date information that satisfy all the claim elements (Step S66). The evaluation processing method 122b sets the individual score of the claim as "CCC" when there is only one prior-date information that satisfies all the claim elements (Step S67). Then, the evaluation processing means 122b determines the individual evaluation value based on, for example, the total degree of agreement associated with the prior-date information that satisfies all claim elements and the number of prior-date information (Step S68).

If there is no prior-date information that satisfies all claim elements (Step S63/No), the evaluation processing means 122b determines whether there is prior-date information that does not satisfy only one claim element, that is, prior-date information that is novel to only one claim element (Step S69). If there is prior-date information that does not satisfy only one claim element (step S69/Yes), the evaluation processing means 122b determines whether there is prior-date information that can supplement the prior-date information, i.e., prior-date information that satisfies a claim element that is not satisfied by the prior-date information (step S70). Here, the prior-date information that does not satisfy only one claim element is referred to as "main related information".

If there is prior-date information that satisfies a claim element that is not satisfied by the main related information (step S70/Yes), the evaluation processing means 122b sets the individual score of the claim to "B" (step S71). Then, for example, the evaluation processing means 122b determines the individual evaluation value using the total degree of agreement associated with the one or more main related information and the total degree of agreement associated with the one or more prior-date information that can complement the main related information (step S68). If there is no prior-date information that satisfies a claim element that is not satisfied by the main related information (step S70/No), the evaluation processing method 122b assigns an individual score of "A" or higher to the claim. In the Variation 1, existence of an inventive step is assigned to "A" or higher. In Figure 32, an example of assigning an individual score of "A" to the claim is shown (Step S70). Then, the evaluation processing means 122b determines the individual evaluation value using, for example, the total degree of agreement associated with one or more main related information (Step S68).

If there is no prior-date information that does not satisfy only one claim element (Step S69/No), the evaluation processing means 122b extracts the prior-date information with the least number of unsatisfied claim elements. The prior-date information to be extracted here is referred to as "main related information. The evaluation processing means 122b judges whether or not there is any prior-date information that can independently supplement the main related information, that is, whether or not there is any prior-date information that independently satisfies all of the plurality of claim elements that are not satisfied by the main related information (step S73). If there is a plurality of prior-date information that can independently supplement the main related information (step S73/Yes, step S74/Yes), the evaluation processing means 122b assigns an individual score of "BB" to the claim (step S75). If there is only one prior-date information that can independently complement the main related information (Step S74/No), the evaluation processing means 122b assigns an individual score of "BBB" to the claim (Step S76). Then, the evaluation processing means 122b determines the individual evaluation value using, for example, the total degree of agreement associated with the main relevant information and the prior-date information that can independently complement the main relevant information (Step S68).

If there is no prior-date information that can independently supplement the main related information (step S73/No), the evaluation processing means 122b determines whether the main related information can be supplemented with multiple prior-date information. Here, the state in which the main related information can be supplemented with the plurality of prior-date information means that there exists prior-date information that satisfies at least one of the plurality of claim elements that are not satisfied by the main related information, and the combination of such prior-date information satisfies all of the plurality of claim elements that are not satisfied by the main related information (Step S77). If the main related information can be supplemented with multiple prior-date information (Step S77/Yes), the evaluation processing means 122b assigns an individual score of "BBB" to the claim (Step S78). Then, the evaluation processing means 122b determines the individual evaluation value using, for example, the total degree of agreement associated with the main relevant information and the plurality of prior-date information that can supplement the main relevant information (Step S68).

In the case where the main relevant information cannot be supplemented even by a combination of the plurality of prior-date information (step S77/No), the evaluation processing means 122b assigns an individual score of "A" or higher to the claim. In the case where the main relevant information cannot be supplemented even by a combination of the plurality of prior-date information, which of the individual scores "A", "AA", or "AAA" is to be assigned is determined, for example, by the following conditions.

(a) the condition that at least one of the plurality of claim elements that is unsatisfied in the primary relevant information is satisfied by the other prior-date information. (b) the condition that none of the plurality of claim elements that are not satisfied by the primary relevant information is satisfied by the other prior-date information.

In the case where the condition (a) is satisfied, the claim may be assigned "A" or "AA". Whether to use "A" or "AA" may be judged by the number of claim elements that are not satisfied by the main related information, the number of claim elements that can be supplemented by combining multiple prior-date information, and so on. In the case where the condition (b) is satisfied, the claim may be assigned "AAA".

The rating processing means 227 may determine an individual score for a certain claim using the total degree of agreement associated with the main related information and the total degree of agreement associated with all or part of the prior-date information associated with the claim. For example, when the sub-related information Db is narrowed down by the selection condition, the rating processing means 227 may determine the individual rating value as the ratio of the number of matching flags to the product of the number of claim elements and the total number of prior-date information extracted by the extraction processing means 225. In this case, the first threshold value, which is the boundary between "A" and "AA", and the second threshold value, which is the boundary between "AA" and "AAA", may be saved in the memory 23 or the like. Then, the rating processing means 227 may determine the individual score by comparing the obtained individual rating value with at least one of the first and second threshold values (step S79).

The evaluation processing means 122b obtains individual scores for one or more claims included in each subject right by a series of steps S61 to S79, as described above. The above explanation of the operation has been given in the order of the step numbers attached to Figure 32, however, the order of each process can be varied as far as the objective of obtaining an individual score for each claim can be achieved.

As described above, the data analysis device 20A in the Variation 1 comprises the matching processing means 226 that converts one or more claim elements of the claims in the subject right into the first vector, which is a meaning vector, and also converts some or all of each of the plurality of prior-date information into the second vector, which is a meaning vector for each divided data. The matching processing means 226 determines the total matching degree, which is the degree of matching between the claim elements of the claim in the subject right and each of the prior-date information, by comparing first vector and second vector with each other. The data analysis device 20A also comprises a rating processing means 227 that determines an individual score, which is an index of validity of the claim, based on each total degree of agreement determined by the matching processing means 226. The rating processing means 227 utilizes the individual scores for all the target rights to determine the overall score, which indicates the relative validity of the rights among multiple target rights. Here, since the total degree of agreement based on the comparison of meaning vectors reflects the semantic relevance of the claim elements and the prior-date information, obtaining the individual score and the overall score based on the total degree of agreement enables a rating with high accuracy.

The rating processing means 227 may determine an overall rating value based on each total degree of agreement determined by the matching processing means 226 and may also determine an overall score indicating the relative validity of the rights among the plurality of target rights by relative comparison of the overall rating values of each of the plurality of target rights. In this way, a rating with high accuracy can be achieved. In such a configuration, the rating processing means 227 may determine an individual score based on each total degree of agreement determined by the matching processing means 226. An invalidation trial or an opposition may be requested for each claim. In other words, whether a right is valid or invalid is determined on a claim-by-claim basis. Therefore, there is a certain need not only for the validity of each subject right, but also for the validity of each claim. In this regard, the rating processing means 227 has a function to obtain an individual score for each claim of a certain subject right. This enables more practical information to be provided.

Also, the matching processing means 226 identifies the main related information Da, which is the prior-date information having the highest semantic similarity to the claim, based on the total matching between the claim element associated with the claim of the subject right and the prior-date information. Then, the matching processing means 226 selects one or more prior-date information Db that has relatively high semantic relevance to the identified main related information Da as the sub-related information Db. That is, the matching processing means 226 selects, as sub-related information Da, the sub-related information Db to which a classification vector whose agreement with the classification vector associated with the main related information Da is less than or equal to a sub-threshold is associated from among each of the sub-related information Db other than the main related information Da. The rating processing means 227 determines the individual score of the claim by using the total degree of agreement, which is the degree of agreement between the claim and the main related information Da and one or more sub-related information Db. Since the sub-related information Db is prior-date information that is relatively easy to combine with the main related information Da, the accuracy of the individual score, etc. based on the total degree of agreement is increased, and thus highly reliable information on the validity of the subject right can be provided.

The data analysis device 20A comprises a collection processing means 122a that generates a classification vector corresponding to each of the explanatory data by vectorizing each of the explanatory data of the classification codes included in the information of the patent classification through natural language processing. The collection processing means 122a generates the classification database 4a by associating the hierarchical data with the generated classification vector for each classification code. Therefore, the extraction processing means 225 can utilize the classification database 4a for refining the prior-date information. In addition, the matching processing means 226 can utilize the classification database 4a to identify the main related information Da and to select the sub-related information Db.

The collection processing means 122a may generate unknown vectors corresponding to the unclassified information by vectorizing some or all of the unclassified information in the prior-date information using natural language processing. The collection processing means 122a may compare the generated unknown vectors with each classification vector in the classification database 4a and select the vectors with the highest semantic similarity to the unknown vectors. Then, the collection processing means 122a may store the unclassified information corresponding to the generated unknown vectors by associating at least one of the identified classification vectors and the classification code corresponding to the classification vector. In this way, unclassified information, i.e., information in non-patent documents, can be treated in the same way as classified information. It is possible to expand the scope of the narrowing process of the prior-date information by the extraction processing method 225 and the selection process of the sub-related information Db by the matching processing means 226. In other words, the extent of the prior-date information used to contrast with the claim elements can be expanded with high accuracy, thus realizing a highly accurate validity rating for each subject right. For example, the matching processing means 226 obtains the classification vector corresponding to the classification code by comparing the classification code assigned to the main related information Da with the classification database 4a. In this way, the matching processing means 226 can select, from each prior-date information other than the main related information Da, the prior-date information to which the classification vector whose matching degree with the classification vector of the main related information Da is less than the sub threshold is associated as the sub related information Da.

The matching processing means 226 generates the first vector from the claim elements and the second vector from the split data by natural language processing based on the Transformer system encoder. As for the natural language processing by the matching processing means 226, a method employing morphological analysis may be used. However, by using natural language processing based on the Transformer system encoder for the conversion to meaning vectors, the semantic similarity between the two vectors can be obtained with higher accuracy. Similar to the above, from the aspect of accuracy of natural language processing, the collection processing means 122a may generate the classification vector and the unknown vector by natural language processing based on the Transformer system encoder.

The data management system 10 of the Variation 1 comprises a data analysis device 20A that includes matching processing means 226 and rating processing means 227, and a data providing device 30 that extracts and provides at least one of the individual scores and overall scores corresponding to an external request from a database 5a that manages individual scores and overall scores for each of a plurality of target rights obtained by the rating processing means 227. This means that the data providing device 30 does not need to perform any processing to evaluate the validity of the rights when it receives a request for data, thereby suppressing unnecessary use of the processing unit and memory, and quickly providing information on the validity of the subject rights. In addition, the database 5a contains information such as the rating scores obtained by the rating processing means 227. Therefore, users can quickly and accurately select rights that meet their needs by viewing the rating scores associated with each right on screens such as those shown in Figures 11 to 13, for example.

<Variation 2> Referring to Figure 25, the configuration and operation of the data providing system 100 in the Variation 2 is described. The data providing system 100 of the Variation 2 has a similar configuration to that of the aforementioned Variation 1. The system is characterized in that the analysis processing section 22B of the data analysis device 20B has a function to separately extract prior-date information based on a search report that is publicly available. Since the overall configuration and operation of the data providing system 100 are the same as those of the above examples and the Variation 1 described with reference to Figures 1 to 19, explanations of these equivalent configurations are omitted with the same symbols.

The evaluation processing means 222b in the analysis processing section 22B of the Variation 2 has a learning means of searching 328, a literature estimation means 329, and a rating processing means 327, together with each functional configuration possessed by the evaluation processing means 122b of the Variation 1. The learning means of searching 328 generates the literature estimation model M11 by machine learning based on the search report included in each of the rights-related information. The literature estimation model M11 is a learned model for taking data based on the scope of claims of the target right as input and outputting the prior-date information that has relatively high semantic relevance to the target right. Since the literature estimation model M11 is generated based on the search report, the prior-date information output by the literature estimation model M11 is the patent documents and non-patent documents described in the search report.

For example, the learning means of searching 328 generates and updates the literature estimation model M11 by using the identification numbers (application numbers or publication numbers, etc.) of the so-called X document or Y document in the plurality of search reports and the one or more claims to which the X or Y documents are associated as the teaching data. Here, X document is a reference that is particularly related to the corresponding claim, and denies the novelty or inventive step of the claim by alone. Document Y is a reference that is particularly related to the corresponding claim, and the inventive step is denied by a combination of the reference and one or more other references that is apparent to a person skilled in the art. Namely, the learning means of searching 328 constructs the literature estimation model M11 by machine learning using the claim or claim element as the learning data (training data) and the identification number of X document or Y document as the correct answer label. More specifically, the learning means of searching 328 utilizes the information obtained by applying natural language processing to the claims or claim elements as learning data. For natural language processing, methods such as conversion to meaning vectors and methods using morphological analysis can be used.

The literature estimation means 329 inputs the information based on the scope of claims in the subject right into the literature estimation model M11 generated based on the information on the scope of claims and the literature information that is considered to be a reference for rejection, which is included in the search report, and estimates the literature that is considered to be a reference for rejection of the subject right. The literature estimation means 329 generates input data for a plurality of predetermined target rights by applying natural language processing to the claims or claim elements of the target rights. Then, by inputting the generated input data into the literature estimation model M11, the literature estimation means 329 outputs the identification number of one or more prior-date information or information indicating that there is no relevant literature. It is preferable that the literature estimation means 329 performs the output of the relevant literature by the literature estimation model M11 for all claims or all claim elements in the target right. The literature estimation method 329 may perform the output of the relevant literature by the literature estimation model M11 for all the target rights, or it may perform the output of the relevant literature by the literature estimation model M11 for the target rights that satisfy the predetermined conditions.

The rating processing means 327 reflects the information of the literature estimated by the literature estimation means 329 to at least one of the individual scores and the overall score. The rating processing means 327 may obtain an overall score for each target right based on the overall evaluation value of all target rights and the output result by the literature estimation means 329. For example, if the prior-date information determined by the literature estimation means 329 is present in the prior-date information extracted as the main related information Da or the sub-related information Db, the rating processing means 327 may adjust the prior-date information by weighting or the like so that the total degree of agreement of the prior-date information decreases, and then determine the overall rating value of the subject right again. If the prior-date information obtained by the literature estimation means 329 is not found among the prior-date information extracted as the main relevant information Da or the sub-relevant information Db, the rating processing means 327 may add the prior-date information as the sub-relevant information Db. In this case, the rating processing means 327 determines a new overall rating value for the subject right using the total degree of agreement for the prior-date information determined by the literature estimation means 329. The rating processing means 327 may determine an individual score for each of the claims based on the individual evaluation value of each claim and the output result by the literature estimation means 329. In this case, the rating processing means 327 may determine the individual evaluation value using the same method as the overall evaluation value.

The analysis processing section 22B can be comprised of an arithmetic device such as a CPU or GPU, and a data analysis program P11 that cooperates with the arithmetic device to realize the various functions described above and below. Namely, the data analysis program P11 is a program that enables the analysis processing unit 22B and the storage unit 23 as a computer to perform the collection processing means 122A and the storage unit 23. Other configurations, alternative configurations, and operations are the same as in the Variation 1 described above.

As described above, the data analysis apparatus 20B in the Variation 2 has literature estimation means 329 that inputs input data based on the scope of claims in the subject right into a literature estimation model M11 generated based on the information on the references included in the search report that are regarded as citation for rejection of the claims, and estimates the references that are considered as citation for rejection of the subject right. The rating processing means 327 is configured to reflect the information on the literature estimated by the literature estimation means 329 in at least one of the individual scores or the overall scores.

### <Variation 3>

Referring to Figure 26, the configuration and operation of the data providing system 100 in the Variation 3 is described. The data providing system 100 of the Variation 3 has the same configuration as that of the Variation 1 described above. The analysis processing section 22C of the data analysis device 20C has a function of estimating the possibility that each subject right includes a reason for invalidation for deficient description based on documents about reasons for rejection (notice of reasons for refusal, decision of refusal, etc.) that are publicly disclosed. Since the overall configuration and operation of the data providing system 100 are the same as those of the above examples and the Variation 1 described with reference to Figures 1 to 19, explanations are omitted with the same symbols for the equivalent configurations.

The evaluation processing means 322b in the analysis processing section 22C of the Variation 3 comprises a learning means of deficient descriptions 428, the deficiency estimation means 429, and the rating processing means 427, along with each functional configuration function of the evaluation processing means 122b of the Variation 1. The learning means of deficient descriptions 428 generates the deficiency estimation model M21 by machine learning based on the notice of reasons for rejection relating to deficient description and the claims of the application for which the notice of reasons for rejection is notified. In the Variation 3, deficient description refers violation of support requirements, clarity requirements, enablement requirements, etc.

A notice of reasons for rejection containing a violation of a support requirement may include, for example, a combination of letters and numbers, such as "Art. 36.6.1" in Japan, "Art. 84" in Europe, and "112(a)" in the United States. A notice of reasons for refusal containing a violation of the clarity requirement would include, for example, a combination of letters and numbers such as "Art. 36.6.2" in Japan, "Art. 84" in Europe, and "112(b)" in the United States. A notice of reasons for refusal containing a violation of the enablement requirement includes, for example, a combination of letters and numbers such as "Art. 36.4.1" in Japan, "Art. 83" in Europe, and "112(a)" in the United States. Such information indicating the article number corresponding to the incomplete description is referred to as "incomplete article data.

The learning means of deficient descriptions 428 extracts a plurality of notices of reasons for refusal including the deficient article data, and extracts an identification number for the application from each of the extracted notices of reasons for refusal. Also, the learning means of deficient descriptions 428 obtains the claims for the application based on the extracted identification numbers. Then, the learning means of deficient descriptions 428 generates and updates the deficient description estimation model M21 by machine learning using the claims or claim elements as the training data and the information to the effect that the description is incomplete as the correct answer label. More specifically, the learning means of deficient descriptions 428 utilizes the information obtained by applying natural language processing to the claims or claim elements as the learning data. For natural language processing, methods such as transforming into meaning vectors or using morphological analysis are available. In terms of processing accuracy, natural language processing based on the Transformer encoder is preferable. The deficient description estimation model M21 is a learned model for inputting data based on the claims of the subject right and outputting the percentage of deficiencies, which is the percentage of the subject right that has a reason for invalidation related to deficiencies in the description. The deficient description estimation model M21 has the function to output the deficiency ratio for each claim.

The deficiency estimation means 429 inputs the information based on the scope of claims in the subject right into the deficient description estimation model M21, which is generated based on the identification number of the application and the deficiency article data indicating the article number corresponding to the deficiency in the description, contained in the document concerning the reason for rejection. Then, the deficiency estimation means determines the deficiency ratio, which is the ratio of the target right having the invalidity reason related to the deficient description. The deficiency estimation means 429 generates input data by applying natural language processing to the claims or claim elements of the target rights for a plurality of target rights that have been set in advance. In terms of processing accuracy, the deficiency estimation means 429 may perform natural language processing based on the Transformer encoder. Then, the deficiency estimation means 429 determines and stores the deficiency ratio of the subject right and its claims by inputting the generated input data into the deficient description estimation model M21. The deficiency estimation means 429 may perform the estimation process of the deficiency ratio by the deficient description estimation model M21 for all claims or all claim elements in the subject right. The deficiency estimation means 429 may perform the estimation process of the deficiency ratio by the deficient description estimation model M21 for all the subject rights.

The rating processing means 427 reflects the deficiency ratio determined by the deficiency estimation means 429 to at least one of the individual scores and the overall scores. For example, the rating processing means 427 may add a total adjusted value based on the deficiency ratio to the total evaluation value of each target right. In this case, a total adjustment table that relates the percentage of deficiencies to the total adjustment value may be stored in the memory unit 23 or the like. The total adjustment table may be formed in such a way that the total adjustment value becomes smaller as the deficiency ratio becomes higher. The total adjustment value may be a positive value, a negative value, or a combination of these values. Instead of the total adjustment table, a graph or function relating the percentage of deficiency to the total adjustment value may be used. According to the configuration, the rating processing means 427 can determine the total adjustment value by referring to the percentage of deficiencies determined by the deficiency estimation means 429 to the total adjustment table, etc. The total adjustment value may be added to the overall evaluation value only for the target rights whose deficiency ratio is equal to or greater than a predetermined deficiency threshold.

The rating processing means 327 may add an individual adjustment value based on the deficiency ratio to the individual evaluation value of each claim. For example, the rating processing means 427 may add an individual adjustment value based on the deficiency ratio to the individual evaluation value of each claim. In this case, an individual adjustment table that relates the deficiency ratio and the individual adjustment value may be stored in the memory unit 23 or the like. The individual adjustment table may be formed in such a way that the individual adjustment value becomes smaller as the deficiency ratio becomes higher. The individual adjustment values can be positive values, negative values, or a combination of these values. Instead of an individual adjustment table, a graph or function relating the percentage of deficiencies to the individual adjustment value may be used. According to the configuration, the rating processing means 427 can determine the individual adjustment value by referring to the individual adjustment table or the like for the deficiency ratio determined by the deficiency estimation means 429. The individual adjustment value may be added to the individual rating value only for claims for which the deficiency ratio is greater than or equal to a predetermined deficiency threshold.

The analysis processing unit 22C can be composed of an arithmetic device such as a CPU or GPU, and a data analysis program P21 that cooperates with such arithmetic device to realize the various functions described above and below. In other words, the data analysis program P21 is a program that makes the analysis processing unit 22C and the memory unit 23 as computers function as the collection processing means 122a, the evaluation processing means 322b, and the construction processing means 22c. Other configurations, alternative configurations, and operations are the same as in the Variation 1 described above.

As described above, the data analysis device 20C in the Variation 3 comprises deficiency estimation means 429 for determining a deficiency ratio with respect to the subject right by inputting information based one claims in the subject right into a deficient description estimation model M21 generated based on an identification number of an application included in a document concerning a reason for rejection and deficiency article data indicating an article number corresponding to the deficiency. As described above, the data analysis device 20C in the Variation 3 comprises deficiency estimation means 429 for determining a deficiency ratio with respect to the subject right by inputting information based one claims in the subject right into the deficient description estimation model M21 generated based on an identification number of an application included in a document concerning a reason for rejection and deficiency article data indicating an article number corresponding to the deficiency. Then, the rating processing means 327 is configured to reflect the deficiency ratio obtained by the deficiency estimation means 429 in at least one of the individual scores and the overall scores. Therefore, according to the data analysis device 20C, not only the novelty violation and the inventive step violation, but also the invalidity reasons related to the deficiencies in description such as the clarity violation can be taken into account in rating the validity of the subject right, thereby improving the accuracy and reliability of the individual score and the overall score as the rating score.

The rating processing means 327 may determine the deficiency score corresponding to at least one of the subject rights and claims based on the deficiency ratio determined by the deficiency estimation means 429 as one of the rating scores and store it in the output database section 25. The deficiency score can be provided to the public as information indicating the validity in terms of deficiency in description. This meets the need to separate novelty and inventive step from deficiency in description. The analysis processing section 22C may be configured without the learning means of deficient description 428, and the deficiency estimation means 429 may use the deficient description estimation model M21 generated externally. Other effects, etc. are the same as in the Variation 1 described above.

The data analysis device 20C may comprise the characteristic configuration of the Variation 2. That is, the evaluation processing means 322B may be configured to have literature estimation means 329. In this case, the literature estimation model M11 is stored in memory 23 or elsewhere. The rating processing means 327 may reflect the information on the literature estimated by the literature estimation means 329 and the percentage of deficiencies determined by the deficiency estimation means 429 in the rating score for each subject right. The rating processing means 322b may be configured to have a learning means of searching 328.

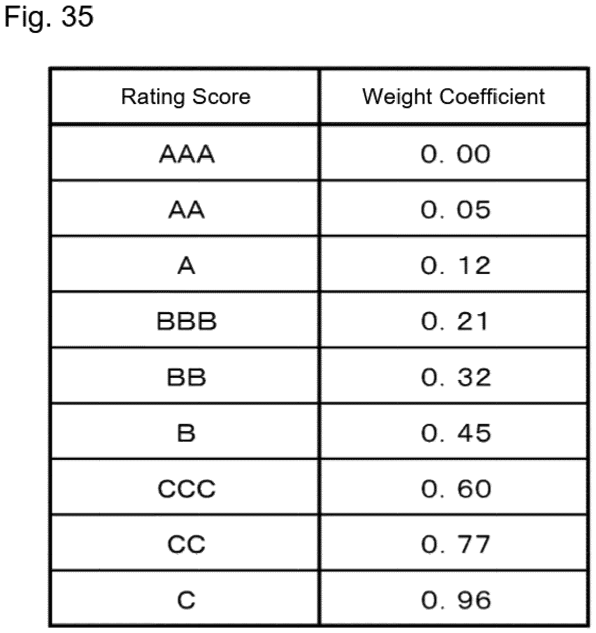

<Variation 4> Referring to Figure 35, the configuration and operation of the data providing system 100 in the Variation 4 of the Embodiment 1 is described. The information processing means 32a in the providing processing unit 32 of the Variation 4 has a function for calculating an estimated amount of cost-cutting for each assignee. The estimated cost-cutting amount is a calculated amount based on a rating score and is an estimated amount of the annuity that can be reduced if some or all of the existing rights are abandoned.

Figure 35 shows an example of a cost-cutting table that corresponds a rating score to a weight coefficient. The cost-cutting table is configured so that the weight coefficients gradually increase as the rating score goes from higher to lower. The cost-cut table is table information stored in the memory section 33, etc., and the rating score and weight coefficient can be changed as needed. For example, different cost cut tables are stored in the memory 33 for each legal region. In Figure 35, the rating scores are, in order from the highest to the lowest, "AAA," "AA," "A," BBB," "BB," "B," "CCC," CC" and "C", an example of nine levels. The weight coefficients in Figure 35 are only examples. Namely, the weight coefficients can be set and adjusted as desired.

The information processing method 32a determines the estimated cost-cutting amount by adding up the sum of the annuity for the remaining period of one right multiplied by the weight factor corresponding to the rating score assigned to the right, for all rights of the assignee. The information processing means 32a determines the weight coefficient corresponding to the rating score by comparing the rating score assigned to the right with the cost-cutting table. The information processing means 32a stores the obtained estimated cost-cutting amount as well as the information for reducing the estimated cost-cutting amount in the database in the providing database section 35. The information to reduce the estimated cost-cutting amount includes information on rights to be waived.

Here, the combination of the estimated cost-cut amount and the information for reducing the estimated cost-cut amount is referred to as cost-cut information. When a user requests cost-cutting information of a certain assignee via the information terminal 40, the information processing means 32a reads the cost-cutting information pertaining to the request from the database in the providing database section 35 and provides it to the user. The information processing means 32a may store the cost-cut information in the storage section 23.

The information processing method 32a may also determine the assumed cost-cutting amount based on one or more rating scores of a predetermined lower level. That is, the information processing means 32a may obtain the estimated cost-cutting amount by adding up the sum of the annuity according to the remaining period of the rights of a certain assignee that have been granted a "C" or a "CC" or a "C," for example, for the number of rights. The information processing method 32a may perform the calculation of the estimated cost-cutting amount using the information on the elapsed time from the filing of the right. For example, the information processing method 32a may calculate the estimated cost-cutting amount for a right for which a predetermined period of time has elapsed since the filing of the application, such as a right for which more than 10 years have elapsed since the filing of the application, using each of the above methods.

The information processing means 32a may determine the estimated cost-cutting amount by each of the above methods in response to an instruction by the user. That is, the information processing means 32a may determine the estimated cost-cutting amount by each of the above methods when the user specifies, via the information terminal 40, the assignee and at least one of the rating scores. The information processing means 32a may also obtain the estimated cost-cutting amount by each of the above methods when the user specifies, via the information terminal 40, the assignee, at least one of the rating scores, and the elapsed time from filing.

As described above, the information processing method 32a of the Variation 4 determines the estimated cost-cutting amount by at least one of the above methods and provides the cost-cutting information to the user via the information terminal 40. Therefore, the user can quickly know the cost-cutting method and the amount of cost-cutting without performing any specialized calculation, and thus can perform economical and useful IP management. For example, the function for calculating the estimated amount may be assigned to the construction processing means 22c of the analysis processing section 22. In this case, the construction processing means 22c may store the obtained cost-cutting information in a database in the output database section 25. As a result, the information processing means 32a can store the cost-cutting information in a database in the providing database section 35 and can provide the user with the cost-cutting information as appropriate. The configuration of the Variation 4 may be applied to the configurations of the Variation 1 to the Variation 3 described above.

### Embodiment 2

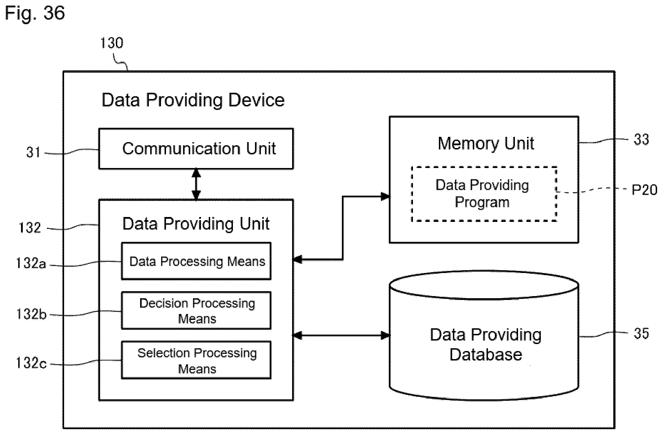

Referring to Figures 36 to 40, examples of configurations, etc. related to the data provision system and its surrounding environment in the Embodiment 2 is described, particularly with respect to the differences from the Embodiment 1 described above. The data provision system in the Embodiment 2 is characterized in that a limit is set on the number of products sold. The same symbols are used for the same configuration as in the data provision system of the Embodiment 1 described above, and explanations are omitted.

As shown in Figure 36, the data providing device 130 has a communication unit 31, the data providing unit 132, a memory unit 33, and the data providing database 35. The memory unit 33 stores various data related to provisioning, such as validity data, as well as the operating program of the data providing unit 132, such as the data providing program P20. The data providing program P20 is used to cause the computer mounted in the data providing device 130 to function as the data processing means 132a, the decision processing means 132b, and the selection processing means 132c described below.

The provision processing section 132 has data processing means 132a, decision processing means 132b, and selection processing means 132c. The decision processing means 132b judges whether or not the number of rights offered is less than a preset limit for the rights pertaining to the validity data that have already been offered. The limit number is set to a natural number greater than or equal to 1 and is stored in memory unit 33 or the like. Since the validity data is also a commodity to be bought and sold, the number of offerings is also referred to as the "number of sales" in the following. The selection processing means 132c selects one or more resale destinations from among registered users in response to a request for resale of validity data.

The data processing means 132a is constructed based on information related to a plurality of industrial property rights, and extracts and provides validity data corresponding to an external request from a database containing validity data pertaining to the validity of each of the plurality of industrial property rights. When the judgment processing means 132a determines that the number of sales is more than the limit number by the decision processing means 132b, the data processing means 132a sends to the information terminal 40 information to the effect that the validity data corresponding to the industrial property right pertaining to the judgment cannot be provided. The data processing means 132a has the function of managing the number of sales by executing the process of increasing or decreasing the number of sales in the memory unit 33.

In addition, the data processing means 132a has a function to send resale inquiry information to the information terminal 40 pertaining to the sales destination of the validity data when an application for resale of the validity data is received. Furthermore, the data processing means 132a has a function of sending sales promotion information to the information terminal 40 corresponding to one or more resale destinations selected by selection processing means 132c when there is a request for resale of the validity data from the information terminal 40 pertaining to the sales destination of the validity data, to the effect that a purchase is approached. Other configurations of the information processing mean 132a are the same as those of the data processing means 32a in the aforementioned the Embodiment 1.

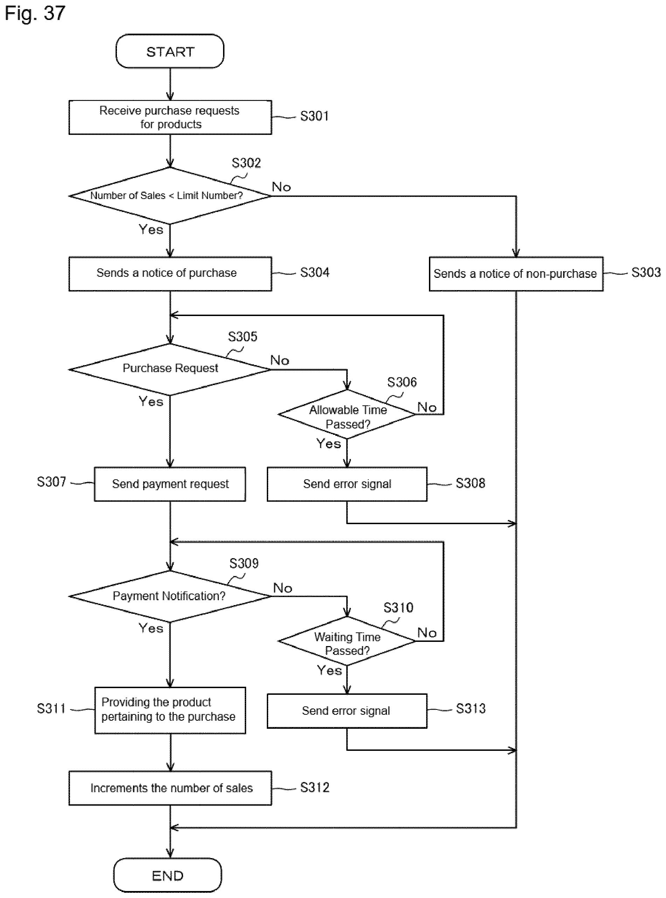

Next, referring to the flowchart in Figure 37, an example of the operation of the data provision method of the Embodiment 2 when a user processes the purchase of a product is described. This section focuses on the operation of the data providing device 30 and assumes that the user has login the system of the data providing device 30 through the initial screen G1, etc.

When the decision processing means 132b receives a request to purchase a product from the information terminal 40 (Step S301), it judges whether or not the number of the product sold is less than the limit (Step S302). If the number of items sold is greater than the limit (Step S302/No), the data providing unit 32 sends a notice of non-purchase to the information terminal 40. The information terminal 40 thereby notifies the user via terminal display unit 47 or the notification section that the specified product cannot be purchased (Step S303). On the other hand, if the number of products sold is less than the limit (Step S302/Yes), the data providing unit 32 sends a notice of purchase available to the information terminal 40 (Step S304).

The data providing unit 32 waits for a purchase request from the information terminal 40 until the allowable time has elapsed (Step S305/No, Step S306/No), and when the purchase request is sent from information terminal 40 (Step S305/Yes), it sends the payment request to the payment server 600 (Step S307). On the other hand, if the data providing unit 32 does not receive a purchase request from the information terminal 40 until the allowable time has elapsed (Step S305/No, Step S306/Yes), it sends the error signal to the information terminal 40. The information terminal 40 then notifies the user of the timeout via terminal display unit 47 or the notification section (Step S308).

The data providing unit 32 waits for a payment notification from the payment server 600 until the waiting time elapses (Step S309/No, Step S310/No), and when the payment notification is sent from the payment server 600 (Step S309/Yes), it provides the product pertaining to the purchase to the information terminal 40 (Step S311). The data providing unit 32 then increments the number of sales of the product (Step S312).

On the other hand, if no payment notification is sent from the payment server 600 before the waiting time has elapsed (Step S309/No, Step S310/Yes), the data providing unit 32 sends the error signal to the information terminal 40. The information terminal 40 then notifies the user of the timeout via terminal display unit 47 or the notification section (Step S313).

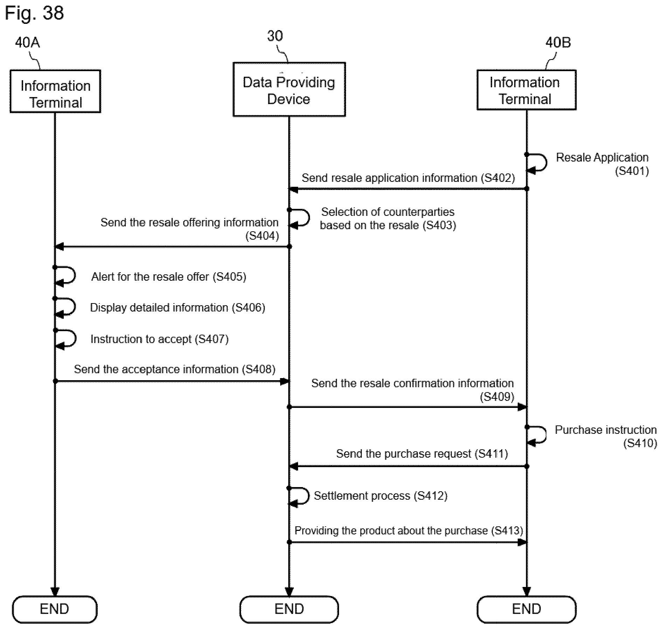

Next, referring to the sequence chart in Figure 38, an example of the operation of the data provision method of the Embodiment 2 when a user applies for resale of a product is described. In Figure 38, it is assumed that information terminal 40A is the information terminal 40 used by the user who has purchased the goods to be resold, and information terminal 40B is the information terminal 40 used by the user who has not purchased the goods to be resold. It is assumed here that the user of each information terminal 40 has login the system of the data providing device 30 through the initial screen G1, etc.

When terminal processing unit 42 of the information terminal 40B receives a resale application by the user (Step S401), it sends the resale application information to the data providing device 30 (Step S402). The selection processing means 132c selects one or more counterparties based on the resale application information (Step S403). Then, the selection processing means 132c sends the resale application information to the information terminal 40A, which is the selected party to be approached (Step S404).

The terminal processing unit 42 of the information terminal 40A causes the alert of the resale offer to be displayed on the terminal display unit 47 or reported to the reporting unit (Step S405). The terminal processing unit 42 causes detailed information about the resale alert to be displayed on the terminal display unit 47 in response to the user operation (Step S406). When the terminal processing unit 42 receives an instruction by the user to accept the resale offer (Step S407), the terminal processing unit 42 sends the acceptance information to the data providing device 30 (Step S408).

When the data processing means 132A receives the acceptance information, it sends the resale confirmation information to the information terminal 40B (Step S409). When terminal processing unit 42 of the information terminal 40B receives the purchase instruction by the user (Step S410), it sends the purchase request to the data providing device 30 (Step S411). The data processing means 132A executes the settlement process as in steps S119 to S124 of Figure 18 (Step S412). The data providing device 30 then provides the product pertaining to the user's purchase to the information terminal 40 (Step S413).

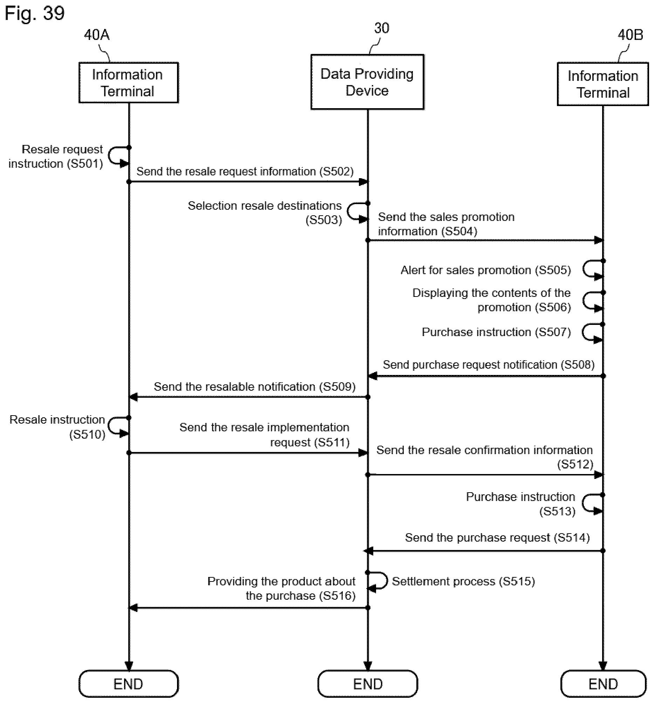

Next, referring to the sequence chart in Figure 39, an example of the operation of the data provision method of the Embodiment 2 when a user makes a request for resale of a product is described. The assumptions for information terminal 40A and 40B in Figure 39 are the same as in Figure 38. It is assumed that the user of each information terminal 40 has login the system of the data providing device 30 through the initial screen G1, etc.

When the terminal processing unit 42 of information terminal 40A receives the resale request instruction by the user (Step S501), it sends the resale request information to the data providing device 30 (Step S502). The selection processing means 132c selects one or more resale destinations from among registered users according to the resale request information (Step S503). The data processing means 132a sends the sales promotion information to the information terminal 40B corresponding to the one or more resale destinations selected by the selection processing means 132c (Step S504).

The terminal processing unit 42 of the information terminal 40B causes the alert for the promotion to be displayed on the terminal display unit 47 or reported to the reporting unit (Step S505). The terminal processing unit 42 causes detailed information about the resale request to be displayed on the terminal display unit 47 in response to the user operation (Step S506). When the terminal processing unit 42 receives a purchase instruction by the user (Step S507), it sends the purchase request notification to the data providing device 30 (Step S508), and the data processing means 132a sends the resalable notification to the information terminal 40A (Step S509).

When the terminal processing unit 42 of information terminal 40A accepts the resale instruction by the user (Step S510), it sends a resale implementation request to the data providing device 30 (Step S511), and the selection processing means 132c sends the resale confirmation information to the information terminal 40B (Step S512). When terminal processing unit 42 of the information terminal 40B receives a purchase instruction by the user (Step S513), it sends a purchase request to the data providing device 30 (Step S514). Data processing means 132a executes the settlement process in the same manner as steps S119 to S124 in Figure 18 (Step S515). The data providing device 30 then provides the product for purchase by the user to the information terminal 40 (Step S516). Other operations are the same as in the case of the Embodiment 1.

By the way, Figure 37 shows an example in which the decision processing means 132b determines whether the number of products sold is less than the limit when a purchase request for a product is received from the information terminal 40. The number of products sold is incremented by data processing means 132a at the time when the product is purchased. At that time, the decision processing means 132b may determine whether or not the number of sales of the commodity is less than the limit number. If the judgment processing means 132a determines that the number of sales is more than the limit, the decision processing means 132b may provide information to the information terminal 40 to the effect that the product corresponding to the right pertaining to the judgment cannot be provided. Alternatively, the data processing means 132a may include information to the effect that the specific product is not available for sale in the information on the screens pertaining to the purchase of the product (user screen G2, basic screen G3, detailed screen G4, list screen G5, etc.).

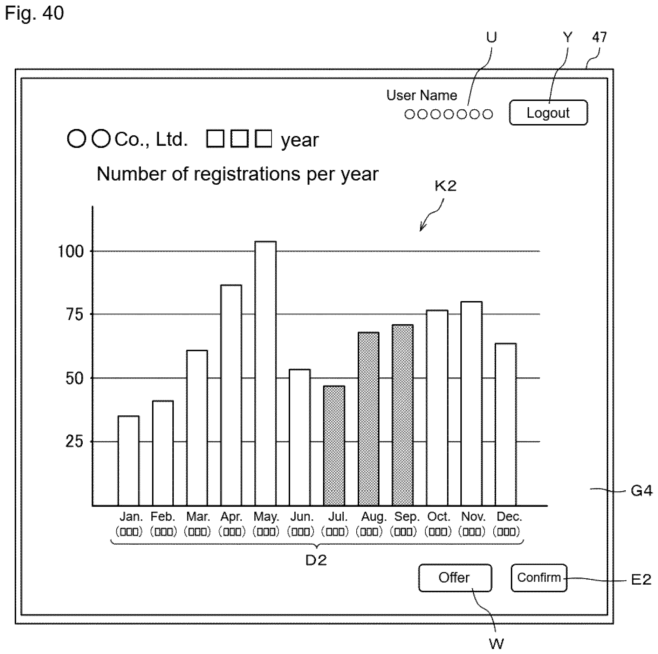

In this way, the terminal processing unit 42 of the information terminal 40 can indicate on the terminal display unit 47 that some products cannot be offered, for example, as shown in Figure 40. In Figure 40, the method of changing the form of the bar graph as information to the effect that a product is not available for purchase is shown as an example (see July to September in Figure 40), but it is not limited to this method, the fact that a product is not available for purchase may be indicated by text or icons. The terminal processing unit 42 may display, for example, an offer button W for applying for resale of the product on the display screen of the terminal display unit 47, along with the information that the product is not available for purchase.

As described above, the data providing device 130 of the Embodiment 2 is designed to extract the validity data corresponding to external requests from a pre-built database. Therefore, when the data providing device 130 receives a request for data, it does not need to perform processing to evaluate the validity of the right, thereby reducing wasteful use of processing sections and memory and enabling it to promptly provide information on the validity of industrial property rights.

The data providing unit 132 has a decision processing means 132b that determines whether or not the number of rights provided with validity data (number of sales) is less than the limit. The data processing means 132a sends the information that cannot be provided to the information terminal 40 when the decision processing means 132b determines that the number of offerings is more than the limited number. Thus, the information terminal 40 can tell the user in advance, by means of the terminal display unit 47 (see Figure 40) or the notification section, that the particular product cannot be purchased.

When a right is designated at the information terminal 40, the decision processing means 132b may determine whether or not the number of the validity data corresponding to the right provided is less than the limit. If the judgment processing means 132a determines that the number of offerings is more than the limit, the decision processing means 132b may transmit to the information terminal 40 information stating that the validity data corresponding to the right pertaining to the judgment cannot be offered. In this way, the information terminal 40 can still inform the user that the product pertaining to the designation cannot be purchased by means of terminal display unit 47 or the notification section.

By the way, products related to industrial property rights, such as validity data, may become less necessary to the user who purchased them, for reasons such as having already fulfilled their intended use over time. In this regard, the data processing means 132a has a function to send resale inquiry information to the information terminal 40 pertaining to the sales destination of the validity data when an application for resale of the validity data is received. Thus, the information resource can be effectively utilized by promoting resale to users and others who have an excess of the product. Here, when there are multiple sellers of a product, the selection processing means 132c may select all sellers as destinations for sending resale advice information, or it may select destinations for sending resale advice information based on the period of ownership of the product, action history, and other factors.

The selection processing means 132c has the function of selecting one or more resellers from among registered users in response to a resale request for validity data. When the data processing means 132a receives a resale request for the validity data from the information terminal 40 associated with the reseller of the validity data, promotional information to the effect of approaching one or more resale destinations selected by the selection processing means 132c is sent to the information terminal 40 corresponding to the resale destinations. Thus, the needs of both the user of the resale source and the user of the resale destination can be met, and effective use of information resources can be achieved. Although the description in Form 2 focused on the resale processing of validity data, it is not limited to this, and the data providing device 130 can also perform resale processing of other products related to industrial property rights in the same manner as described above. Other effects and alternative configurations are the same as in Embodiment 1. Each of the above-described configurations of Variations 1 to 4 can also be applied to the data providing system 100 of Embodiment 2.

Each of the above-mentioned embodiments is a specific example in a data provision device, data management system, data provision system, data provision program, data analysis program, computer-readable recording medium recording a data provision program or data analysis program, data provision method, and data management method, and the technical scope of the invention is not limited to these aspects. For example, Figure 2 shows an example in which the data providing system 100 is composed of a data analysis device 20, a data providing device 30, and one or more information terminals 40, but is not limited to this. The data providing system 100 may be composed of the data providing device 30 and one or more information terminals 40, and may not include the data analysis device 20. Figure 2 also shows an example in which the data management system 10 is configured by two servers, but is not limited to this. The data management system 10 may be configured by a single server that has both the configuration and functions of the data analysis device 20 and the configuration and functions of the data providing device 30. In this case, the data management system 10 may be configured without any of the output databases sections 25 and the data providing database 35.

Furthermore, the analytical processing unit 22 may be configured without the translation processing means 121. However, it is better to use the translation processing means 121 to unify the language of the core data and then execute the learning and estimation phases to ensure a highly accurate and diverse data management system 1 0 can be constructed. The analytical processing unit 22 may be configured without the pretreatment means 122. However, if the pretreatment means 122 is provided, the accuracy of machine learning can be improved, and highly reliable products can be provided. In each of the above embodiments, an example in which the rating score is set to 7 or 9 steps is shown, but the rating score is not limited to this, and any number of step settings can be taken for the rating score.

In the above, Figures 4 to 17 and Figure 40 are examples of the display screens of terminal display unit 47. However, the mode of each display screen is not limited to the modes shown in the above figures, and each part of the display screen can be selected and discarded as appropriate. In addition, each display screen may employ a drop-down UI instead of a manual input field, a drum-roll UI instead of a drop-down UI, etc. The data providing system 100 may also be configured to provide a difference in the amount of information provided between charged and uncharged users. What information is subject to billing may be set and changed arbitrarily.

Variation 1 shows an example in which analytical processing unit 22A generates a 32-dimensional semantic vector, but the dimensions of the semantic vector are not limited to this. Variation 1 described a method of determining the degree of agreement by subtracting the cosine similarity from 1. However, the method is not limited to this, and the cosine similarity may be used directly as the degree of agreement. However, from the perspective of calculation accuracy, it is preferable to use the degree of agreement determined by subtracting the cosine similarity from 1.

### Reference numbers

4a: classification database
5a: database
10: data management system
20, 20A-20C: data analysis device
21: communication unit
22, 22A-22C: analytical processing unit
22a, 122a: collection processing means
22b, 122b, 222b, 322b: evaluation processing means
22c: construction means
23: memory unit
24: collection database section
25: output database section
30, 130: data providing device
31: communication unit
32, 132: data providing unit
32a, 132a: data processing means
33: memory unit
35: data providing database
40, 40A, 40B: information terminal
41: terminal communication unit
42: terminal processing unit
43: terminal memory unit
46: terminal input unit
47: terminal display unit
46a: search section
100: data providing system
121, 221: translation processing means
122: pretreatment means
123: learning processing means
124: estimation processing means
132b: decision processing means
132c: selection processing means
225: extraction processing means
226: matching processing means
227, 327, 427 rating processing means
328: learning means of searching
329: litarature estimation means
428: learning means of deficient descriptions
429: deficiency estimation means
500: data providing servers
600: payment server
A: search section
A1: input window
A2: search button
B: ranking instruction section
B1: ranking button
B2: ESG button
C: dashboard section
D1: first ranking section
D2: second ranking section
E1: specification button
E2: confirmation button
E3: purchase button
G1: initial screen
G2: user screen
G3: basic screen
G4: detailed screen
G5: list screen
G6: assignee screen
G7: rights screen
G8: ESG overall screen
G9: ESG individual screen
G10: inventor screen
Gx: purchase screen
H: payment method section
J1: announcement section
J2: specific information section
K1: first data
K2: second data
K3: list display section
K4: period specification window
L: login button
L1: individual rating section
L2: sort specification section
L3: publication documents button
L4: list section
L5: documents section
L6: progress information section
L7: inventor information section
La: rating priority key
Lb: ESG priority key
Lc: annuity priority key
Lo: overall evaluation section
M1: estimation model
M11: literature estimation model
M21: deficient description estimation model
N: network
P: content section
P1, P11, P21 data analysis program
P2, P20: data providing program
Q: amount column
Q1: publication documents section
Q2: detailed list section
Q3: selection section
Qa, Za, Zd, Zk: display section
Qb, Zb, Ze, Zm: expansion button
Qc, Zc, Zf, Zn: list section
Qx: score section
Qy: documents list section
Qz: relevance display section
R1: comparison data
R2: ranking section
R3: detailed analysis section
S 1: selection box
S2: patent number section
S3: remarks section
T: period display section
U: username display section
V1: list display section
V2: evaluation section
W: offer button
X: registration button
Y: logout button
Z1: call section
Z2: score specification section
Z3: order specification section
Zo: number of documents section

## Claims

1. A data providing device comprising:
a data providing unit which is configured to extract and provide a validity data corresponding to an external request from a database that is constructed based on information related to a plurality of industrial property rights and that manages the validity data pertaining to the validity of each of the plurality of industrial property rights, and
wherein the validity data includes a rating score indicating the relative validity among the plurality of industrial property rights.

2. The data providing device according to claim 1,
wherein the rating score is an indicator of the validity of the patent rights among the industrial property rights, and
wherein the validity data includes technical information related to the validity of the patent right.

3. The data providing device according to claim 2, wherein the data providing unit sorts each technical information in the database in order of the degree of association with the patent right pertaining to the validity data for the validity data containing a plurality of the technical information.

4. The data providing device according to claims 2 or 3, wherein the validity data includes an ESG score, which is an index value that evaluates patent rights from an ESG perspective.

5. The data providing device according to any one of claims 2 to 4, wherein the data providing unit provides information on the evaluation index of an inventor when the inventor is specified in an information terminal capable of communicating via a network.

6. The data providing device according to any one of claims 1 to 5, wherein the data providing unit provides the validity data corresponding to the industrial property rights when one or more industrial property rights are specified in the information terminal capable of communicating via a network.

7. The data providing device according to any one of claims 1 to 6, wherein the data providing unit provides the validity data corresponding to each industrial property right organized in an order of arrangement when the order of arrangement based on the rating score is specified together with the plurality of industrial property rights in the information terminal capable of communicating via a network.

8. The data providing device according to any one of claims 1 to 7, wherein the data unit provides the validity data corresponding to the industrial property right of the assignee within the period when an assignee and a period are specified in the information terminal capable of communicating via a network.

9. The data providing device according to any one of claims 1 to 8, wherein the data providing unit provides the validity data corresponding to each industrial property right of the assignee within the period, in the order of arrangement when the assignee, the period, and the order of arrangement based on the rating score are specified and the plurality of industrial property rights is included in the period in the information terminal capable of communicating via a network.

10. The data providing device according to any one of claims 1 to 9, wherein the data providing unit provides the validity data corresponding to the industrial property right with the specified rating score within the period of the assignee when the assignee, the period, and at least one of the rating scores are specified in the information terminal capable of communicating via a network.

11. The data providing device according to any one of claims 1 to 10,
wherein the data providing unit provides a first original data that organizes the industrial property rights of the assignee in a first period by a second period that is shorter than the first period when the assignee is specified in the information terminal capable of communicating via a network,
wherein the data providing unit provides a second original data that organizes the industrial property rights of the assignee in the second period by a third period that is shorter than the second period when the second period is specified in the information terminal, and
wherein the data providing unit provides the validity data corresponding to the industrial property right in the third period when the third period is specified in the information terminal.

12. The data providing device according to any one of claims 1 to 11, wherein the validity data includes information on an annuity, which indicates a degree of cost reasonability for maintaining rights.

13. The data providing device according to any one of claims 1 to 12,
wherein the data providing unit comprises
a judgment processing means which is configured to determine whether the number of industrial property rights provided with the validity data is less than the preset limit, and
an information processing means which is configured to send information that the provision of the validity data corresponding to the industrial property right pertaining to the judgment is not possible when the judgment processing means determines that the number is more than the preset limit.

14. The data providing device according to any one of claims 1 to 12,
wherein the data providing unit comprises
the judgment processing means which is configured to determine when the industrial property right is specified in the information terminal capable of communicating via a network, whether the number of provisions of the validity data corresponding to the industrial property right is less than the preset limit, and
the information processing means which is configured to send information that the provision of the validity data corresponding to the industrial property right pertaining to the judgment is not possible when the judgment processing means determines that the number is more than the preset limit.

15. The data providing device according to claims 13 or 14, wherein the data providing unit is configured to send resale inquiry information to the information terminal pertaining to the sales destination of the validity data when there is an application for resale of the validity data.

16. The data providing device according to any one of claims 13 to 15,
wherein the data providing unit comprises a selection processing means that selects one or more resellers from among registered users in response to a request to resell of the validity data, and
wherein the information processing means is configured to have a function of sending sales promotion information to the information terminal corresponding to the one or more resale destinations selected by the selection processing means when a request for resale of the validity data is received from the information terminal pertaining to the sales destination of the validity data.

17. A data analysis device comprising:
a matching processing means, which is configured to
convert one or more claim elements of a right claim for a patent or a utility model to be analyzed into a first vector, which is a meaning vector,
convert a part or all prior-date information related to an invention or an idea published before the filing date of the right claim, into a second vector, which is a meaning vector, for each of the divided data, and
determine a total degree of agreement, which is the degree of agreement between the claim elements of the right claims and each of the prior-date information, by intercomparing the first vectors and second vectors; and
a rating processing means, which is configured determine an individual score, an indicator of the validity of the claim, based on the total agreement obtained by the agreement processing means, wherein the rating processing means determines an overall score that indicates the relative validity of the rights among the plurality of target rights, using the individual scores for all target rights.

18. A data analysis device comprising:
a matching processing means, which is configured to
convert one or more claim elements of a right claim for a patent or a utility model to be analyzed into a first vector, which is a meaning vector,
convert a part or all prior-date information related to an invention or an idea published before the filing date of the right claim, into a second vector, which is a meaning vector, and
determine a total degree of agreement, which is the degree of agreement between the claim elements and each of the prior-date information, by intercomparing the first vectors and second vectors; and
a rating processing means, which is configured determine an overall evaluation value that serves as an indicator of the validity of the target rights and determine an overall score that indicates the relative validity of the rights among the plurality of target rights through relative comparison of the overall evaluation values of each of the target rights.

19. The data analysis device according to claim 18, wherein the rating processing means is configured to determine an individual score, an indicator of the validity of the claim, based on the total agreement obtained by the matching processing means.

20. The data analysis device according to claim 17 or 19, further comprising a collection processing means which is configured to generate classification vectors, which are meaning vectors corresponding to each of the description data, by vectorizing an information data of the explanatory text of the classification code included in the information of patent classification using natural language processing, and generate a classification database by linking a hierarchical data, which is information on the hierarchy of the classification code, with the generated classification vector.

21. The data analysis device according to claim 20,
wherein the collection processing means is configured to
generate unknown vectors, which are meaning vectors corresponding to the information in the non-patent documents, by vectorizing some or all of the information in the non-patent literature in the prior-date information using natural language processing,
compare the generated unknown vectors with each classification vector in the classification database for and identifies the classification vector that has the highest semantic similarity to the unknown vector, and
store at least one of the identified classification vectors and the classification codes corresponding to the classification vectors tied to the information of non-patent literature corresponding to the generated unknown vectors.

22. The data analysis device according to claim 20 or 21,
wherein the matching processing means is configured to
identify a main relevant information, which is the prior-date information that has the highest semantic similarity, based on the total degree of agreement between the claim elements associated with the claims of the subject rights and the prior-date information, and
identify a sub-relevant information, which is a prior-date information to which the classification vector whose degree of agreement with the classification vector associated with the main related information is less than the sub threshold among the prior-date information other than the main related information; and
wherein the rating processing means determine the individual score of the claim, based on the total agreement, which is the degree of agreement between the claim and each of the main relevant information and one or more of the sub-relevant information.

23. The data analysis device according to any one of claims 17, 19 to 22, wherein the rating processing means is configured to determine an individual evaluation value, which is an indicator of the validity of a claim, based on each total agreement obtained by the matching processing means, and determine the individual score for each claim by comparing the relative values of the individual ratings for each claim.

24. The data analysis device according to claim 22, wherein the rating processing means is configured to determine the individual score for a given claim based on at least one of a judgement criterions:
how many prior-date information that satisfies all claim elements,
when there is no prior-date information that satisfies all claim elements, or
how many other prior-date information that satisfies the unsatisfied claim element,
otherwise other prior-date information cannot satisfy the unsatisfied claim element.

25. The data analysis device according to any one of claims 17, 19 to 24, further comprising
a literature estimation means which is configured to estimate a literature cited for rejection by inputting the information based on the claims of the target right into a literature estimation model that is generated based on the claim information and the information of the cited references in the search report; and
wherein the rating processing means is configured reflect the information of the literature estimated by the literature estimation means in at least one of the individual scores and the overall score.

26. The data analysis device according to any one of claims 17, 19 to 25, further comprising
a deficiency estimation means which is configured to determine a deficiency ratio of subject right to have invalid reason for deficient description, by inputting the information based on the claims of the target right into a deficiency estimation model that is generated based on the identification number of the application and the deficient article data indicating the article number corresponding to the deficient description; and
wherein the rating processing means is configured reflect the deficiency ratio calculated by the deficiency estimation means in at least one of the individual scores and the overall score.

27. The data analysis device according to any one of claims 17, 19 to 25, wherein the matching processing means is configured to generate the first vector from the claim elements and the second vector from the divided data by natural language processing based on the encoder of the Transformer system.

28. A data management system comprising:
the data analysis device according to any one of claims 17, 19 to 25 and
a data providing device which is configured to extract and provide at least one of individual scores or overall scores corresponding to an external request from a database that manages the individual scores and the overall scores for each of the plurality of the target rights obtained by the rating processing means.

29. A data management system comprising:
a data analysis device that uses information related to multiple industrial property rights to estimate the validity of each of the multiple industrial property rights, and
the data providing device according to any one of claims 1 to 16,
wherein the data analysis device comprises
a translation processing means for generating translation data by applying translation processing to unify the core data contained in each of the plural industrial property rights-related information collected from the outside into a common language, and
a learning processing means for generating an estimation model for obtaining the validity data by machine learning using the learning data based on the translation data.

30. The data management system according to claim 29, wherein the data analysis device comprises a pretreatment means that applies analysis processing to the translation data to generate the data for learning.

31. The data management system according to claim 30,
wherein the pretreatment means has the function of applying analysis processing to the translation data to generate a data for analysis, and
wherein the data analysis device comprises an estimation processing means which uses the data for analysis generated by the pretreatment means as input to the estimation model to obtain the validity data.

32. A data providing system comprising:
the data providing device according to any one of claims 1 to 16, and
an information terminal that can communicate with the data providing device,
wherein the data providing unit provide the screen information including the validity data to the information terminal, and
wherein the information terminal comprises a display unit that shows the information on the screen provided by the data providing device.

33. A data providing system comprising:
the data management system according to any one of claims 29 to 31, and
an information terminal that can communicate with the data providing device,
wherein the data providing unit provide the screen information including the validity data to the information terminal, and
wherein the information terminal comprises a display unit that shows the information on the screen provided by the data providing device.

34. A data providing program, which is configured to make a computer in a data provider function as an information processing means to extract and provide the validity data from a database that is built based on information related to multiple industrial property rights and that manages validity data, including a rating score that indicates the relative validity among each industrial property right for each of the multiple industrial property rights corresponding to external requests.

35. A computer-readable storage media on which the data providing program according to claim 34 is recorded.

36. A computer-readable storage media on which a data providing program is recorded, wherein the data providing program is configured to make a computer in a data provider function as translation processing means for generating translation data by applying translation processing to unify the core data contained in each of the plural industrial property rights-related information collected from the outside into a common language and learning process means to generate an estimation model for obtaining validity data including a rating score indicating the relative validity among each industrial property right for each of the plurality of industrial property rights by machine learning using the learning data based on the translation data.

37. A computer-readable storage media on which a data providing program is recorded,
wherein the data providing program is configured to make a computer in a data provider function as a collection processing means, and
wherein the collection processing means
generate classification vectors, which are meaning vectors corresponding to each of the description data, by vectorizing an information data of the explanatory text of the classification code included in the information of patent classification using natural language processing, and
generate unknown vectors, which are meaning vectors corresponding to the information in the non-patent documents, by vectorizing some or all of the information in the non-patent literature in the prior art information using natural language processing,
compare the generated unknown vectors with each classification vector in the classification database for and identifies the classification vector that has the highest semantic similarity to the unknown vector, and
store at least one of the identified classification vectors and the classification codes corresponding to the classification vectors tied to the information of non-patent literature corresponding to the generated unknown vectors.

38. A data providing method comprising:
accepting one or more designations of industrial property rights from an information terminal via a network,
extracting a validity data corresponding to external requests from a database that manages validity data pertaining to the validity of each of the plurality of industrial property rights, and
providing the extracted validity data to the information terminal.

39. A data management method comprising:
generating translation data by applying a translation process to unify the core data contained in each of the plural industrial property rights-related information collected from the outside into a common language, and
generating an estimation model for obtaining validity data including a rating score indicating the relative validity among each industrial property right for each of the plurality of industrial property rights by machine learning using the training data based on the generated translation data.
